# EUROPEAN PATENT SPECIFICATION

(11) **EP 2 797 014 B1**
(45) Date of publication and mention of the grant of the patent: **02.03.2016**
(21) Application number: 14165475.6
(22) Date of filing: 22.04.2014
(51) Int. Cl.: G06F 17/30

(54) **Database update execution according to power management schemes**
Durchführung von Aktualisierungen von Datenbanken abhängig von Leistungsverwaltungpläne
Execution de mises à jours de bases de données en fonction de mode de gestion d'énergie

(30) Priority: 22.04.2013 CN 201310140940; 24.04.2013 US 201313869926; 26.06.2013 CN 201310259984; 30.06.2013 US 201313931995
(43) Date of publication of application: 29.10.2014
(73) Proprietor: SAP SE, 69190 Walldorf (DE)
(72) Inventor: Wang, Bo, 69190 Walldorf (DE)
(74) Representative: Richardt Patentanwälte PartG mbB

(56) References cited:
- US-A1- 2002 083 151
- US-A1- 2007 073 989
- US-A1- 2009 319 474
- Willis Lang ET AL: "Towards Eco-friendly Database Management Systems", , 9 September 2009 (2009-09-09), XP055132513, Retrieved from the Internet: URL:http://arxiv.org/abs/0909.1767 [retrieved on 2014-07-30]
- JAYAPRAKASH PISHARATH ET AL: "Energy management schemes for memory-resident database systems", PROCEEDINGS OF THE THIRTEENTH ACM CONFERENCE ON INFORMATION AND KNOWLEDGE MANAGEMENT , CIKM '04, 8 November 2004 (2004-11-08), page 218, XP055132518, New York, New York, USA DOI: 10.1145/1031171.1031214
- ZICHEN XU ET AL: "Exploring power-performance tradeoffs in database systems", DATA ENGINEERING (ICDE), 2010 IEEE 26TH INTERNATIONAL CONFERENCE ON, IEEE, PISCATAWAY, NJ, USA, 1 March 2010 (2010-03-01), pages 485-496, XP031657854, ISBN: 978-1-4244-5445-7

## Description

### TECHNICAL FIELD

The present disclosure relates generally to data management in enterprise applications that access database systems. More particularly, the present disclosure relates to enhanced management of electrical power consumption by electronic devices configured to update databases via cellular digital telecommunication networks.

### BACKGROUND

Modern databases comprise very big data volumes. Updating of these databases requires a lot of computer resources consuming thus high electrical power. Proper implementation of database updates enabling reduction in electrical power consumption is especially important when battery powered end terminals being connected to one or more databases via digital telecommunication networks are used. These databases are often used to support data processing applications, such as financials, sales, order fulfillment, manufacturing, human resources, and enterprise resource planning applications.

The manuscript "Towards Eco-friendly Database Management Systems" discloses techniques that can be used by database management systems (DBMS) to directly manage the energy consumption. Both techniques trade energy consumption for performance (Willis Lang et. al., "Towards Eco-friendly Database Management Systems", 4th Biennial Conference on Innovative Data Systems Research (CIDR) January 4-7, 2009, Asilomar, California, USA).

The manuscript "Energy management schemes for memory-resident database systems" discusses power saving opportunities for DBMS. It is argued that query optimization mechanisms in traditional DBMSs could easily miss query plans that are highly power-efficient and yet lead to little degradation of performance (Jayaprakash Pisharath et. al., "Energy management schemes for memory-resident database systems", p. 218, CIKM'04, November 8-13, 2004, Washington, DC, USA).

### SUMMARY

A computer-implemented technology for providing enhanced updating of databases is described herein. As it will be clearly seen from description hereon implementation of data cache enabling bulking of a group of operations related the updating of the database enables reduction in electrical power consumption either of the end terminal configured to perform updating of the database or a database server comprising the database. The reduction in the energy consumption achieved by implementing of the technology of the present invention is especially important when a battery powered end terminal is used for updating of the database via a cellular digital telecommunication network. Further the technology of the present invention provides for a reduction in request-response rounds between the database and the end terminal. The latter feature is beneficial for any type of connection between the end terminal and the database including cellular digital telecommunication networks. Another distinctive feature/advantage of the present invention is a fact that the computer-implemented technology of the present invention is hardware oriented, i.e. it takes advantage of the modern microprocessor architecture. As a result thereof this technology functions with high efficiency and provides low electrical power consumption by a device it is implemented on. It is an objective of embodiments of the invention to provide for an end terminal configured to perform updating of a database, a server configured to perform updating of a database, a method for updating a database using an end terminal configured to perform updating of a database, a method for updating a database using a database server configured to perform updating of a database, a computer readable medium having stored thereon computer executable code for execution by a microprocessor controlling an end terminal, wherein execution of the instructions of the executable code cause the microprocessor to execute a computer-implemented method of updating of a database using the end terminal comprising the microprocessor, and a computer readable medium having stored thereon computer executable code for execution by one or more microprocessors controlling a database server, wherein execution of the instructions of the executable code cause the one or more microprocessors to execute a computer-implemented method of updating of a database, wherein the database server comprises the one or more microprocessors. Said objective is solved by the subject matter of the independent claims. Advantageous embodiments are described in the dependent claims.

In accordance with one aspect, the present invention relates to a computer-implemented method of updating of a database using an end terminal comprising a processing unit. The database comprises records. Each record comprises a respective primary key uniquely identifying the record in the database. Each of at least a portion of records comprises one or more partial keys. Each partial key uniquely identifies a respective set of the records and each record of the respective set comprises the each partial key. The end terminal is configured to perform the updating of the database in an electrical power saving mode and in a standard electrical power consumption mode. An electrical power consumption of the end terminal in the electrical power saving mode is lower than an electrical power consumption of the end terminal in the standard electrical power consumption mode. A bulk updating of the database is performed in the electrical power saving mode and a discrete updating of the database is performed in the normal electrical power consumption mode. The computer-implemented method comprises the following: switching the end terminal into the electrical power saving mode, causing the processing unit to perform the bulk updating of the database, switching the end terminal into the standard electrical power consumption mode, and causing the processing unit to perform the discrete updating of the database.

The causing of the processing unit to perform the bulk updating of the database comprises the following:
- generating a data cache in a memory of the processing unit, wherein each record stored in the data cache has a respective unique physical address in the memory;
- in response to receiving an insert by primary key operation of inserting of a record to be added to the database on the database performing the following:
   ∘ storing the record to be added in the data cache; and
   ∘ storing in mapping tables a physical address of the record to be added and a primary key of the record to be added associated with each other, wherein the record to be added is inserted into the database when an update of the database is determined to be necessary (235);
- in response to receiving an update by primary key operation on a record to be updated in the database performing the following:
   ▪ in a cache miss case when the mapping tables do not comprise the primary key specified in the update by primary key operation performing the following:
      - executing an upload by primary key operation that uploads the record to be updated into the data cache from the database; and
      - storing in the mapping tables a physical address of the uploaded record and the primary key of the up-loaded record associated with each other;
   ▪ executing the update by primary key operation on the record in the data cache stored at the physical address associated in the mapping tables with the primary key specified in the update by primary key operation, wherein in a case when the update by primary key operation comprises updating of the primary key of the record to be updated the update by primary key operation on the record in the data cache stored at the physical address associated in the mapping tables with the primary key specified in the update by primary key operation comprises updating the primary key of the record to be updated in the mapping tables, wherein the record to be updated is updated in the database when the update of the database is determined to be necessary;
- in response to receiving an update by partial key operation on all records to be updated in the database comprising a partial key specified in the update by partial key operation performing the following:
   ▪ in a cache miss case when the mapping tables do not comprise the partial key specified in the update by partial key operation performing the following:
      - executing an upload by partial key operation that uploads all records to be updated comprising the partial key specified in the update by partial key operation into the data cache from the database; and
      - storing in the mapping tables all physical addresses, all primary keys and the partial key of the all uploaded records comprising the partial key specified in the upload by partial key operation, wherein the physical address of each uploaded record comprising the partial key specified in the upload by partial key operation, the respective primary key of the each uploaded record comprising the partial key specified in the upload by partial key operation and the partial key of the each uploaded record comprising the partial key specified in the upload by partial key operation are associated with each other in the mapping tables;
   ▪ executing the update by partial key operation on all records in the data cache stored at the respective physical addresses associated in the mapping tables with the partial key specified in the update by partial key operation, wherein in a case when the update by partial key operation comprises updating of one or more primary keys of one or more respective records to be updated comprising the partial key specified in the update by partial key operation the executing of the update by partial key operation on all records in the data cache stored at the respective physical addresses associated in the mapping tables with the partial key specified in the update by partial key operation comprises updating the one or more respective primary keys in the mapping tables, wherein in a case when the update by partial key operation comprises updating of the partial key of the all records to be updated comprising the partial key specified in the update by the partial key operation the executing of the update by partial key operation on all records in the data cache stored at the respective physical addresses associated in the mapping tables with the partial key specified in the update by partial key operation comprises updating the partial key specified in the update by partial key operation in the mapping tables, wherein the all records to be updated are updated in the database when the update of the database is determined to be necessary; and
- in the case when the update of the database is determined to be necessary executing a bulk write operation that writes all records in the data cache to the database;
and wherein the update of the database is determined to be necessary when an overall number of the data rows in the data cache exceeds a first threshold value;

The causing of the processing unit to perform the discrete updating of the database comprises the following:
- executing the insert by primary key operation of inserting of the record to be added to the database on the database;
- executing the update by partial key operation of all records to be updated comprising the partial key specified in the update by partial key operation on the database; and
- executing the update by primary key operation of the record to be updated comprising the primary key specified in the update by partial key operation on the database.

These features may be advantageous as they may provide two modes of operation of the end terminal performing updating of the database. In the electrical power saving mode the end terminal performs bulking of operations in the data cache. The mapping tables provide fast access to the physical addresses associated with primary and partial keys used for identification of the records. As a result thereof the end terminal addresses the database less frequent than in the standard electrical power consumption mode and addressing of the data cache requires low amount of process cycles in comparison with a case when the mapping tables are not used and querying of the data cache is needed for executing any of the aforementioned operations on the data cache. Moreover in a case when updates of the same records follow each other frequently at least a portion of said records may be updated only in the data cache, before these records are updated in the database. It should be noted that integrity and correctness of the mapping tables is preserved when the same records in the data cache are processed using any random sequence of the aforementioned operations.

According to one embodiment the processing unit comprises a microprocessor and the memory of the processing unit comprises a level 2 (L2) cache of the microprocessor and a level 3 (L3) cache of the microprocessor, wherein the mapping tables are allocated in the L2 cache and the data cache is generated in the L3 cache. These features provide a synergy between the processor architecture and the computer-implemented method mentioned above. The L2 and L3 cache may be located on the same chip as the microprocessor. The L2 cache is smaller than the L3 cache and has shorter access time than the L3 cache, i.e. requires less processor cycles for accessing it than the L3 cache. These architectural features fit the characteristics of resources required for execution. The mapping tables stored in the L2 cache have smaller data volume than the data cache and provide physical addresses of records stored in the L3 cache. As a result thereof the microprocessor has very fast access to the physical addresses of the records stored in the L3 cache and accelerated access to the records stored in the L3 cache in comparison with a case when the data cache is stored in the main memory of the end terminal and no mapping tables are used.

According to one embodiment the microprocessor operates in a microprocessor power saving mode when the end terminal is switched into the electrical power saving mode, wherein the microprocessor operates in a microprocessor standard power consumption mode when the end terminal is switched into the standard electrical power consumption mode, wherein the microprocessor operates at the first clock frequency when the microprocessor operates in the processor power saving mode, wherein the microprocessor operates at the second clock frequency when the microprocessor operates in the microprocessor standard power consumption mode, wherein the second clock frequency is higher than the first clock frequency.

These features enable reduction in a consumption of the electrical power by the end terminal in the electrical power saving mode, because the microprocessor operates at lower clock frequency when the end terminal is switched into the electrical power saving mode.

According to one embodiment the database comprises an in-memory database.

This feature enables utilization of fast operating in-memory databases. In-memory database has its records stored in a main memory of a computing device. The main memory is a fast memory of the computing device. For instance it may be a DRAM memory (dynamic random access memory).

According to one embodiment a remote terminal comprises the database, wherein the remote terminal is communicatively coupled to the end terminal via a cellular digital telecommunication network, wherein the upload by primary key operations, the insert by primary key operations, the bulk write operations, the upload by partial key operations, the update by primary key operations, and the update by partial key operations are performed via the digital cellular telecommunication network, wherein the end terminal further comprises a wireless terminal being configured to communicatively couple the end terminal to the remote terminal via the cellular digital telecommunication network, wherein the wireless terminal is in an idle mode by default and in an data transmission mode when any one of the following operations is executed via the digital cellular telecommunication network: the upload by primary key operation, the insert by primary key operation, the bulk write operation, the upload by partial key operation, the update by primary key operation, and the update by partial key operation, wherein an electrical power consumption of the wireless terminal in the idle mode is lower than an electrical power consumption of the wireless terminal in the data transmission mode, wherein the electrical power consumption of the end terminal in the electrical power saving mode and in the standard electrical power consumption mode comprises the electrical power consumption of the wireless terminal in the idle mode when the wireless terminal is in the idle mode and the electrical power consumption of the end terminals in the electrical power saving mode and in the standard electrical power consumption mode comprises the electrical power consumption of the wireless terminal in the data transmission mode when the wireless terminal is in the data transmission mode.

These features may be result further not only in a reduction of the electrical power consumption by the end terminal but in a reduction of a load of the cellular digital telecommunication network. It should be noted that every communication session of when the wireless terminal is in the transmission mode transmits data packets related to execution of the aforementioned operations requires additional operations to be performed. The additional operations like establishing connection with the cellular digital telecommunication network and closing connection with this network require high consumption of the electrical power by the end terminal. Bulking of data transmission, i.e. reduction of connection sessions in the cellular digital telecommunication networks is almost always a precious advantage.

According to one embodiment the computer-implemented method comprises after the switching of the end terminal in the electrical power saving mode and before the switching of the end terminal in the normal electrical power consumption mode executing a bulk upload operation that uploads the database into a main memory of the end terminal via the cellular digital telecommunication network, wherein in the computer-implemented method step of the causing of the processing unit to perform the bulk updating of the database the processing unit is caused to perform the bulk updating of the database uploaded in the main memory.

These features enable further reduction in communication sessions established by the end terminal via the cellular digital telecommunication network for updating of the database. In this case only two communication sessions are needed, one session is used for uploading of the database and another session may be used for downloading of the updated database to the remote terminal. Moreover updating of the database uploaded into main memory makes the updating of the database very energy efficient and fast in comparison with a case when the database to be updated is stored on a hard disk drive.

According to an example each of the following operations: the upload by primary key operation, the insert by primary key operation, the bulk write operation, the upload by partial key operation, the update by primary key operation, the update by partial key operation, and the bulk upload operation is executed in a framework of a respective communication request-response round between the database and the end terminal via the cellular digital telecommunication network, wherein a time average of a number of the communication request-response rounds generated when the end terminal is in the electrical power saving mode is less or equal to a time average number of the communication request-response rounds generated when the end terminal is in the standard electrical power consumption mode.

This feature may be beneficial for any type of data packet based connection between the end terminal and the database. In a case when each update and insert operation are executed separately in a discrete way one data packet may be enough for transmitting an update (insert) instruction based on the respective update (insert) operation to the database. As a result thereof the pay load of these packets may be used inefficiently, i.e. one or more data packets may have bigger fixed data volume that is needed for transmission either insert or update instruction. According to one embodiment the causing of the processing unit to perform the discrete updating of the database further comprises: executing a delete by primary key operation of a record to be deleted comprising a primary key specified in the delete by primary key operation on the database; and executing a delete by partial key operation of all records to be deleted comprising a partial key specified in the delete by partial key operation on the database.

The causing of the processing unit to perform the bulk updating of the database further comprises:
in response to receiving the delete by primary key operation of the record to be deleted comprising the primary key specified in the delete by primary key operation on the database performing the following:
   in a case when the data cache comprises the record to be deleted executing the delete by primary key operation of the record to be deleted on the data cache and deleting a physical address of the record to be deleted and all keys associated with it in the mapping tables from the mapping tables; and
   in a case when the database comprises the record to be deleted executing the delete by primary key operation of the record to be deleted comprising the primary key specified in the delete by primary key operation on the database; and
in response to receiving the delete by partial key operation of the all records to be deleted comprising the partial key specified in the delete by partial key operation on the database performing the following:
   in a case when the data cache comprises the all records to be deleted comprising the partial key specified in the delete by partial key operation executing the delete by partial key operation of the all records to be deleted comprising the partial key specified in the delete by partial key operation on the data cache and deleting all physical addresses of the all records to be deleted comprising the partial key specified in the delete by partial key operation and all keys associated with them in the mapping tables from the mapping tables; and
   in a case when the database comprises the all records to be deleted comprising the partial key specified in the delete by partial key operation executing the delete by partial key operation of the all records to be deleted comprising the partial key specified in the delete by partial key operation on the database.

This feature indicates that the data cache has a reduced functionality and some operations like delete operations are executed directly on the database. In return an implementation of the data cache is simpler and it operates faster, since it does not deal with all types of operations. It should be noted that execution of the delete operations does not affect the consistency and correctness of the mapping tables.

According to an example, if the lock level of the record in the data cache is lower than a lock level requested by a user, executing access to the database to acquire a lock; and if the lock level of the record in the data cache is higher than a lock level requested by the user, returning the in the data cache to the user.

According to one embodiment the causing of the processing unit to perform the bulk updating of the database is performed by executing a Structured Query Language (SQL) transactional processing, wherein one or more transactions of the transactional processing comprise at least one of the following first operations: the insert by primary key operation, the update by primary key operation, the update by partial key operation, the delete by primary key operation, and the delete by partial key operation, wherein the update of the database is further determined to be necessary in the following cases: committing of the single transaction comprising the at least one of the first operations is performed, before executing a batch update operation comprising a plurality of the update by primary key operations and/or a plurality of the update by the partial key operations, before executing a batch delete operation comprising a plurality of the delete by primary key operations and/or a plurality of the delete by partial key operations, before executing a SQL general query on the database, before executing a SQL stored procedure on the database, or when a data volume of data in the mapping tables exceeds a second threshold value.

In accordance with one aspect the present invention relates to a computer-implemented method of updating of a database using a database server operated by an end terminal, wherein a database server comprises the database and a processing unit, wherein the database comprises records, each record comprises a respective primary key uniquely identifying the each record in the database, each of at least a portion of the records comprises one or more partial keys, each partial key uniquely identifies a respective set of the records and each record of the respective set comprises the each partial key, wherein the database server is configured to perform the updating of the database in an electrical power saving mode and in a standard electrical power consumption mode, wherein an electrical power consumption of the database server in the electrical power saving mode is lower than an electrical power consumption of the database server in the standard electrical power consumption mode, wherein a bulk updating of the database is performed in the electrical power saving mode and a discrete updating of the database is performed in the normal electrical power consumption mode. The computer-implemented method comprises the following: switching the database server into the electrical power saving mode, causing the processing unit to perform the bulk updating of the database, switching the end terminal into the standard electrical power consumption mode; and causing the processing unit to perform the discrete updating of the database.

The causing of the processing unit to perform the bulk updating of the database comprises the following:
- generating a data cache in a memory of the processing unit, wherein each record stored in the data cache has a respective unique physical address in the memory;
- in response to receiving from the end terminal an insert by primary key operation of inserting of a record to be added to the database on the database performing the following:
   ∘ storing the record to be added in the data cache, wherein the record to be added is inserted into the database when an update of the database is determined to be necessary; and
   ∘ storing in mapping tables a physical address of the record to be added and a primary key of the record to be added associated with each other;
- in response to receiving from the end terminal an update by primary key operation on a record to be updated in the database performing the following:
   ▪ in a cache miss case when the mapping tables do not comprise the primary key specified in the update by primary key operation performing the following:
      - executing an upload by primary key operation that uploads the record to be updated into the data cache from the database; and
      - storing in the mapping tables a physical address of the uploaded record and the primary key of the up-loaded record associated with each other;
   ▪ executing the update by primary key operation on the record in the data cache stored at the physical address associated in the mapping tables with the primary key specified in the update by primary key operation, wherein in a case when the update by primary key operation comprises updating of the primary key of the record to be updated the update by primary key operation on the record in the data cache stored at the physical address associated in the mapping tables with the primary key specified in the update by primary key operation comprises updating the primary key of the record to be updated in the mapping tables, wherein the record to be updated is updated in the database when the update of the database is determined to be necessary;
- in response to receiving from the end terminal an update by partial key operation on all records to be updated in the database comprising a partial key specified in the update by partial key operation performing the following:
   ▪ in a cache miss case when the mapping tables do not comprise the partial key specified in the update by partial key operation performing the following:
      - executing an upload by partial key operation that up-loads all records to be updated comprising the partial key specified in the update by partial key operation into the data cache from the database; and
      - storing in the mapping tables all physical addresses, all primary keys and the partial key of the all uploaded records comprising the partial key specified in the upload by partial key operation, wherein the physical address of each uploaded record comprising the partial key specified in the upload by partial key operation, the respective primary key of the each uploaded record comprising the partial key specified in the up-load by partial key operation and the partial key of the each uploaded record comprising the partial key specified in the upload by partial key operation are associated with each other in the mapping tables;
   ▪ executing the update by partial key operation on all records in the data cache stored at the respective physical addresses associated in the mapping tables with the partial key specified in the update by partial key operation, wherein in a case when the update by partial key operation comprises updating of one or more primary keys of one or more respective records to be updated comprising the partial key specified in the update by partial key operation the executing of the update by partial key operation on all records in the data cache stored at the respective physical addresses associated in the mapping tables with the partial key specified in the update by partial key operation comprises updating the one or more respective primary keys in the mapping tables, wherein in a case when the update by partial key operation comprises updating of the partial key of the all records to be updated comprising the partial key specified in the update by the partial key operation the executing of the update by partial key operation on all records in the data cache stored at the respective physical addresses associated in the mapping tables with the partial key specified in the update by partial key operation comprises updating the partial key specified in the update by partial key operation in the mapping tables, wherein the all records to be updated are updated in the database when the update of the database is determined to be necessary; and
- in the case when the update of the database is determined to be necessary executing a bulk write operation that writes all records in the data cache to the database;
and wherein the update of the database is determined to be necessary when an overall number of the data rows in the data cache exceeds a first threshold value;

The causing of the processing unit to perform the discrete updating of the database comprises the following:
- in response to receiving form the end terminal the insert by primary key operation of inserting of the record to be added to the database on the database executing the insert by primary key operation of inserting of the record to be added to the database on the database;
- in response to receiving form the end terminal the update by partial key operation of all records to be updated comprising the partial key specified in the update by partial key operation on the database executing the update by partial key operation of all records to be updated comprising the partial key specified in the update by partial key operation on the database; and
- in response to receiving form the end terminal the update by primary key operation of the record to be updated comprising the primary key specified in the update by partial key operation on the database executing the update by primary key operation of the record to be updated comprising the primary key specified in the update by partial key operation on the database.

In accordance with one aspect the present invention relates to a database server being configured to perform the aforementioned method of updating the database, wherein the updating of the database is operated by an end terminal.

In accordance with one aspect the present invention relates to an end terminal being configured to perform the aforementioned method of updating the database, wherein the end terminal comprises the processing unit.

In accordance with one aspect the present invention relates to a computer readable medium having stored thereon a computer executable code for execution by a processing unit controlling an end terminal, wherein execution of the instructions of the executable code cause the processing unit to execute the aforementioned computer-implemented method of updating of a database using the end terminal comprising the processing unit.

In accordance with one aspect the present invention relates to a computer readable medium having stored thereon a computer executable code for execution by a processing unit controlling a database server, wherein execution of the instructions of the executable code cause the processing unit to execute the aforementioned computer-implemented method of updating of a database operated by an end terminal.

### BRIEF DESCRIPTION OF THE DRAWINGS

Some embodiments are illustrated in the accompanying figures, in which like reference numerals designate like parts, and wherein:
FIG. 1 is a block diagram of an exemplary system;
FIG. 2 is a block diagram of an exemplary system;
FIG. 3 is a block diagram of an exemplary architecture;
FIG. 4 shows an exemplary method of execution operations on database;
FIG 5 shows an exemplary architecture of enhanced transactional cache (ETC);
FIG. 6a shows an exemplary status transition diagram;
FIG. 6b shows another exemplary status transition diagram;
FIG. 7 shows an exemplary method of managing database events;
FIG. 8 shows an exemplary method of version check control during an update of normal fields; and
FIG. 9 shows an exemplary method of version check control during an update of primary key fields.

### DETAILED DESCRIPTION

In the following description, for purposes of explanation, specific numbers, materials and configurations are set forth in order to provide a thorough understanding of the present frameworks and methods. However, it will be apparent to one skilled in the art that the present frameworks and methods may be practiced without the specific exemplary details. In other instances, well-known features are omitted or simplified to clarify the description of the exemplary implementations of present frameworks and methods, and to thereby better explain the present frameworks and methods. Furthermore, for ease of understanding, certain method steps are delineated as separate steps; however, these separately delineated steps should not be construed as necessarily order dependent in their performance.

The following description sets forth one or more implementations of systems and methods for facilitating transactional caching. One implementation of the present framework provides various enhancements to a data cache so as to support both read and write operations (e.g., INSERT, UPDATE, etc.). By using the enhanced data cache, write operations on the database may be delayed until a flush operation is determined to be necessary. The flush operation may be invoked by collecting newly inserted or updated records in the enhanced data cache and then writing them to the database using a bulk operation (e.g., row-wise). The records may be data rows. Each record comprises a respective primary key uniquely identifying the record in the database. Each of at least a portion of records comprises one or more partial keys. Each partial key uniquely identifies a respective set of the records and each record of the respective set comprises the each partial key.

Caching generally refers to the temporary storage of data to achieve higher performance in software systems. A data cache temporarily stores the results of a database transaction (i.e. an atomic work unit of database access) to reduce the number of database accesses. Conventional transactional caches and data caches typically achieve performance gain by reducing the number of accesses to the original record of data, but do not reduce the number of write operations (e.g., INSERT, UPDATE). In one implementation of the present framework, a bulk operation is combined with an enhanced data cache to reduce both read and write operations in a row-based database, thereby achieving greater performance improvement (e.g., 20% in a typical transaction).

The present framework advantageously increases the applicability of bulk operations for invoking a flush. INSERT and UPDATE operations executed on the same table in a transaction may benefit from the bulk operation even if they are distributed in different locations. In addition, the data cache is transparent to the OLTP application developer. This means that the performance of the OLTP application may be improved without changing the existing business logic design and implementation.

The framework described herein may be implemented as a method, computer-controlled apparatus, a computer process, a computing system, or as an article of manufacture such as a computer-usable medium. These and various other features will be apparent from the following description.

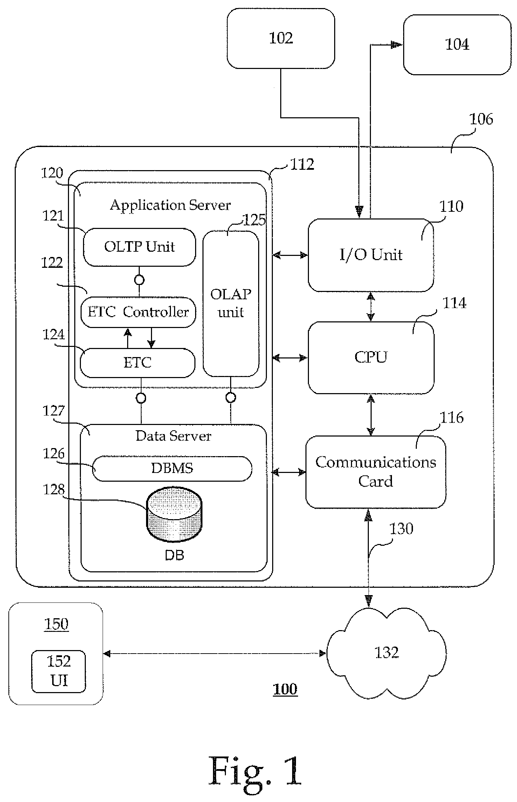

FIG. 1 shows a block diagram illustrating an exemplary system 100 that may be used to implement the framework described herein. System 100 may include a computer system 106 communicatively coupled to an input device 102 (e.g., keyboard, touchpad, microphone, camera, etc.) and an output device 104 (e.g., display device, monitor, printer, speaker, etc.). Computer system 106 also may include a communications card or device 116 (e.g., a modem and/or a network adapter) for exchanging data with network 132 using a communications link 130 (e.g., a telephone line, a wireless network link, a wired network link, or a cable network). Network 132 may be a local area network (LAN) or a wide area network (WAN). The computer system 106 may be communicatively coupled to one or more other computer systems 150 via network 132. For example, computer system 106 may act as a server and operate in a networked environment using logical connections to one or more client computers 150. Client computers 150 may include components similar to the computer system 106, and may be in the form of a desktop computer, mobile device, tablet computer, communication device, etc.

Computing system 106 includes a central processing unit (CPU) 114, an input/output (I/O) unit 110, and a non-transitory memory device 112. Other support circuits, such as a cache, power supply, clock circuits and a communications bus, may also be included in computing system 106. In addition, any of the foregoing may be supplemented by, or incorporated in, application-specific integrated circuits. Examples of computing system 106 include a handheld device, a mobile device, a personal digital assistance (PDA), a workstation, a server, a portable laptop computer, another portable device, a mini-computer, a mainframe computer, a storage system, a dedicated digital appliance, a device, a component, other equipment, or some combination of these capable of responding to and executing instructions in a defined manner.

Memory device 112 may be any form of non-transitory computer-readable media, including, but not limited to, dynamic random access memory (DRAM), static random access memory (SRAM), Erasable Programmable Read-Only Memory (EPROM), Electrically Erasable Programmable Read-Only Memory (EEPROM), flash memory devices, magnetic disks, internal hard disks, removable disks, magneto-optical disks, Compact Disc Read-Only Memory (CD-ROM), any other volatile or non-volatile memory, or a combination thereof.

Memory device 112 serves to store machine-executable instructions, data, and various software components for implementing the techniques described herein, all of which may be processed by CPU 114. As such, the computer system 106 is a general-purpose computer system that becomes a specific purpose computer system when executing the machine-executable instructions. Alternatively, the various techniques described herein may be implemented as part of a software product, which is executed via an application server 120. Each computer program may be implemented in a high-level procedural or object-oriented programming language (e.g., C, C++, Java, Advanced Business Application Programming (ABAP™) from SAP® AG, etc.), or in assembly or machine language if desired. The language may be a compiled or interpreted language. The machine-executable instructions are not intended to be limited to any particular programming language and implementation thereof. It will be appreciated that a variety of programming languages and coding thereof may be used to implement the teachings of the disclosure contained herein. In one implementation, the memory module 112 of the computer system 106 includes an application server 120 and a data server 127. The application server 120 may store an online transaction processing (OLTP) unit 121, an Enhanced Transactional Cache (ETC) controller or a controller of a data cache 122, an ETC or the data cache 124, and an online analytical processing (OLAP) unit 125.

OLTP unit 121 may include source code and executable machine code, for performing the functions of a business application. OLTP unit 121 may be designed to perform various transaction-oriented functions, such as customer relationship management (CRM), enterprise resource management (ERP) application, human resource management, enterprise content management (ECM), business process management (BPM), product lifecycle management, and so forth. OLTP unit 121 may be coded using a high-level programming language, such as Java, C++, ABAP™, etc. Other types of programming languages are also useful. OLTP unit 121 generates data (referred to as "transaction data") that may be stored in the computing system 106. Transaction data includes, for example, information relating to the sale of goods (e.g., location, time, price, quantity, etc.), production of goods (e.g., quantity, supplier, raw materials, cost, etc.), telemarketing data, customer support data, and so forth.

Application server 120 may include an OLAP unit 125, including source code and executable machine code, for performing analysis of data. OLAP unit 125 may be designed to perform various business functions, such as business reporting (e.g., for sales, marketing, management, financial, etc.), business process management (BPM), budgeting and forecasting, and so forth. OLAP unit 125 may be coded using a high-level programming language, such as Java, C++, ABAP™, etc. Other types of programming languages are also useful.

In accordance with one implementation, OLTP Unit 121 is communicatively coupled to ETC controller 122.ETC controller 122 manages ETC 124. During initialization, ETC controller 122 creates and configures ETC 124. More particularly, ETC controller 122 may provide configuration, lifecycle management, status management, flush management, lock management, secondary indexing, query order management, cache size management, version control, and/or other services, which will be described in more detail in the following description.

In one implementation, ETC 124 is a transaction level cache with a life cycle that is the same as a database transaction. In other words, its contents will be cleared when the transaction ends (e.g., commit, roll-back, etc.). Usually, ETC 124 is a component of a "persistence layer", which is a group of software classes that make it easier for a program to persist its state. Since ETC 124 is temporary, consuming a large amount of memory space may be acceptable. However, to avoid using up too much memory space (e.g., when the query has a non-unique key), ETC controller 122 may limit the number of records to be cached (e.g., maximum of 100).

Data server 127 may include a database management system (DBMS) 126 and a database 128. DBMS 126 may include a set of programs to define, administer and process the database 128. A user at the client computer 150 may interact with a user interface (UI) 152 to communicate with the database 128 via the application server 120 and the DBMS 126. UI 152 may be a graphical user interface and include optional user interface components such as windows, menus, buttons, check boxes, charts, icons, etc.

In one implementation, database 128 is an in-memory database that relies primarily on the system's main memory for efficient computer data storage. More particularly, the data in the in-memory database resides in volatile memory and is not persistently stored on a hard drive, thereby allowing the data to be instantly accessed and scanned at a speed of several megabytes per millisecond. Some data of the in-memory database, such as the transaction log file, may still be persistently stored for recovery purposes. The in-memory database 128 allows seamless access to and propagation of high volumes of data in real-time. Parallel processing may further be achieved by using a multicore processor 114 in conjunction with the in-memory database 128. In-memory database technology includes systems such as SAP's HANA (high performance analytic appliance) in-memory computing engine.

In one implementation, in-memory database 128 is optimized for both OLAP and OLTP. By consolidating OLAP and OLTP into a single database, a lower total cost of ownership (TCO) may be achieved. Column-based data storage may further be implemented in the in-memory database 128, where data tables are stored as columns of data, in sequence and in compressed memory blocks. This may facilitate faster aggregation of data when calculations are performed on single columns. Alternatively, row-based data storage is also possible, where a table is stored as a sequence of records, each of which contains the fields of one row. In some implementations, instead of updating entire rows, only fields that have changed will be updated. This avoids having to lock entire data tables during updates to prevent conflicting modifications to a set of data. High levels of parallelization may be achieved, which is critical to real-time processing of live data streams and performing constant and substantially simultaneous updates.

It should be noted that the different components of the computer system 106 may be located on different physical machines. More particularly, components of the application server 120 and the data server 127 may be implemented on different physical machines or computer systems connected on the network 132. For instance, the OLTP unit 121, ETC controller 122 and ETC 124 may be implemented on one machine, while the OLAP unit 125 and data server 127 may be implemented on another two different physical machines. It should further be appreciated that the different components of the client computer 150 may also be located on the computer system 106.

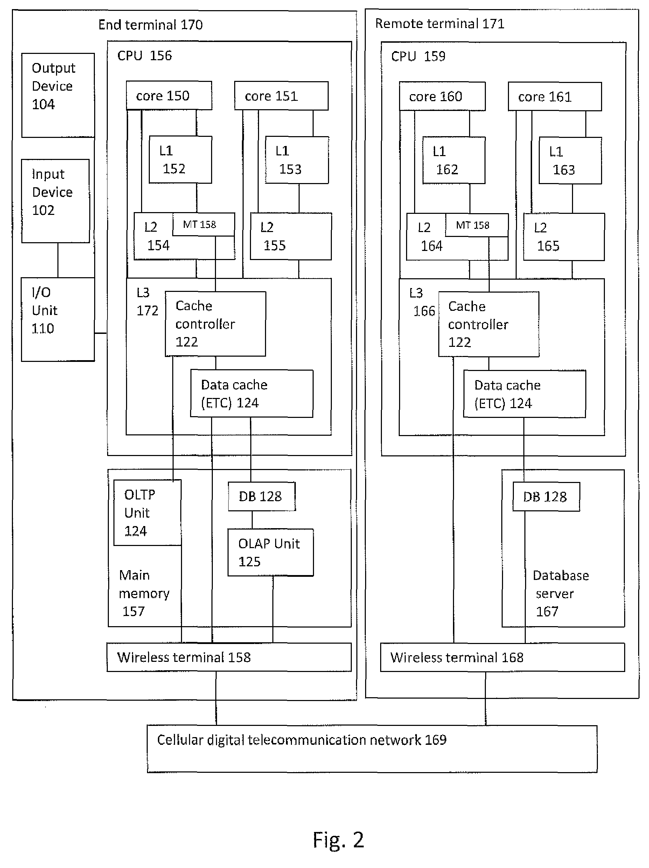

The aforementioned components may be located in yet another way on different machines as depicted on the FIG. 2. An end terminal 170 may comprise the input device 102, the output device (monitor) 104, the I/O unit 110, a processing unit 156, and a memory 172 of the processing unit. The input device and the output device are communicatively coupled with the processing unit 156 via the I/O unit. The memory is configured for generating the data cache 124 therein. The processing unit 156 is configured to perform updating of the database 124 or operate updating of the database. The end terminal may further comprise one or all of the following components: a communication card 158, a data cache controller 122 being either in the memory 172 of the processing unit or in the main memory 157 of the end terminal 170, the OLAP unit 125, and the OLTP unit 121. The OLAP unit and the OLTP unit may be in the main memory 157. The main memory may further comprise the application server configured to provide execution of various applications including OLTP and OLAP. The communication card 158 is communicatively coupled via a computer network to a communication card 168 of a remote terminal 171. The communication card 158 and the communication card 168 may be wireless terminals providing communicative coupling of the end terminal 170 with the remote terminal 171 via a cellular digital telecommunication network 169. The OLAP unit 125 is communicatively coupled directly to the database 128 when the database is up-loaded to the main memory of the end terminal from the remote terminal. The OLTP unit 124 is communicatively coupled to the database 128 via the data cache controller 122 and the data cache 124, when the database is uploaded to the main memory of the end terminal from the remote terminal. The database may be in-memory database. The database server 167 on the remote terminal 171 comprises the database 128. The database server may further comprise the DBMS. The OLTP unit is communicatively coupled to the database 128 on the database server 167 via the communication cards/wireless terminals 168, the computer network/digital cellular telecommunication network 169, the cache controller 122, and the data cache (ETC) 124, when the database 128 is not uploaded to the main memory of the end terminal. The OLAP unit is communicatively coupled to the database 128 on the database server 167 via the communication cards/wireless terminals 168 and the computer network/digital cellular telecommunication network 169, when the database 128 is not uploaded to the main memory of the end terminal.

The aforementioned components may be located in yet another way on different machines as depicted on the FIG. 2. The remote terminal 171 may comprise a processing unit 159. The cache controller 122 and the data cache (ETC) 124 may be allocated in a memory 166 of the processing unit 159 instead of the memory 172 of the processing unit 170. _Allocation of the other components and their communicative coupling with each other is the same as described above.

The processing unit 156 of the end terminals 170 and/or the processing unit 159 of the remote terminal 171 comprising the database server 167 may be a microprocessor comprising one or more cores 150, 151 or 160, 161. Each core 150 (151; 160; 161) is communicatively coupled to its respective level 1 (L1) cache 152 (153; 162; 163) and to its respective level 2 (L2) cache 154 (155; 164; 165) caches. A level 3 (L3) cache 172 (166) of each microprocessor 156 (159) is communicatively coupled to all cores 150 and 151 (161 and 161) of the each microprocessor 156 (159). Access time of the microprocessor (core) to the L1 cache is shorter than access time of the microprocessor (core) to the L2 cache. Access time of the microprocessor (core) to the L2 cache is shorter than access time of the microprocessor (core) to the L3 cache. Access of the microprocessor (core) to the L1 cache requires less cycles of the microprocessor than access of the microprocessor (core) to the L2 cache. Access of the microprocessor (core) to the L2 cache requires less cycles of the microprocessor than access of the microprocessor (core) to the L3 cache. A size of the L1 cache is smaller than a size of the L2 cache and the size of the L2 cache is smaller than a size of the L3 cache. The L2 cache may comprise the first memory.

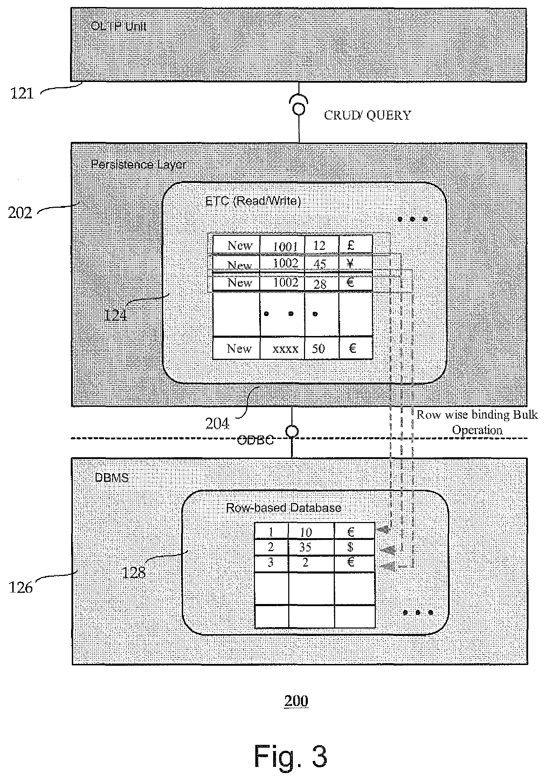

FIG. 3 is a block diagram of an exemplary architecture200 of the present framework. The architecture 200 may be implemented in the computer system 106, or in different physical machines or computer systems connected on network 132, as previously described with reference to FIG. 1 and FIG. 2. It should be noted that in the following discussion, reference will be made, using like numerals, to the features described in FIG. 1 and FIG. 2.

In one implementation, the OLTP unit 121 communicates with the persistence layer 202. The persistence layer 202 may include an ETC 124 that serves as a proxy for database 128 and delays execution of both read and write accesses until a flush is determined to be necessary. A "flush" generally refers to the action of updating the database 128 based on the ETC 124. More particularly, dirty records in the ETC 124 may be written to the database 128 during a flush. To perform a flush, a bulk operation interface may be implemented. A "bulk operation" generally refers to the execution of multiple database access operations as a batch (or single unit of work). The bulk operation may be performed to write all newly inserted or old updated records in the ETC 124 to the database 128. By using a bulk operation, the number of "round-trips" of data between the application server 120 and the database128 is reduced and performance is advantageously enhanced.

If the database 128 is row-based, the bulk operation may be row-wise binding. A row-wise binding bulk operation binds one array to each row 204 for which data is returned from the ETC 124. For example, a row-wise binding bulk insert operation adds rows of data in the ETC 124 into respective rows of a table in the row-based database 128. Row-wise binding is particularly useful in improving the performance of row-oriented in-memory databases.

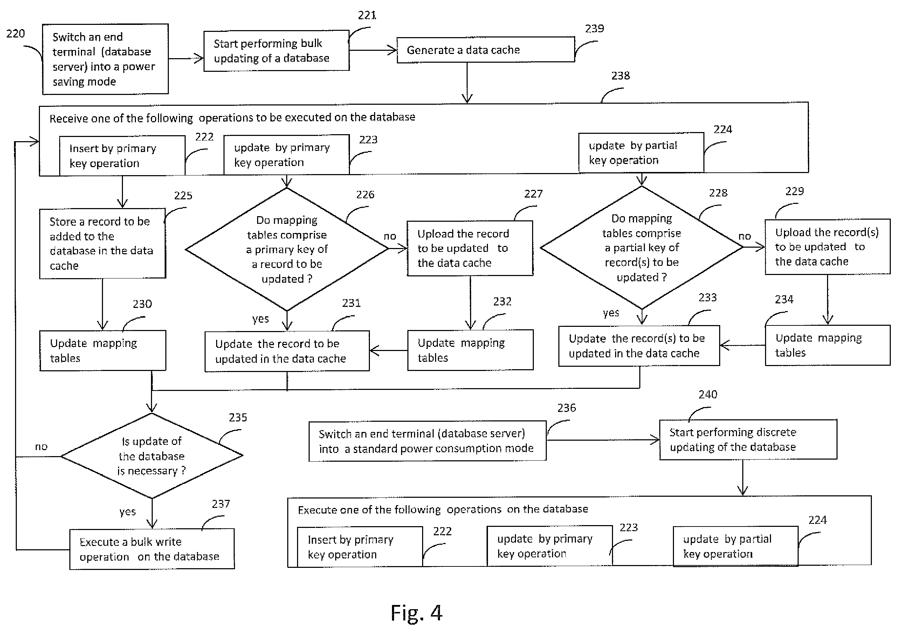

The end terminal 170 may be configured to perform the updating of the database 128 in an electrical power saving mode and in a standard electrical power consumption mode. An electrical power consumption of the end terminal in the electrical power saving mode is lower than an electrical power consumption of the end terminal in the standard electrical power consumption mode. A bulk updating of the database is performed in the electrical power saving mode and a discrete updating of the database is performed in the normal electrical power consumption mode (FIG. 4). The processing unit is configured to cause the end terminal to perform the following: switching the end terminal into the electrical power saving mode 220, causing the end terminal to perform the bulk updating of the database 221, switching the end terminal into the standard electrical power consumption mode 236, and causing the end terminal to perform the discrete updating of the database 240.

The causing of the end terminal to perform the bulk updating of the database comprises the following: generating 239 a data cache 124 in a memory 172 of the processing unit 156, wherein each record stored in the data cache has a respective unique physical address in the memory, and in response to receiving 238 an insert by primary key operation 222 of inserting of a record to be added to the database on the database performing the following: storing the record to be added in the data cache 235, wherein the record to be added is inserted into the database when an update of the database is determined to be necessary 235, and storing in mapping tables 158 a physical address of the record to be added and a primary key of the record to be added associated with each other 230.

The causing of the end terminal to perform the bulk updating of the database comprises further the following in response to receiving 238 an update by primary key operation 223 on the record to be updated in the database: executing the update by primary key operation on the record in the data cache stored at the physical address associated in the mapping tables with the primary key specified in the update by primary key operation 231, wherein the record to be updated is updated in the database when the update of the database is determined to be necessary 235, and in a cache miss case (decision process block 226) when the mapping tables do not comprise the partial key specified in the update by partial key operation performing the following: executing an upload by partial key operation that uploads the all records to be updated comprising the partial key specified in the update by partial key operation into the data cache from the database 227; and storing in the mapping tables all physical addresses, all primary keys and the partial key of the all uploaded records comprising the partial key specified in the upload by partial key operation 232, wherein the physical address of each uploaded record comprising the partial key specified in the upload by partial key operation, the respective primary key of the each uploaded record comprising the partial key specified in the upload by partial key operation and the partial key of the each uploaded record comprising the partial key specified in the upload by partial key operation are associated with each other in the mapping tables 158, wherein the record to be updated is updated in the database when the update of the database is determined to be necessary 235.

The causing of the end terminal to perform the bulk updating of the database may comprise further the following in response to receiving 238 from the end terminal an update by partial key operation 224 on all records to be updated in the database comprising a partial key specified in the update by partial key operation: executing the update by partial key operation on the all records in the data cache stored at the respective physical addresses associated in the mapping tables 158 with the partial key specified in the update by partial key operation 233 and in a cache miss case (decision process block 228) when the mapping tables do not comprise the partial key specified in the update by partial key operation performing the following: executing an upload by partial key operation 229 that uploads the all records to be updated comprising the partial key specified in the update by partial key operation into the data cache from the database; and storing in the mapping tables all physical addresses, all primary keys and the partial key of the all uploaded records comprising the partial key specified in the upload by partial key operation 234 , wherein the physical address of each uploaded record comprising the partial key specified in the upload by partial key operation, the respective primary key of the each uploaded record comprising the partial key specified in the upload by partial key operation and the partial key of the each uploaded record comprising the partial key specified in the upload by partial key operation are associated with each other in the mapping tables 158, wherein the record to be updated is updated in the database when the update of the database is determined to be necessary 235.

The causing of the processing unit to perform the discrete updating of the database 240 comprises the following: executing the insert by primary key operation of inserting of the record to be added to the database on the database 222, executing the update by partial key operation of all records to be updated comprising the partial key specified in the update by partial key operation on the database 224, and executing the update by primary key operation of the record to be updated comprising the primary key specified in the update by partial key operation on the database 223.

Alternatively a database server 167 may be configured to perform updating of a database 128 in an electrical power saving mode and in a standard electrical power consumption mode. The updating of the database is operated by an end terminal 170 in this case. The database server 167 comprises the database 128 and the processing unit 159. An electrical power consumption of the database server in the electrical power saving mode is lower than an electrical power consumption of the database server in the standard electrical power consumption mode. A bulk updating of the database is performed in the electrical power saving mode and a discrete updating of the database is performed in the normal electrical power consumption mode. The processing unit of the database server is configured to perform the following: switching the database server into the electrical power saving mode 220, causing the database server to perform the bulk updating of the database 221, switching the database server into the standard electrical power consumption mode 236, and causing the database server to perform the discrete updating of the database 240.

The causing of the database server to perform the discrete updating of the database comprises the following: in response to receiving form the end terminal 170 the insert by primary key operation of inserting of the record to be added to the database on the database executing the insert by primary key operation 222 of inserting of the record to be added to the database on the database, in response to receiving form the end terminal the update by partial key operation of all records to be updated comprising the partial key specified in the update by partial key operation on the database executing the update by partial key operation 224 of all records to be updated comprising the partial key specified in the update by partial key operation on the database, and in response to receiving form the end terminal the update by primary key operation of the record to be updated comprising the primary key specified in the update by partial key on the database operation executing the update by primary key operation 223 of the record to be updated comprising the primary key specified in the update by partial key operation on the database.

The causing of the database server to perform the bulk updating of the database comprises the following: generating a data cache 124 in a memory 166 of the processing unit 159 of the database server 167, wherein each record stored in the data cache has a respective unique physical address in the memory and in response to receiving 238 from the end terminal 170 an insert by primary key operation 222 of inserting of a record to be added to the database on the database performing the following: storing the record to be added in the data cache 225 , wherein the record to be added is inserted into the database when an update of the database is determined to be necessary 235, and storing in mapping tables a physical address of the record to be added and a primary key of the record to be added associated with each other 230.

The causing of the database server to perform the bulk updating of the database in response to receiving 238 from the end terminal 170 an update by primary key operation 223 on the record to be updated in the database further comprises the following: executing the update by primary key operation on the record in the data cache stored at the physical address associated in the mapping tables with the primary key specified in the update by primary key operation 231, wherein the record to be updated is updated in the database when the update of the database is determined to be necessary 235, and in a cache miss case (decision process block 226) when the mapping tables do not comprise the primary key specified in the update by primary key operation performing the following: executing an upload by primary key operation 227 that uploads the record to be updated into the data cache from the database, and storing in the mapping tables a physical address of the uploaded record and the primary key of the uploaded record associated with each other 232, wherein the record to be updated is updated in the database when the update of the database is determined to be necessary 235.

The causing of the database server 167 to perform the bulk updating of the database may comprise further the following in response to receiving 238 from the end terminal 170 an update by partial key operation 224 on all records to be updated in the database comprising a partial key specified in the update by partial key operation comprises the following: executing the update by partial key operation on the all records in the data cache stored at the respective physical addresses associated in the mapping tables with the partial key specified in the update by partial key operation 233, wherein the all records to be updated are updated in the database when the update of the database is determined to be necessary 235, and in a cache miss case (decision process block 228) when the mapping tables do not comprise the partial key specified in the update by partial key operation performing the following: executing an upload by partial key operation that uploads the all records to be updated comprising the partial key specified in the update by partial key operation into the data cache from the database 229, and storing in the mapping tables all physical addresses, all primary keys and the partial key of the all uploaded records comprising the partial key specified in the upload by partial key operation 234, wherein the physical address of each uploaded record comprising the partial key specified in the upload by partial key operation, the respective primary key of the each uploaded record comprising the partial key specified in the upload by partial key operation and the partial key of the each uploaded record comprising the partial key specified in the upload by partial key operation are associated with each other in the mapping tables.

The causing of the end terminal to perform the bulk updating of the database and the causing of the database server to perform the bulk updating of the database comprise further executing a bulk write operation that writes all records in the data cache to the database 237 in the case when the update of the database is determined to be necessary (decision process block 235).

The aforementioned association of the physical addresses, the primary keys, and the partial keys in the mapping tables results in building of very well structured mapping tables enabling fast identification of a physical address of a record stored in the data cache by its primary key and fast identification of physical addresses of a set of the records by a partial key, wherein each record of the set comprises said partial key.

The mapping tables have to be updated in a case when at least one partial or primary key stored in the mapping tables and in the data cache is updated in the data cache. In a case when the update by primary key operation comprises updating of the primary key of the record to be updated the update by primary key operation on the record in the data cache stored at the physical address associated in the mapping tables with the primary key specified in the update by primary key operation comprises updating the primary key of the record to be updated in the mapping tables. In a case when the update by primary key operation comprises updating of the primary key of the record to be updated the update by primary key operation on the record in the data cache stored at the physical address associated in the mapping tables with the primary key specified in the update by primary key operation comprises updating the primary key of the record to be updated in the mapping tables. In a case when the update by partial key operation comprises updating of one or more primary keys of one or more respective records to be updated comprising the partial key specified in the update by partial key operation the executing of the update by partial key operation on all records in the data cache stored at the respective physical addresses associated in the mapping tables with the partial key specified in the update by partial key operation comprises updating the one or more respective primary keys in the mapping tables. In a case when the update by partial key operation comprises updating of the partial key of the all records to be updated comprising the partial key specified in the update by the partial key operation then executing of the update by partial key operation on all records in the data cache stored at the respective physical addresses associated in the mapping tables with the partial key specified in the update by partial key operation comprises updating the partial key specified in the update by partial key operation in the mapping tables.

The microprocessor of the processing unit operates in a microprocessor power saving mode when the end terminal (database server) is switched into the electrical power saving mode, wherein the microprocessor operates in a microprocessor standard power consumption mode when the end terminal (database server) is switched into the standard electrical power consumption mode, wherein the microprocessor operates at the first clock frequency when the microprocessor operates in the processor power saving mode, wherein the microprocessor operates at the second clock frequency when the microprocessor operates in the microprocessor standard power consumption mode, wherein the second clock frequency is higher than the first clock frequency.

A remote terminal 171 may comprise the database 128. The remote terminal is communicatively coupled to the end terminal via a cellular digital telecommunication network 169. The upload by primary key operations, the insert by primary key operations, the bulk write operations, the upload by partial key operations, the update by primary key operations, and the update by partial key operations are performed via the digital cellular telecommunication network. The end terminal further comprises a wireless terminal 158 being configured to communicatively couple the end terminal to the remote terminal via the cellular digital telecommunication network. The wireless terminal is in an idle mode by default and in an data transmission mode when any one of the following operations is executed via the digital cellular telecommunication network: the upload by primary key operation, the insert by primary key operation, the bulk write operation, the upload by partial key operation, the update by primary key operation, and the update by partial key operation. An electrical power consumption of the wireless terminal in the idle mode is lower than an electrical power consumption of the wireless terminal in the data transmission mode. The electrical power consumption of the end terminal in the electrical power saving mode and in the standard electrical power consumption mode comprises the electrical power consumption of the wireless terminal in the idle mode when the wireless terminal is in the idle mode. The electrical power consumption of the end terminal in the electrical power saving mode and in the standard electrical power consumption mode comprises the electrical power consumption of the wireless terminal in the data transmission mode when the wireless terminal is in the data transmission mode.

The updating of the database may be performed faster and with better energy efficiency when the database 128 is uploaded via the cellular digital telecommunication network into a main memory 157 of the end terminal 170. In this case the computer-implemented method step of the causing of the processing unit to perform the bulk updating of the database the processing unit is caused to perform the bulk updating of the database uploaded in the main memory and a bulk upload operation that uploads the database into a main memory of the end terminal via the cellular digital telecommunication network is executed after the switching of the end terminal in the electrical power saving mode and before the switching of the end terminal in the normal electrical power consumption mode. When the updating of the database is completed the updated database may be downloaded to the remote terminal from the end terminal.

Each of the following operations the upload by primary key operation, the insert by primary key operation, the bulk write operation, the upload by partial key operation, the update by primary key operation, the update by partial key operation, and the bulk upload operation, is executed in a framework of a respective communication request-response round between the database and the end terminal via the cellular digital telecommunication network. The measures mentioned above enable reduction in a time average of a number of the communication request-response rounds generated when the end terminal is in the electrical power saving mode in comparison with a time average number of the communication request-response rounds generated when the end terminal is in the standard electrical power consumption mode. The averaging over time has to be calculated over statistically meaningful number of the communication request-response rounds. For instance, the number of request response rounds used for calculating of the time average of the number of the request-response rounds may be in the interval from 10 to 100. Nevertheless in a worst case scenario when there are 10 update by key operations and after each of them the update of the database is determined to be necessary (i.e. bulking of the operations on the data base is not possible due to constraints mentioned further) the rigorous mathematical formulation is: the time average of the number of the communication request-response rounds generated when the end terminal is in the electrical power saving mode is less or equal to the time average number of the communication request-response rounds generated when the end terminal is in the standard electrical power consumption mode.

The causing of the processing unit to perform the discrete updating of the database may further comprise: executing a delete by primary key operation of a record to be deleted comprising a primary key specified in the delete by primary key operation on the database and executing a delete by partial key operation of all records to be deleted comprising a partial key specified in the delete by partial key operation on the database.

The causing of the processing unit to perform the bulk updating of the database may further comprise: in response to receiving the delete by primary key operation of the record to be deleted comprising the primary key specified in the delete by primary key operation on the database performing the following: in a case when the data cache comprises the record to be deleted executing the delete by primary key operation of the record to be deleted on the data cache and deleting a physical address of the record to be deleted and all keys (i.e. the primary key and zero or more partial keys) associated with it in the mapping tables from the mapping tables, and in a case when the database comprises the record to be deleted executing the delete by primary key operation of the record to be deleted comprising the primary key specified in the delete by primary key operation on the database; and in response to receiving the delete by partial key operation of the all records to be deleted comprising the partial key specified in the delete by partial key operation on the database performing the following: in a case when the data cache comprises the all records to be deleted comprising the partial key specified in the delete by partial key operation executing the delete by partial key operation of the all records to be deleted comprising the partial key specified in the delete by partial key operation on the data cache and deleting all physical addresses of the all records to be deleted comprising the partial key specified in the delete by partial key operation and all partial and primary keys associated with them in the mapping tables from the mapping tables; and in a case when the database comprises the all records to be deleted comprising the partial key specified in the delete by partial key operation executing the delete by partial key operation of the all records to be deleted comprising the partial key specified in the delete by partial key operation on the database.

The processing unit 156 may comprise a microprocessor 150 (160) and the memory of the processing unit comprises a level 2 (L2) cache 154 (164) of the microprocessor and a level 3 (L3) cache 172 (166) of the microprocessor, wherein the mapping tables 158 are allocated in the L2 cache and the data cache 124 is generated in the L3 cache

The bulk operation interface may be implemented using Open Database Connectivity (ODBC), which is a standard C programming language middleware Application Programming Interface (API) for accessing the DBMS 126. Other types of interfaces may also be used. An exemplary Open Database Connectivity (ODBC) routine may be invoked with the following statements:
SQLSetStmtAttr (*m_pStatement, SQL_ATTR_PARAM_BIND_TYPE, sizeof(rowStructure), 0);
SQLSetStmtAttr (*m_pStatement, SQL_ATTR_PARAMSET_SIZE, ARRAY_SIZE, 0);

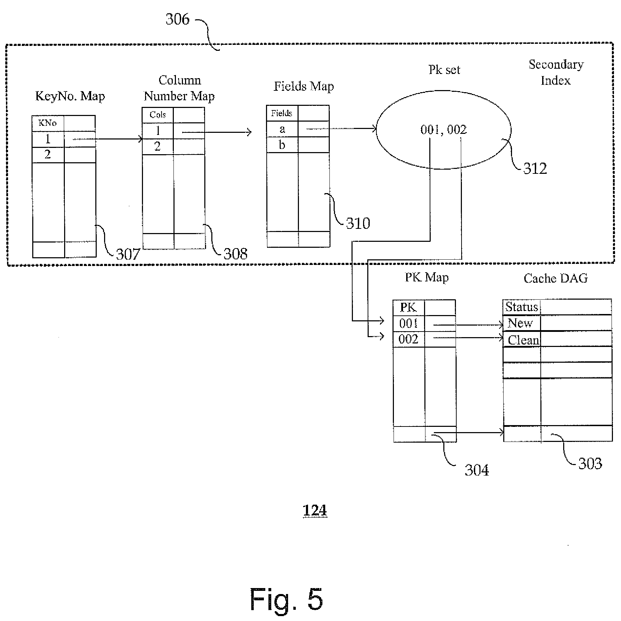

FIG. 5 shows an exemplary architecture of an ETC 124 based on the mapping tables or Maps. As shown, ETC 124 may include a cache data access gate (DAG) 303, a primary key (PK) map 304 and a secondary index 306 that supports partial key addressing. Cache DAG 303 is an implementation of the persistence layer 202, and serves as a data container similar to the client-side record set returned from the data server 127. Cache DAG 303 also serves as an interface to the persistence layer, by providing the functions to insert, update and/or query the database. Each record in the cache DAG 303 includes a value that indicates the status (e.g., New, Clean, etc.) of the record.

The addressing space used for each record in cache DAG 303 may contain multiple addresses for a single data record, allowing the record to be located by using either a primary key, a partial key or additional keys. A primary key is a key that uniquely identifies a data record in the cache DAG 303. A partial key may include a subset of the primary key string, and is not necessarily unique. For example, if the primary key includes first and second columns with values 10 and 15 respectively, the partial key may be defined by the first column with the value 10.

The primary key (PK) Map 304 associates the primary key with a corresponding record pointer (or address). The record pointer may be used to locate the record (or row) in the cache DAG 303. The secondary index 306 includes a Key Number (KeyNo.) Map 307, a Column Number Map 308, a Fields Map 310 and a Primary Key (Pk) Set 312. KeyNo. Map 307 associates a key number with a corresponding pointer to an entry in the Column Number Map 308.The key number refers to an identifier (ID) of a partial key (or index) or primary key defined in the database. For example, primary key ID = 1, and ID for another index on columns #3 and #4 = 2.Each entry in the Column Number Map 308 associates a column number with a field value in the Fields Map 310. The column number indicates which column of the database table, while the field value is associated with the database record. Further, each entry in the Fields Map 310 associates a field value to a corresponding Pk Set 312. Accordingly, the Pk set 312 is referenced by the key number, the column number and field value.

By providing a secondary index 306, the present framework advantageously supports a query or write operation that contains only a partial key or a non-primary key (i.e. index). For example, suppose a partial key represents the first column in a database table. If a query is to be performed based on this partial key with key value = 'a', then the key number = 1 (index type#1), column number = 1 (the first column in table) and field value = 'a'. To provide such query information, the application may, for instance, call the following query statement: DAG::GetByPartialKey(keyType#1, 1, 'a').With this query information, two records meeting this query criteria (e.g.,Pk= '001' and Pk = '002') may be found.

The mapping maintained by the secondary index 306 may be applied whenever any record is inserted, updated or deleted. For example, when a write operation with a partial key is received, the secondary index 306 may be used to map the partial key to one or more primary keys that uniquely identify one or more rows in the cache DAG 303. More particularly, the secondary index 306 may be used to map an identifier of the partial key (i.e. key number) to a column number, the column number to a field value and the field value to a primary key set including the one or more primary keys. The write operation may be delayed by writing to the one or more rows in the cache DAG 303 identified by the one or more primary keys.

In accordance with one implementation, DBMS 126 may apply certain lock types on the records stored in the database 128 to protect against concurrent data access or deadlocks. The OLTP unit 121 may also specify the lock type by calling a persistence layer application programming interface (API), e.g. load (with ULock). The ETC controller 122 may maintain, for each cache record, the same lock type that the DBMS 126 applied on each corresponding database record. The lock type (or lock level) may be one of the following (in ascending order): No Lock, Share Lock, Update Lock and Exclusive Lock. Other types of lock types may also be useful. When the user calls an API that accesses records in the ETC 124, the ETC controller 122 may manage the associated locks in accordance with one of the following policies. For instance, if the lock level of the cache record is lower than the lock level requested by the user, a database access may be executed to acquire the lock even if the requested records are already in the cache. A user may request a lock level (e.g., Update Lock) by calling an ETC API (e.g., ETC. load (10, ULock)). A lock may be acquired by changing the lock from the lower level to the higher level. In such case, a deadlock warning may be generated in the cache log file. If the lock level of the cache record is higher than the lock level requested by the user, the cache record is returned to the user directly. When a cache record is flushed, the ETC controller 122 changes the associated lock type from Share Lock or Update Lock to Exclusive Lock. If the user loads a record with a No Lock flag, then a No Lock flag may be applied to the database record. The locks may be released after the transaction ends, regardless of whether it is a commit or rollback.

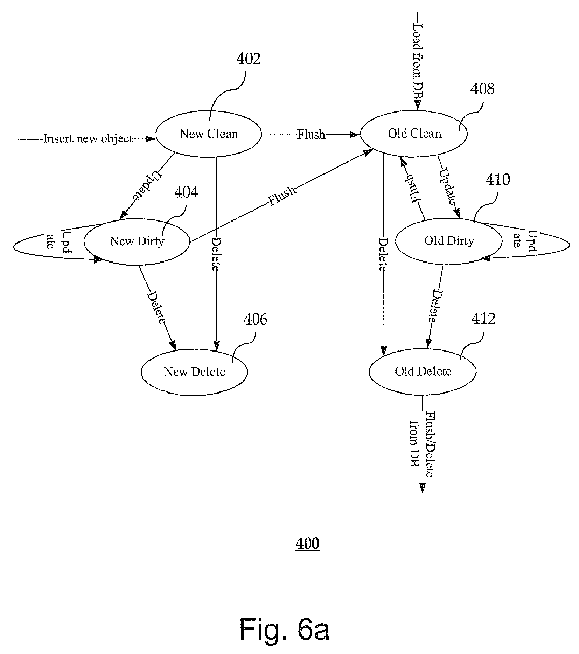

FIG. 6a shows an exemplary status transition diagram 400 of a record in the ETC 124. In order to support both read and write operations, each record may be associated with six possible statuses. Each record in the ETC 124 may include the memory address to which the entry corresponds, the value read or written, a status value that indicates whether the entry is New (requested by user to be added, but not inserted into database yet), Old (record loaded from database), Clean (not changed since it is added into cache), Dirty (changed by user since it is added into cache), Delete (requested by user to be deleted, but not executed on database yet), or a combination thereof.

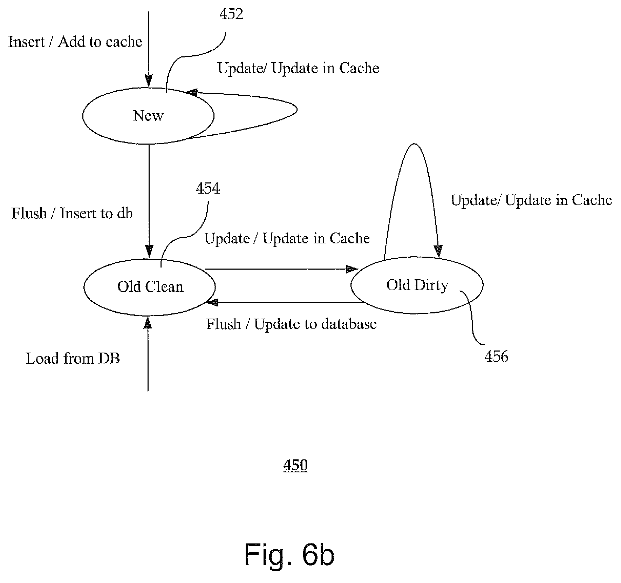

As shown by the status transition diagram 400, there are six possible statuses (402, 404, 406, 408, 410, 412) for each record: New Clean, New Dirty, New Delete, Old Clean, Old Dirty and Old Delete. The transition from one status to another may be initiated in response to an event (indicated along each transition arrow). An event may triggered by receiving a database access operation (e.g., Insert, Delete, etc.). FIG. 6b is another exemplary status transition diagram 450. As shown, the number of possible statuses (452, 454, 456) of each record is three: New, Old Clean and Old Dirty. Each transition arrow is labeled with an Event/Action. The transition from one status to another is initiated by the occurrence of each respective Event/Action. For example, when the user requests to insert a record to the database, the ETC controller 122 adds the record to the ETC 124 and sets the status of the record in the ETC 124 to "New".

It should be appreciated that the status transition diagram 450 is a simplified implementation of the status transition diagram 400. Since the Delete operation is rarely used in a business application, the "NewDelete" and "OldDelete" statuses (406 and 412) may be removed. A Write-through-DB policy may be defined for the Delete operation. The Write-through-DB policy indicates that the entry is deleted directly from the database 128 in response to receiving a Delete instruction, In addition, the corresponding entry may also be removed from the ETC 124. The "New Clean" and "New Dirty" statuses (402 and 404) may be combined into a "New" status 452. A Write-Delay policy may be implemented for Insert and Update operations. The Write-Delay policy indicates that the entry is temporarily stored in the ETC 124 and its status set to "New".

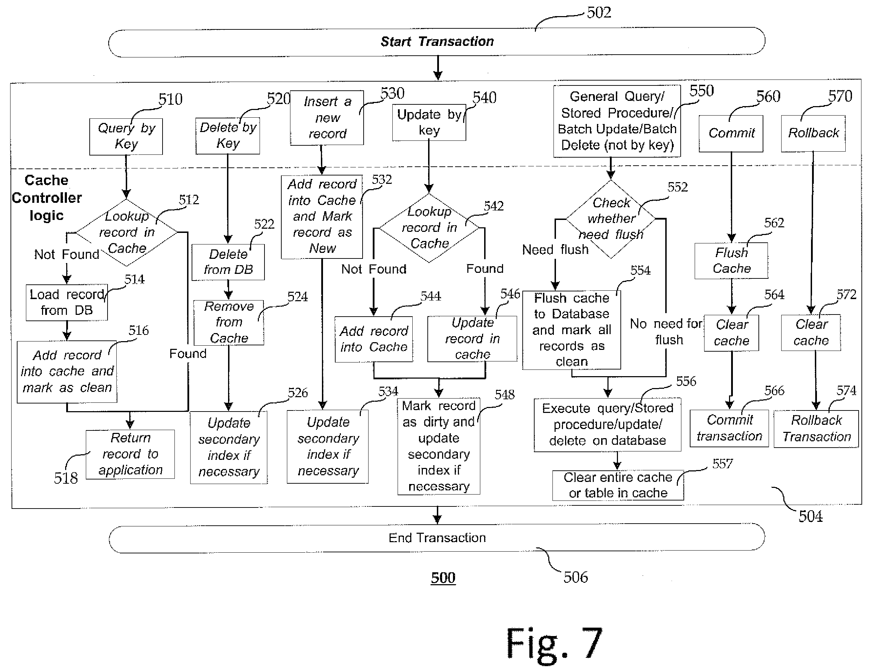

FIG. 7 shows an exemplary method 500 of managing database events. At 502, the database transaction starts. A database transaction is a sequence of database operations (e.g., SQL) that the DBMS 126 treats as a unit. A transaction brings the database 128 from one consistent state to another, and may be initiated by a user or business application.

At 504, a request to execute one or more query or write operations is received. The ETC controller 122 handles each operation in accordance with the various subroutines shown.

At 510, a Query by Key operation is received. The key used in such query may be a primary key or partial key. At 512, when a Query by Key operation is executed, the ETC controller 122 looks up the record in the ETC 124. If the record is not found in the ETC 124, at 514, it is loaded from the database 128. At 516, the record is added into the ETC 124 and its status is set to Clean. If the record is found in the ETC 124, the cache record is returned to the user or business application (or OLTP unit) at 518. For query by non-unique index key, the ETC controller 122 may check to see if a flush is necessary.

At 520, a Delete by Key statement is received. As mentioned previously, a Write-through-DB policy may be defined for the Delete operation. At 522, the record is deleted directly from the database 128. At 524, the corresponding entry in the ETC 124 may also be removed. At 526, the secondary index 306may be updated if necessary. Such update is necessary when any record that meets partial key criteria is removed from the database. As discussed previously, the secondary index may be used to support a query or write operation by a partial or non-primary key. The secondary index may be updated by, for example, removing from the Pk set 312 a certain primary key associated with the partial key.

At 530, an Insert statement is received. At 532, the new record is added to the ETC 124 and its status is marked as "New".At 534, the secondary index 306 may be updated if necessary. Such update is necessary when any record that meets partial key criteria is inserted into the database. The secondary index may be updated by, for example, removing from the Pk set 312 a certain primary key associated with the partial key.

At 540, an Update by Key statement is received. At 542, the ETC controller 122 looks up the record in the ETC 124. If the record is not found, at 544, the ETC controller 122 adds the record into the ETC 124. If the record is found, at 546, the record in the ETC 124 is updated. At 548, if the previous status is "Clean" or "Dirty," the record in the ETC 124 is marked as "Dirty" to indicate that it needs to be used to update an existing record in the database. If the previous status is "New", the status remains unchanged. The secondary index 306 is updated if necessary. Such update is necessary when any database record that meets partial key criteria is updated and has a change in status as a result of the update. The secondary index may be updated by, for example, removing from the Pk set 312 a certain primary key associated with the partial key.

At 550,a General Query, Stored Procedure, Batch Update (not by key) or a Batch Delete (not by key) is received. At 552, the ETC controller 122 checks to see if a Flush is required. To make sure that the flush is effective and the flush order is correct, the ETC controller 122 may implement a policy to determine the necessity of a flush.

For instance, a Flush may be invoked before some general query is executed because some query results may be affected by any newly inserted or old dirty records in the ETC 124. The ETC controller 122 may check to see whether a flush is necessary before the general query is executed. A flush may be necessary if the general query is related to a view. A view generally refers to a query accessible as a virtual table in the database. In addition, a flush may also be necessary if there is any newly inserted or old dirty record in the ETC 124 that is associated with a table that is related to the general query (e.g., SQL table JOIN, sub-query, etc.). It should be noted that these conditions may also be checked before a Stored Procedure, Batch Update (not by key) or a Batch Delete (not by key) is executed.

If a Flush is determined to be necessary, at 554, the ETC controller 122 collects all newly inserted and old dirty records in the ETC 124 according to, for example, table name. The ETC controller 122 then inserts or updates the database 128 with the collected records so as to synchronize the database 128 with the ETC 124. This may be achieved by a bulk operation (e.g., row-wise binding bulk operation). The newly inserted and old dirty records in the ETC 124 are then marked as clean. If a Flush is determined to be unnecessary, the process continues at step 556, where the General Query, Stored Procedure, Batch Update or Batch Delete is executed on the database 128. At 557, in the case of a Stored Procedure, the entire ETC 124 is cleared. In the case of a Batch Update or a Batch Delete, the associated table in ETC 124 is cleared.

At 560, a COMMIT is initiated to complete the transaction and retain the changes in the database 128. Committing the transaction causes the ETC 124 to be flushed at 562. The ETC 124 is then cleared at 564, and the transaction is successfully committed at 566.

At 570, a ROLLBACK is initiated to return the database 128 to the state it was in before the transaction began. Rolling back the transaction causes the ETC 124 to be cleared at 572. The transaction is then successfully rolled-back at 574.

At 506, the transaction ends. The transaction may be terminated by either a COMMIT or a ROLLBACK event.

As discussed previously, the ETC controller 122 may execute a bulk operation to flush the ETC 124. A flush may occur in the following cases: (1) When a transaction is committing; (2) Before some general query is executed; (3) Before some batch update is executed; (4) Before some batch delete is executed; (5) Before all stored procedures are executed; and (6) When developer requests to flush by calling the function Flush() explicitly.

Since a flush delays the execution of Insert and Update operations, the execution order of query statements may also change. The modification of the execution order may cause some issues with order-sensitive query statements and raise a constraint violation (or expression evaluation error).

A constraint may refer to a rule that restricts values in a database. For instance, an SQL database server may allow five types of constraints to be defined: (1) NOT NULL constraint; (2) unique index constraint; (3) primary key constraint; (4) reference integrity (or foreign key) constraint; and (5) check constraint. Other types of constraints may also be defined. A NOT NULL constraint prohibits a database value from being null. A unique index constraint prohibits multiple rows from having the same value in the same column or combination of columns but allows some values to be null. A primary key constraint combines a NOT NULL constraint and a unique constraint in a single declaration. A reference integrity constraint requires values in one table to match values in another table. A check constraint requires a value in the database to comply with a specified condition.

Examples of order-sensitive query statements that may raise constraint violations include Update statements that change either the primary key, unique index or foreign key, Insert and Delete statements. Modifying the execution order of these statements may cause the database server to throw an exception.

For instance, if the execution order of Update and Insert statements is modified, three types of scenarios may occur. In the first scenario, the column of a unique index may be updated as follows:
**OITM** table: ItemCode column comprises primary keys of data rows and
**ItemName** column comprises unique names of items, i.e. the database will raise an exception/report an error when a data row comprising a data item name being already stored in the table is attempted to be generated in the table.
Suppose there is already one data row in the **OITM** table: 'l001', 'cpu'....
S1: Update **OIT**Mset **ItemName**='memory' where **ItemCode**='I001'
S2: Insert into **OITM** values ('I002', 'cpu',...)

If the statement S1 is executed before the statement S2, the statements will be executed successfully. However, if the statement S1 is executed after the statement S2, execution of the statement S2 will raise an exception due to a unique index constraint violation, because after execution of the statement S2 and before execution of the statement S1 ItemName column has to comprise two data rows having the same data values 'cpu'.

In the second scenario, the column of a foreign keymay be updated as follows:
**ORDR** table: **OrderID** is primary key.
**RDR1** table: **(ItemCode, OrderID)** is primary key. **OrderID** is foreign key referring to **ORDR.**
Suppose there is already one data row in the ORDR table: 'R001', .....
S1: Update **ORDR** set **OrderID**='R002' where **OrderID=**'R001'
S2: Insert into **RDR1** values ('R002', 'cpu',...)

If the statement S1 is executed before the statement S2, the statements will be executed successfully. However, if the statement S1 is executed after the statement S2, execution of the statement S2 will raise an exception due to a foreign key constraint violation, because execution of the statement S2 before the statement S1 causes creation of a data row in the RDR1, wherein this data row comprises 'R002' being a foreign key linking this data row to a not yet existing data row in the ORDR table having 'R002' as primary key.

In the third scenario, the column of a foreign key may be updated as follows:
**ORDR** table: **OrderID** is primary key.
**RDR1** table: (**ItemCode, OrderID**) is primary key. **OrderID** is foreign key referring to **ORDR.**
Suppose there is already one data row in the RDR1 table, comprising 'R001' as foreign key referring to a data row in ORDR.
S1: Update **RDR1** set **OrderID=**'R002' where **OrderID**='R001'
S2: Insert into **ORDR** values ('R002', 'cpu',...)

If the statement S1 is executed after the statement S2, the statements will be executed successfully. However, if the statement S1 is executed before the statement S2, execution of the S1 statement will raise an exception due to a foreign key constraint violation, because execution of the statement S1 before the statement S2 causes creation of an updated data tow having 'R002'as foreign key referring to a not yet existing data row in the ORDR table.

In another example, modifying the execution order of different Update operations may also raise constraint violations. For instance, the column of a unique index may be updated as follows:
**OITM table: ItemCode** is primary key and **ItemName** is unique column. Suppose there is already one record in the **OITM** table: 'I001', 'cpu1'...., 'I002', 'cpu2'....
S1: Update **OITM**set **ItemName**='cpu2' where **ItemCode**='I001'
S2: Update **OITM**set **ItemName**='cpu3' where **ItemCode**='I002'

If the statement S1 is executed after the statement S2, the statements will be executed successfully. However, if the statement S1 is executed before the statement S2, execution of the statement S1 will raise an exception due to a unique index constraint violation, because after execution of the statement S1 and before the statement S2 the OITM has to comprise two data rows having the same data value 'cpu2' in the column used for storing only unique data values, i.e. two data vales 'cpu2' are forbidden in this column.

To address such possible constraint violations, the ETC controller 122 may apply a Write-through-DB policy (or Write-Through-Cache policy) for order-sensitive Delete statements. The Write-through-DB policy directly removes the record from the database 128. More particularly, the Write-through-DB policy executes database access operations directly on the database 128, instead of first accessing the cache (e.g., marking record as delete) and delaying access operations until a flush is invoked. For order-sensitive Update and Insert statements, the ETC controller 122 may maintain the original execution order of the statements when they first entered the ETC 124. As for other issues caused by incorrect flush order, the user may explicitly call Flush to ensure correct business logic. Such cases are typically very rare in most business applications.

The ETC controller 122 may also perform other functions, such as data version management. One data version management strategy is to use backup buffers for version check control. Backup buffers serve to save a copy of the original contents of the data associated with the database 128. Since the contents of the backup buffers are loaded from database, they may be used to check which fields are modified by comparing the data and backup buffers. Backup buffers may also be used to check whether the record is updated by other clients when a flush happens. If the backup buffers' contents are different from the database records in the data buffers, it means that a newer version has been committed after such records are cached. The current transaction should be a rollback and a concurrent exception should be thrown.

The causing of the processing unit to perform the bulk updating of the database is performed by executing the SQL transactional processing, wherein one or more transactions of the transactional processing comprise at least one of the following first operations: the insert by primary key operation, the update by primary key operation, the update by partial key operation, the delete by primary key operation, and the delete by partial key operation, wherein the update of the database is determined to be necessary in the following cases: committing of the single transaction comprising the at least one of the first operations is performed, before executing a batch update operation comprising a plurality of the update by primary key operations and/or a plurality of the update by partial key operations, before executing a batch delete operation comprising a plurality of the delete by primary key operations and/or a plurality of the delete by partial key operations, before executing a SQL general query on the database, before executing a SQL stored procedure on the database, when a number of records in the data cache exceeds a first threshold value, or when a data volume of data in the mapping tables exceeds a second threshold value.

In order to avoid order constraint violations related to execution of order sensitive operations the update of the database using records stored in the data cache may be executed. For instance, the update of the database may be necessary after execution of the insert by key operation of inserting of a record to be added to the database comprising a primary key and a partial key after execution of this operation in a case when the next operation to be executed is the update by partial key on records to be updated in the database comprising the partial key of the record to be added to the database.

FIGS. 6 and 7 illustrate how the OLTP unit 121 interacts with the ETC 124 to implement version check control using backup and data buffers. As shown, each pair of rows(or records) is a combination of data and backup buffers, and is associated with a record in the database 128. The records in the OLTP unit121side are allocated to the application layer and used to perform transaction-related functions, while the records on the ETC 124 side are cached inside the persistence layer. As discussed previously, ETC 124 acts as a proxy for the database 128.

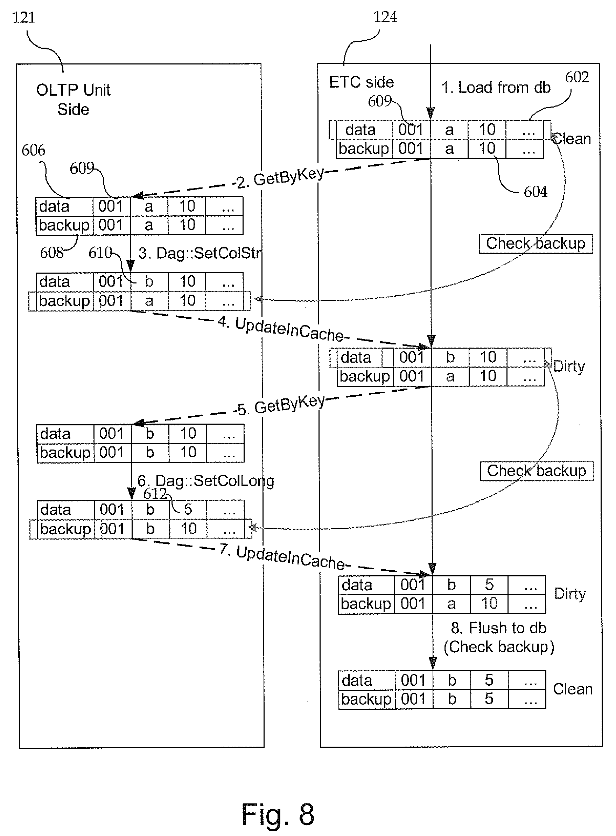

More particularly, FIG. 8 shows an exemplary method of version check control during an update of only normal fields. A normal field generally refers to a column of a relational table that is not a primary key. In this example, the first column of the tables stored in the first and second data buffers (602 and 606) and first and second backup buffers (604 and 608) holds the primary key 609, which identifies a record in the tables.

At Step 1, a record(e.g., row in a table or other data element) may be loaded from the database 128 to the ETC 124. When this happens, the first data buffer 602 may store the database record, while the contents of the first data buffer 602 are copied to the first backup buffer 604. The status of the record is set to Clean.

At Step 2, a GetByKey statement may be called by the user to "Query by Key" or retrieve the record whose key field matches a specified key expression (e.g., 001). Since the status of the record is Clean, the ETC record may be returned to the OLTP unit 121 and stored in the second data buffer 606. The second backup buffer 608 may also store a copy of the record.

At Step 3, a Dag::SetColStr statement may be called by the user to change a string value in a normal field 610 of the table contained in the second data buffer 606. In such case, the second backup buffer 608 may contain a different or old copy of the record.

At Step 4, a Dag::Update statement may be called by the user to update the ETC 124 or database 128. In response to this statement, the ETC controller 122 may invoke an UpdateInCache statement. If the record is found in the ETC 124, the record in the second data buffer 606 is copied to the first data buffer 602. The status of the record is then set to Dirty. If the Checkbackup flag is true, the second backup buffer 608 is then compared with the first data buffer 602. If the contents of the second backup buffer 608 and the first data buffer 602 are different, an error is reported.

At Step 5, a GetbyKey statement may be called by the user to retrieve the record again. In response, the record in the first data buffer 602 is returned and stored in the second data buffer 606. A copy of the record is copied from the second data buffer 606 to the second backup buffer 608. At Step 6, a DAG::SetColLong statement may be called by the user to change a long integer value in a normal field 612 of the table contained in the second data buffer 606. The contents in the second backup buffer 608 may then be different from the contents in the second data buffer 606.

At Step 7, a Dag::Update statement may be called again by the user to update the ETC 124 or database 128. In response to this statement, the ETC controller 122 may invoke an UpdateInCache statement. If the record is found in the ETC 124, the record in the second data buffer 606 is copied to the first data buffer 602. The status of the record remains as Dirty. If the Checkbackup flag is true, the second backup buffer 608 is then compared with the first data buffer 602. If the contents of the second backup buffer 608 and the first data buffer 602 are different, an error is reported.

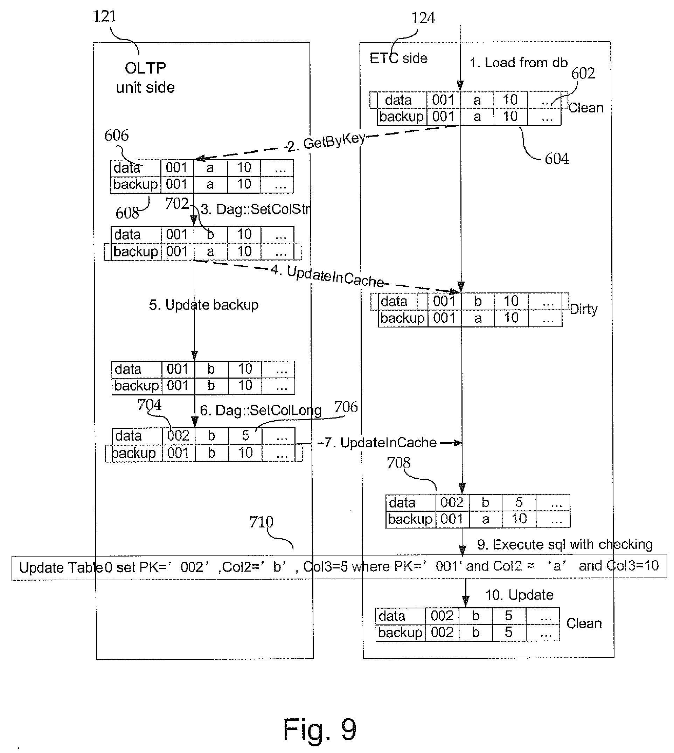

At Step 8, a Flush to database statement is invoked. The first backup buffer 604 is first checked to determine if it contains the same dirty record as the first data buffer 602. If it does not, the contents of the first data buffer 602 are copied to the first backup buffer 604. The dirty record in the first data buffer 602 is flushed to the database 128 and the status of the record is set to Clean. FIG. 9 shows an exemplary method of version check control during an update of primary key fields. It should be noted that such method may also be applied during an update of other fields, such as unique index or foreign key fields. As shown, first data and backup buffers are allocated to the ETC 124, and second data and backup buffers are allocated to the OLTP unit 121 (or business application). The first data buffer 602 temporarily holds data while the data is being moved from the ETC 124 to the database 128 or vice versa. The second data buffer 606 temporarily holds data while the data is being moved from the OLTP unit 121 to the ETC 124 or database 128. In this example, the first column of the tables stored in the first and second data and backup buffers holds the primary key, which identifies each record in the tables.

At Step 1, a record (e.g., row in a table or other data element) may be loaded from the database 128 to the ETC 124. When this happens, the first data buffer 602 may store the record, while the contents of the first backup buffer 604 may be copied from the first data buffer 602 to the first backup buffer 604. The status of the record is set to Clean.

At Step 2, a GetByKey statement may be called by the user to "Query by Key" or retrieve the record whose key field matches a specified key expression (e.g., 001). Since the status of the record is Clean, the record may be returned to the OLTP unit 121 and stored in the second data buffer 606. The second backup buffer 608 may also contain a copy of the record.

At Step 3, a Dag::SetColStr statement may be called by the user to change a string value in a normal field 702 of the table contained in the second data buffer 606. In such case, the second backup buffer 608 may contain a different or an old copy of the record.

At Step 4, a Dag::Update statement may be called by the user to update the ETC 124 or database 128. In response to this statement, the ETC controller 122 may invoke an UpdateInCache statement. If the record is found in the ETC 124, the record in the second data buffer 606 is copied to the first data buffer 602. The status of the record is then set to Dirty. If the Checkbackup flag is true, the second backup buffer 608 is then compared with the first data buffer 602. If the contents of the second backup buffer 608 and the first data buffer 602 are different, an error is reported.

At Step 5, the second backup buffer 608 may also be updated with the contents of the second data buffer 606 in response to the Dag::Update statement.

At Step 6, a DAG::SetColLong statement may be called by the user to change a long integer value in a key field 704(e.g., from 001 to 002) and a normal field 706 (e.g., from 10 to 5) of the table contained in the second data buffer 606. The contents in the second backup buffer 608 may then be different from the contents in the second data buffer 606.

At Step 7, a Dag::Update statement may be called again by the user to update the ETC 124 or database 128. In response, the ETC controller 122 may invoke an UpdateInCache statement. When the ETC controller 122 finds that the primary key field 708 has been updated, it compares the second backup buffer 608 with the contents of the first data buffer 602 to check if they are the same. If they are the same, it means that the original version of the record in the OLTP unit 121 is the current version, and it is therefore safe to override the cached record in the ETC 124 with the record in the OLTP unit 121. Accordingly, the first data buffer 602 in the ETC 124 will be updated by the second data buffer 606 on the OLTP unit 121 side, and this ETC record may be used to execute update statements when a flush is invoked.

At Step 8 (not shown), the ETC controller 122 may execute the update query statement 710 for the new record. To improve performance, the query statement may be executed with a checking condition (e.g., where PK='001' and Col2='a' and Col3=10).

At Step 9, the first data buffer 602 is updated with the new record and its status is set to Clean. The contents of the first data buffer 602 are then copied to the first backup buffer 604.

At Step 10, the secondary index is updated if necessary. Such update is necessary when any database record that meets partial key query criteria is updated. The secondary index may be updated by, for example, removing from the Pk set 312 a certain primary key associated with the partial key.

Although the one or more above-described implementations have been described in language specific to structural features and/or methodological steps, it is to be understood that other implementations may be practiced without the specific features or steps described. Rather, the specific features and steps are disclosed as preferred forms of one or more implementations.

## Claims

1. A computer-implemented method of updating of a database (128) using an end terminal (170) comprising a processing unit (156), wherein the database comprises records, each record comprises a respective primary key uniquely identifying the each record in the database, each of at least a portion of the records comprises one or more partial keys, each partial key uniquely identifies a respective set of the records and each record of the respective set comprises the each partial key, wherein the end terminal is configured to perform the updating of the database in an electrical power saving mode and in a standard electrical power consumption mode, wherein an electrical power consumption of the end terminal in the electrical power saving mode is lower than an electrical power consumption of the end terminal in the standard electrical power consumption mode, wherein a bulk updating of the database is performed in the electrical power saving mode and a discrete updating of the database is performed in the normal electrical power consumption mode, the computer-implemented method, comprising:
• switching the end terminal into the electrical power saving mode (220);
• causing the processing unit to perform the bulk updating of the database (221), wherein the causing of the processing unit to perform the bulk updating of the database comprises:
- generating a data cache in a memory of the processing unit, wherein each record stored in the data cache has a respective unique physical address in the memory (239);
- in response to receiving an insert by primary key operation (222) of inserting of a record to be added to the database on the database performing the following:
o storing the record to be added in the data cache (225); and
∘ storing in mapping tables a physical address of the record to be added and a primary key of the record to be added associated with each other (230), wherein the record to be added is inserted into the database when an update of the database is determined to be necessary (235);
- in response to receiving an update by primary key operation (223) on a record to be updated in the database performing the following:
▪ in a cache miss case (226) when the mapping tables do not comprise the primary key specified in the update by primary key operation performing the following:
• executing an upload by primary key operation that uploads the record to be updated into the data cache from the database (227); and
• storing in the mapping tables a physical address of the uploaded record and the primary key of the up-loaded record associated with each other (232);
▪ executing the update by primary key operation (231) on the record in the data cache stored at the physical address associated in the mapping tables with the primary key specified in the update by primary key operation, wherein in a case when the update by primary key operation comprises updating of the primary key of the record to be updated (226) the update by primary key operation on the record in the data cache stored at the physical address associated in the mapping tables with the primary key specified in the update by primary key operation comprises updating the primary key of the record to be updated in the mapping tables, wherein the record to be updated is updated in the database when the update of the database is determined to be necessary (235);
- in response to receiving an update by partial key operation (224) on all records to be updated in the database comprising a partial key specified in the update by partial key operation performing the following:
▪ in a cache miss case (228) when the mapping tables do not comprise the partial key specified in the update by partial key operation performing the following:
• executing an upload by partial key operation (229) that uploads all records to be updated comprising the partial key specified in the update by partial key operation into the data cache from the database; and
• storing in the mapping tables all physical addresses, all primary keys and the partial key of the all uploaded records comprising the partial key specified in the upload by partial key operation (229), wherein the physical address of each uploaded record comprising the partial key specified in the upload by partial key operation, the respective primary key of the each uploaded record comprising the partial key specified in the upload by partial key operation and the partial key of the each uploaded record comprising the partial key specified in the upload by partial key operation are associated with each other in the mapping tables;
▪ executing the update by partial key operation (233) on all records in the data cache stored at the respective physical addresses associated in the mapping tables with the partial key specified in the update by partial key operation, wherein in a case when the update by partial key operation comprises updating of one or more primary keys of one or more respective records to be updated comprising the partial key specified in the update by partial key operation the executing of the update by partial key operation on all records in the data cache stored at the respective physical addresses associated in the mapping tables with the partial key specified in the update by partial key operation comprises updating the one or more respective primary keys in the mapping tables, wherein in a case when the update by partial key operation comprises updating of the partial key of the all records to be updated comprising the partial key specified in the update by the partial key operation the executing of the update by partial key operation on all records in the data cache stored at the respective physical addresses associated in the mapping tables with the partial key specified in the update by partial key operation comprises updating the partial key specified in the update by partial key operation in the mapping tables, wherein the all records to be updated are updated in the database when the update of the database is determined to be necessary (235); and
- in the case when the update of the database is determined to be necessary (235) executing a bulk write operation (237) that writes all records tin the data cache to the database;
and
wherein the update of the database is determined to be necessary when an overall number of the data rows in the data cache exceeds a first threshold value;
• switching the end terminal into the standard electrical power consumption mode (236); and
• causing the processing unit to perform the discrete updating of the database (240), wherein the causing of the processing unit to perform the discrete updating of the database comprises:
- executing the insert by primary key operation of inserting of the record to be added to the database on the database (222);
- executing the update by partial key operation of all records to be updated comprising the partial key specified in the update by partial key operation on the database (224); and
- executing the update by primary key operation of the record to be updated comprising the primary key specified in the update by partial key operation on the database (223).

2. The computer-implemented method of claim 1, wherein the processing unit comprises a microprocessor and the memory of the processing unit comprises a level 2 (L2) cache (154) of the microprocessor and a level 3 (L3) cache of the microprocessor, wherein the mapping tables (158) are allocated in the L2 cache and the data cache is generated in the L3 cache (172).

3. The computer implemented method of claim 2, wherein the microprocessor operates in a microprocessor power saving mode when the end terminal is switched into the electrical power saving mode, wherein the microprocessor operates in a microprocessor standard power consumption mode when the end terminal is switched into the standard electrical power consumption mode, wherein the microprocessor operates at the first clock frequency when the microprocessor operates in the processor power saving mode, wherein the microprocessor operates at the second clock frequency when the microprocessor operates in the microprocessor standard power consumption mode, wherein the second clock frequency is higher than the first clock frequency.

4. The computer-implemented method of any one of the preceding claims1 wherein the database comprises an in-memory database.

5. The computer-implemented method of any one of the preceding claims, wherein a remote terminal comprises the database, wherein the remote terminal is communicatively coupled to the end terminal via a cellular digital telecommunication network (169), wherein the upload by primary key operations, the insert by primary key operations, the bulk write operations, the upload by partial key operations, the update by primary key operations, and the update by partial key operations are performed via the digital cellular telecommunication network, wherein the end terminal further comprises a wireless terminal (158) being configured to communicatively couple the end terminal to the remote terminal via the cellular digital telecommunication network, wherein the wireless terminal is in an idle mode by default and in an data transmission mode when any one of the following operations is executed via the digital cellular telecommunication network: the upload by primary key operation, the insert by primary key operation, the bulk write operation, the upload by partial key operation, the update by primary key operation, and the update by partial key operation, wherein an electrical power consumption of the wireless terminal in the idle mode is lower than an electrical power consumption of the wireless terminal in the data transmission mode, wherein the electrical power consumption of the end terminal in the electrical power saving mode and in the standard electrical power consumption mode comprises the electrical power consumption of the wireless terminal in the idle mode when the wireless terminal is in the idle mode and the electrical power consumption of the end terminal in the electrical power saving mode and in the standard electrical power consumption mode comprises the electrical power consumption of the wireless terminal in the data transmission mode when the wireless terminal is in the data transmission mode.

6. The computer-implemented method of claim 5 further comprising:
after the switching of the end terminal in the electrical power saving mode and before the switching of the end terminal in the normal electrical power consumption mode executing a bulk upload operation that uploads the database into a main memory of the end terminal via the cellular digital telecommunication network, wherein in the computer-implemented method step of the causing of the processing unit to perform the bulk updating of the database the processing unit is caused to perform the bulk updating of the database uploaded in the main memory.

7. The computer-implemented method of any one of the preceding claims 1-4, wherein the causing of the processing unit to perform the discrete updating of the database further comprises:
executing a delete by primary key operation of a record to be deleted comprising a primary key specified in the delete by primary key operation on the database; and
executing a delete by partial key operation of all records to be deleted comprising a partial key specified in the delete by partial key operation on the database;
wherein the causing of the processing unit to perform the bulk updating of the database further comprises:
in response to receiving the delete by primary key operation of the record to be deleted comprising the primary key specified in the delete by primary key operation on the database performing the following:
in a case when the data cache comprises the record to be deleted executing the delete by primary key operation of the record to be deleted on the data cache and deleting a physical address of the record to be deleted and all keys associated with it in the mapping tables from the mapping tables; and
in a case when the database comprises the record to be deleted executing the delete by primary key operation of the record to be deleted comprising the primary key specified in the delete by primary key operation on the database; and
in response to receiving the delete by partial key operation of the all records to be deleted comprising the partial key specified in the delete by partial key operation on the database performing the following:
in a case when the data cache comprises the all records to be deleted comprising the partial key specified in the delete by partial key operation executing the delete by partial key operation of the all records to be deleted comprising the partial key specified in the delete by partial key operation on the data cache and deleting all physical addresses of the all records to be deleted comprising the partial key specified in the delete by partial key operation and all partial and primary keys associated with them in the mapping tables from the mapping tables; and
in a case when the database comprises the all records to be deleted comprising the partial key specified in the delete by partial key operation executing the delete by partial key operation of the all records to be deleted comprising the partial key specified in the delete by partial key operation on the database.

8. The computer-implemented method of any one of the preceding claims, wherein the causing of the processing unit to perform the bulk updating of the database is performed by executing a Structured Query Language (SQL) transactional processing, wherein one or more transactions of the transactional processing comprise at least one of the following first operations: the insert by primary key operation, the update by primary key operation, the update by partial key operation, the delete by primary key operation, and the delete by partial key operation, wherein the update of the database is further determined to be necessary in the following cases: committing of the single transaction comprising the at least one of the first operations is performed, before executing a batch update operation comprising a plurality of the update by primary key operations and/or a plurality of the update by partial key operations, before executing a batch delete operation comprising a plurality of the delete by primary key operations and/or a plurality of the delete by partial key operations, before executing a SQL general query on the database, before executing a SQL stored procedure on the database, or when a data volume of data in the mapping tables exceeds a second threshold value.

9. A computer-implemented method of updating of a database (128) using a database server (167) operated by an end terminal (170), wherein a database server comprises the database and a processing unit (159), wherein the database comprises records, each record comprises a respective primary key uniquely identifying the each record in the database, each of at least a portion of the records comprises one or more partial keys, each partial key uniquely identifies a respective set of the records and each record of the respective set comprises the each partial key, wherein the database server is configured to perform the updating of the database in an electrical power saving mode and in a standard electrical power consumption mode, wherein an electrical power consumption of the database server in the electrical power saving mode is lower than an electrical power consumption of the database server in the standard electrical power consumption mode, wherein a bulk updating of the database is performed in the electrical power saving mode and a discrete updating of the database is performed in the normal electrical power consumption mode, the computer-implemented method, comprising:
• switching the database server into the electrical power saving mode (220);
• causing the processing unit to perform the bulk updating of the database (221), wherein the causing of the processing unit to perform the bulk updating of the database comprises:
- generating a data cache in a memory of the processing unit, wherein each record stored in the data cache has a respective unique physical address in the memory (239);
- in response to receiving from the end terminal an insert by primary key operation (222) of inserting of a record to be added to the database on the database performing the following:
∘ storing the record to be added in the data cache (225); and
∘ storing in mapping tables a physical address of the record to be added and a primary key of the record to be added associated with each other (230), wherein the record to be added is inserted into the database when an update of the database is determined to be necessary (235);
- in response to receiving from the end terminal an update by primary key operation (223) on a record to be updated in the database performing the following:
▪ in a cache miss case (226) when the mapping tables do not comprise the primary key specified in the update by primary key operation performing the following:
• executing an upload by primary key operation that uploads the record to be updated into the data cache from the database (227); and
• storing in the mapping tables a physical address of the uploaded record and the primary key of the up-loaded record associated with each other (232);
▪ executing the update by primary key operation (231) on the record in the data cache stored at the physical address associated in the mapping tables with the primary key specified in the update by primary key operation, wherein in a case when the update by primary key operation comprises updating of the primary key of the record to be updated (226) the update by primary key operation on the record in the data cache stored at the physical address associated in the mapping tables with the primary key specified in the update by primary key operation comprises updating the primary key of the record to be updated in the mapping tables, wherein the record to be updated is updated in the database when the update of the database is determined to be necessary (235);
- in response to receiving from the end terminal an update by partial key operation (224) on all records to be updated in the database comprising a partial key specified in the update by partial key operation performing the following:
▪ in a cache miss case (228) when the mapping tables do not comprise the partial key specified in the update by partial key operation performing the following:
• executing an upload by partial key operation (229) that uploads all records to be updated comprising the partial key specified in the update by partial key operation into the data cache from the database; and
• storing in the mapping tables all physical addresses, all primary keys and the partial key of the all upload-ed records comprising the partial key specified in the upload by partial key operation (229), wherein the physical address of each uploaded record comprising the partial key specified in the upload by partial key operation, the respective primary key of the each up-loaded record comprising the partial key specified in the upload by partial key operation and the partial key of the each uploaded record comprising the partial key specified in the upload by partial key operation are associated with each other in the mapping tables;
▪ executing the update by partial key operation (233) on all records in the data cache stored at the respective physical addresses associated in the mapping tables with the partial key specified in the update by partial key operation, wherein in a case when the update by partial key operation comprises updating of one or more primary keys of one or more respective records to be updated comprising the partial key specified in the update by partial key operation the executing of the update by partial key operation on all records in the data cache stored at the respective physical addresses associated in the mapping tables with the partial key specified in the update by partial key operation comprises updating the one or more respective primary keys in the mapping tables, wherein in a case when the update by partial key operation comprises updating of the partial key of the all records to be updated comprising the partial key specified in the update by the partial key operation the executing of the update by partial key operation on all records in the data cache stored at the respective physical addresses associated in the mapping tables with the partial key specified in the update by partial key operation comprises updating the partial key specified in the update by partial key operation in the mapping tables, wherein the all records to be updated are updated in the database when the update of the database is determined to be necessary (235); and
- in the case when the update of the database is determined to be necessary (235) executing a bulk write operation (237) that writes all records in the data cache to the database;
and
wherein the update of the database is determined to be necessary when an overall number of the data rows in the data cache exceeds a first threshold value;
• switching the end terminal into the standard electrical power consumption mode (236); and
• causing the processing unit to perform the discrete updating of the database (240), wherein the causing of the processing unit to perform the discrete updating of the database comprises:
- in response to receiving form the end terminal the insert by primary key operation of inserting of the record to be added to the database on the database executing the insert by primary key operation of inserting of the record to be added to the database on the database (222);
- in response to receiving form the end terminal the update by partial key operation of all records to be updated comprising the partial key specified in the update by partial key operation on the database executing the update by partial key operation of all records to be updated comprising the partial key specified in the update by partial key operation on the database (224); and
- in response to receiving form the end terminal the update by primary key operation of the record to be updated comprising the primary key specified in the update by partial key operation on the database executing the update by primary key operation of the record to be updated comprising the primary key specified in the update by partial key operation on the database (223).

10. The computer-implemented method of claim 9, wherein the processing unit comprises a microprocessor and the memory of the processing unit comprises a level 2 (L2) (154) cache of the microprocessor and a level 3 (L3) cache of the microprocessor, wherein the mapping tables (158) are allocated in the L2 cache and the data cache is generated in the L3 cache (172).

11. A computer readable medium having stored there on a computer executable code for execution by a processing unit (159) controlling a database server (167), wherein execution of the instructions of the executable code causes the processing unit to execute a computer-implemented method of updating of a database, wherein the updating of the database is operated by an end terminal, wherein the database server comprises the database and the processing unit, wherein the database comprises records, each record comprises a respective primary key uniquely identifying the each record in the database, each of at least a portion of the records comprises one or more partial keys, each partial key uniquely identifies a respective set of the records and each record of the respective set comprises the each partial key, wherein the database server is configured to perform the updating of the database in an electrical power saving mode and in a standard electrical power consumption mode, wherein an electrical power consumption of the database server in the electrical power saving mode is lower than an electrical power consumption of the database server in the standard electrical power consumption mode, wherein a bulk updating of the database is performed in the electrical power saving mode and a discrete updating of the database is performed in the normal electrical power consumption mode, the computer-implemented method, comprising:
• switching the database server into the electrical power saving mode (220);
• causing the processing unit to perform the bulk updating of the database (221), wherein the causing of the processing unit to perform the bulk updating of the database comprises:
- generating a data cache in a memory of the processing unit, wherein each record stored in the data cache has a respective unique physical address in the memory (239);
- in response to receiving from the end terminal an insert by primary key operation (222) of inserting of a record to be added to the database on the database performing the following:
o storing the record to be added in the data cache (225); and
o storing in mapping tables a physical address of the record to be added and a primary key of the record to be added associated with each other (230), wherein the record to be added is inserted into the database when an update of the database is determined to be necessary;
- in response to receiving from the end terminal an update by primary key operation (223) on a record to be updated in the database performing the following:
▪ in a cache miss case (226) when the mapping tables do not comprise the primary key specified in the update by primary key operation performing the following:
• executing an upload by primary key operation that uploads the record to be updated into the data cache from the database (227); and
• storing in the mapping tables a physical address of the uploaded record and the primary key of the uploaded record associated with each other (232);
▪ executing the update by primary key operation (231) on the record in the data cache stored at the physical address associated in the mapping tables with the primary key specified in the update by primary key operation, wherein in a case when the update by primary key operation comprises updating of the primary key of the record to be updated (226) the update by primary key operation on the record in the data cache stored at the physical address associated in the mapping tables with the primary key specified in the update by primary key operation comprises updating the primary key of the record to be updated in the mapping tables, wherein the record to be updated is updated in the database when the update of the database is determined to be necessary (235);
- in response to receiving from the end terminal an update by partial key operation (224) on all records to be updated in the database comprising a partial key specified in the update by partial key operation performing the following:
▪ in a cache miss case (228) when the mapping tables do not comprise the partial key specified in the update by partial key operation performing the following:
• executing an upload by partial key operation (229) that uploads all records to be updated comprising the partial key specified in the update by partial key operation into the data cache from the database; and
• storing in the mapping tables all physical addresses, all primary keys and the partial key of the all upload-ed records comprising the partial key specified in the upload by partial key operation (229), wherein the physical address of each uploaded record comprising the partial key specified in the upload by partial key operation, the respective primary key of the each uploaded record comprising the partial key specified in the upload by partial key operation and the partial key of the each uploaded record comprising the partial key specified in the upload by partial key operation are associated with each other in the mapping tables;
▪ executing the update by partial key operation (233) on all records in the data cache stored at the respective physical addresses associated in the mapping tables with the partial key specified in the update by partial key operation, wherein in a case when the update by partial key operation comprises updating of one or more primary keys of one or more respective records to be updated comprising the partial key specified in the update by partial key operation the executing of the update by partial key operation on all records in the data cache stored at the respective physical addresses associated in the mapping tables with the partial key specified in the update by partial key operation comprises updating the one or more respective primary keys in the mapping tables, wherein in a case when the update by partial key operation comprises updating of the partial key of the all records to be updated comprising the partial key specified in the update by the partial key operation the executing of the update by partial key operation on all records in the data cache stored at the respective physical addresses associated in the mapping tables with the partial key specified in the update by partial key operation comprises updating the partial key specified in the update by partial key operation in the mapping tables, wherein the all records to be updated are updated in the database when the update of the database is determined to be necessary (235); and
- in the case when the update of the database is determined to be necessary (235) executing a bulk write operation that writes all records in the data cache to the database;
and
wherein the update of the database is determined to be necessary when an overall number of the data rows in the data cache exceeds a first threshold value;
• switching the database server into the standard electrical power consumption mode (236); and
• causing the processing unit to perform the discrete updating of the database (240), wherein the causing of the processing unit to perform the discrete updating of the database comprises:
- in response to receiving form the end terminal the insert by primary key operation of inserting of the record to be added to the database on the database executing the insert by primary key operation of inserting of the record to be added to the database on the database (222);
- in response to receiving form the end terminal the update by partial key operation of all records to be updated comprising the partial key specified in the update by partial key operation on the database executing the update by partial key operation of all records to be updated comprising the partial key specified in the update by partial key operation on the database (224); and
- in response to receiving form the end terminal the update by primary key operation of the record to be updated comprising the primary key specified in the update by partial key on the database operation executing the update by primary key operation of the record to be updated comprising the primary key specified in the update by partial key operation on the database (223).

12. A computer readable medium having stored there on a computer executable code for execution by a processing unit (159) controlling an end terminal (170), wherein execution of the instructions of the executable code causes the processing unit to execute a computer-implemented method of updating of a database (128) using the end terminal comprising the processing unit, wherein the database comprises records, each record comprises a respective primary key uniquely identifying the each record in the database, each of at least a portion of records comprises one or more partial keys, each partial key uniquely identifies a respective set of the records and each record of the respective set comprises the each partial key,, wherein the end terminal is configured to perform the updating of the database in an electrical power saving mode and in a standard electrical power consumption mode, wherein an electrical power consumption of the end terminal in the electrical power saving mode is lower than an electrical power consumption of the end terminal in the standard electrical power consumption mode, wherein a bulk updating of the database is performed in the electrical power saving mode and a discrete updating of the database is performed in the normal electrical power consumption mode, the computer-implemented method, comprising:
• switching the end terminal into the electrical power saving mode (220);
• causing the processing unit to perform the bulk updating of the database (221), wherein the causing of the processing unit to perform the bulk updating of the database comprises:
- generating a data cache in a memory of the processing unit, wherein each record stored in the data cache has a respective unique physical address in the memory (239);
- in response to receiving an insert by primary key operation (222)of inserting of a record to be added to the database on the database performing the following:
o storing the record to be added in the data cache (225); and
o storing in mapping tables a physical address of the record to be added and a primary key of the record to be added associated with each other (230), wherein the record to be added is inserted into the database when an update of the database is determined to be necessary (235);
- in response to receiving an update by primary key operation (223) on a record to be updated in the database performing the following:
▪ in a cache miss case (226) when the mapping tables do not comprise the primary key specified in the update by primary key operation performing the following:
• executing an upload by primary key operation that uploads the record to be updated into the data cache from the database (227); and
• storing in the mapping tables a physical address of the uploaded record and the primary key of the uploaded record associated with each other (232);
▪ executing the update by primary key operation (231) on the record in the data cache stored at the physical address associated in the mapping tables with the primary key specified in the update by primary key operation, wherein in a case when the update by primary key operation comprises updating of the primary key of the record to be updated (226) the update by primary key operation on the record in the data cache stored at the physical address associated in the mapping tables with the primary key specified in the update by primary key operation comprises updating the primary key of the record to be updated in the mapping tables, wherein the record to be updated is updated in the database when the update of the database is determined to be necessary (235);
- in response to receiving an update by partial key operation (224) on all records to be updated in the database comprising a partial key specified in the update by partial key operation performing the following:
▪ in a cache miss case (228) when the mapping tables do not comprise the partial key specified in the update by partial key operation performing the following:
• executing an upload by partial key operation (229) that uploads all records to be updated comprising the partial key specified in the update by partial key operation into the data cache from the database; and
• storing in the mapping tables all physical addresses, all primary keys and the partial key of the all uploaded records comprising the partial key specified in the upload by partial key operation (229), wherein the physical address of each uploaded record comprising the partial key specified in the upload by partial key operation, the respective primary key of the each uploaded record comprising the partial key specified in the upload by partial key operation and the partial key of the each uploaded record comprising the partial key specified in the upload by partial key operation are associated with each other in the mapping tables;
▪ executing the update by partial key operation (233) on all records in the data cache stored at the respective physical addresses associated in the mapping tables with the partial key specified in the update by partial key operation, wherein in a case when the update by partial key operation comprises updating of one or more primary keys of one or more respective records to be updated comprising the partial key specified in the update by partial key operation the executing of the update by partial key operation on all records in the data cache stored at the respective physical addresses associated in the mapping tables with the partial key specified in the update by partial key operation comprises updating the one or more respective primary keys in the mapping tables, wherein in a case when the update by partial key operation comprises updating of the partial key of the all records to be updated comprising the partial key specified in the update by the partial key operation the executing of the update by partial key operation on all records in the data cache stored at the respective physical addresses associated in the mapping tables with the partial key specified in the update by partial key operation comprises updating the partial key specified in the update by partial key operation in the mapping tables, wherein the all records to be updated are updated in the database when the update of the database is determined to be necessary (235); and
- in the case when the update of the database is determined to be necessary (235) executing a bulk write operation that writes all records in the data cache to the database;
and
wherein the update of the database is determined to be necessary when an overall number of the data rows in the data cache exceeds a first threshold value;
• switching the end terminal into the standard electrical power consumption mode (236); and
• causing the processing unit to perform the discrete updating of the database (240), wherein the causing of the processing unit to perform the discrete updating of the database comprises:
- executing the insert by primary key operation of inserting of the record to be added to the database on the database (222);
- executing the update by partial key operation of all records to be updated comprising the partial key specified in the update by partial key operation on the database (224); and
- executing the update by primary key operation of the record to be updated comprising the primary key specified in the update by partial key operation on the database (223).

13. A database server (167) configured to perform updating of a database (128) in an electrical power saving mode and in a standard electrical power consumption mode, wherein the updating of the database is operated by an end terminal (170), wherein the database server comprises the database and the processing unit (159), wherein the database comprises records, each record comprises a respective primary key uniquely identifying the each record in the database, each of at least a portion of the records comprises one or more partial keys, each partial key uniquely identifies a respective set of the records and each record of the respective set comprises the each partial key, wherein an electrical power consumption of the database server in the electrical power saving mode is lower than an electrical power consumption of the database server in the standard electrical power consumption mode, wherein a bulk updating of the database is performed in the electrical power saving mode and a discrete updating of the database is performed in the normal electrical power consumption mode, the processing unit is configured to perform the following:
• switching the database server into the electrical power saving mode (220);
• causing the database server to perform the bulk updating of the database (221), wherein the causing of the database server to perform the bulk updating of the database comprises:
- generating a data cache in a memory of the processing unit, wherein each record stored in the data cache has a respective unique physical address in the memory (239);
- in response to receiving from the end terminal an insert by primary key operation (222) of inserting of a record to be added to the database on the database performing the following:
o storing the record to be added in the data cache (225); and
o storing in mapping tables a physical address of the record to be added and a primary key of the record to be added associated with each other (230), wherein the record to be added is inserted into the database when an update of the database is determined to be necessary (235)
- in response to receiving from the end terminal an update by primary key operation (223) on a record to be updated in the database performing the following:
▪ in a cache miss case (226) when the mapping tables do not comprise the primary key specified in the update by primary key operation performing the following:
• executing an upload by primary key operation that uploads the record to be updated into the data cache from the database (227); and
• storing in the mapping tables a physical address of the uploaded record and the primary key of the uploaded record associated with each other (232);
▪ executing the update by primary key operation (231) on the record in the data cache stored at the physical address associated in the mapping tables with the primary key specified in the update by primary key operation, wherein in a case when the update by primary key operation comprises updating of the primary key of the record to be updated (226) the update by primary key operation on the record in the data cache stored at the physical address associated in the mapping tables with the primary key specified in the update by primary key operation comprises updating the primary key of the record to be updated in the mapping tables, wherein the record to be updated is updated in the database when the update of the database is determined to be necessary (235);
- in response to receiving from the end terminal an update by partial key operation (224) on all records to be updated in the database comprising a partial key specified in the update by partial key operation performing the following:
▪ in a cache miss case (228) when the mapping tables do not comprise the partial key specified in the update by partial key operation performing the following:
• executing an upload by partial key operation (229) that uploads the all records to be updated comprising the partial key specified in the update by partial key operation into the data cache from the database; and
• storing in the mapping tables all physical addresses, all primary keys and the partial key of the all uploaded records comprising the partial key specified in the upload by partial key operation (229), wherein the physical address of each uploaded record comprising the partial key specified in the upload by partial key operation, the respective primary key of the each uploaded record comprising the partial key specified in the upload by partial key operation and the partial key of the each uploaded record comprising the partial key specified in the upload by partial key operation are associated with each other in the mapping tables;
▪ executing the update by partial key operation (233) on the all records in the data cache stored at the respective physical addresses associated in the mapping tables with the partial key specified in the update by partial key operation, wherein in a case when the update by partial key operation comprises updating of one or more primary keys of one or more respective records to be updated comprising the partial key specified in the update by partial key operation the executing of the update by partial key operation on the all records in the data cache stored at the respective physical addresses associated in the mapping tables with the partial key specified in the update by partial key operation comprises updating the one or more respective primary keys in the mapping tables, wherein in a case when the update by partial key operation comprises updating of the partial key of the all records to be updated comprising the partial key specified in the update by the partial key operation the executing of the update by partial key operation on the all records in the data cache stored at the respective physical addresses associated in the mapping tables with the partial key specified in the update by partial key operation comprises updating the partial key specified in the update by partial key operation in the mapping tables, wherein the all records to be updated are updated in the database when the update of the database is determined to be necessary (235); and
- in the case when the update of the database is determined to be necessary (235) executing a bulk write operation (237) that writes all records in the data cache to the database;
and
wherein the update of the database is determined to be necessary when an overall number of the data rows in the data cache exceeds a first threshold value;
• switching the database server into the standard electrical power consumption mode (236); and
• causing the database server to perform the discrete updating of the database (240), wherein the causing of the database server to perform the discrete updating of the database comprises:
- in response to receiving form the end terminal the insert by primary key operation of inserting of the record to be added to the database on the database executing the insert by primary key operation of inserting of the record to be added to the database on the database (222);
- in response to receiving form the end terminal the update by partial key operation of all records to be updated comprising the partial key specified in the update by partial key operation on the database executing the update by partial key operation of all records to be updated comprising the partial key specified in the update by partial key operation on the database (224); and
- in response to receiving form the end terminal the update by primary key operation of the record to be updated comprising the primary key specified in the update by partial key on the database operation executing the update by primary key operation of the record to be updated comprising the primary key specified in the update by partial key operation on the database (223).

14. An end terminal (170) configured to perform updating of a database (128) in an electrical power saving mode and in a standard electrical power consumption mode, wherein the end terminal comprises the processing unit (156), wherein the database comprises records, each record comprises a respective primary key uniquely identifying the each record in the database, each of at least a portion of records comprises one or more partial keys, each partial key uniquely identifies a respective set of the records and each record of the respective set comprises the each partial key, wherein an electrical power consumption of the end terminal in the electrical power saving mode is lower than an electrical power consumption of the end terminal in the standard electrical power consumption mode, wherein a bulk updating of the database is performed in the electrical power saving mode and a discrete updating of the database is performed in the normal electrical power consumption mode, the processing unit is configured to cause the end terminal to perform the following:
• switching the end terminal into the electrical power saving mode (220);
• causing the end terminal to perform the bulk updating of the database (221), wherein the causing of the end terminal to perform the bulk updating of the database comprises:
- generating a data cache in a memory of the processing unit, wherein each record stored in the data cache has a respective unique physical address in the memory (239);
- in response to receiving an insert by primary key operation (222) of inserting of a record to be added to the database on the database performing the following:
o storing the record to be added in the data cache (225); and
o storing in mapping tables a physical address of the record to be added and a primary key of the record to be added associated with each other (230), wherein the record to be added is inserted into the database when an update of the database is determined to be necessary;
- in response to receiving an update by primary key operation (223) on a record to be updated in the database performing the following:
▪ in a cache miss case (226) when the mapping tables do not comprise the primary key specified in the update by primary key operation performing the following:
• executing an upload by primary key operation that uploads the record to be updated into the data cache from the database (227); and
• storing in the mapping tables a physical address of the uploaded record and the primary key of the uploaded record associated with each other (232);
▪ executing the update by primary key operation (231) on the record in the data cache stored at the physical address associated in the mapping tables with the primary key specified in the update by primary key operation, wherein in a case when the update by primary key operation comprises updating of the primary key of the record to be updated (226) the update by primary key operation on the record in the data cache stored at the physical address associated in the mapping tables with the primary key specified in the update by primary key operation comprises updating the primary key of the record to be updated in the mapping tables, wherein the record to be updated is updated in the database when the update of the database is determined to be necessary (235);
- in response to receiving an update by partial key operation (224) on all records to be updated in the database comprising a partial key specified in the update by partial key operation performing the following:
▪ in a cache miss case (228) when the mapping tables do not comprise the partial key specified in the update by partial key operation performing the following:
• executing an upload by partial key operation (229) that uploads the all records to be updated comprising the partial key specified in the update by partial key operation into the data cache from the database; and
• storing in the mapping tables all physical addresses, all primary keys and the partial key of the all uploaded records comprising the partial key specified in the upload by partial key operation (229), wherein the physical address of each uploaded record comprising the partial key specified in the upload by partial key operation, the respective primary key of the each uploaded record comprising the partial key specified in the upload by partial key operation and the partial key of the each uploaded record comprising the partial key specified in the upload by partial key operation are associated with each other in the mapping tables;
▪ executing the update by partial key operation (233) on the all records in the data cache stored at the respective physical addresses associated in the mapping tables with the partial key specified in the update by partial key operation, wherein in a case when the update by partial key operation comprises updating of one or more primary keys of one or more respective records to be updated comprising the partial key specified in the update by partial key operation the executing of the update by partial key operation on the all records in the data cache stored at the respective physical addresses associated in the mapping tables with the partial key specified in the update by partial key operation comprises updating the one or more respective primary keys in the mapping tables, wherein in a case when the update by partial key operation comprises updating of the partial key of the all records to be updated comprising the partial key specified in the update by the partial key operation the executing of the update by partial key operation on the all records in the data cache stored at the respective physical addresses associated in the mapping tables with the partial key specified in the update by partial key operation comprises updating the partial key specified in the update by partial key operation in the mapping tables, wherein the all records to be updated are updated in the database when the update of the database is determined to be necessary (235); and
- in the case when the update of the database is determined to be necessary (235) executing a bulk write operation that writes all records in the data cache to the database;
and
wherein the update of the database is determined to be necessary when an overall number of the data rows in the data cache exceeds a first threshold value;
• switching the end terminal into the standard electrical power consumption mode (236); and
• causing the end terminal to perform the discrete updating of the database (240), wherein the causing of the end terminal to perform the discrete updating of the database comprises:
- executing the insert by primary key operation of inserting of the record to be added to the database on the database (222);
- executing the update by partial key operation of all records to be updated comprising the partial key specified in the update by partial key operation on the database (224); and
- executing the update by primary key operation of the record to be updated comprising the primary key specified in the update by partial key operation on the database (223).

## Patentansprüche

1. Computerimplementiertes Verfahren zum Aktualisieren einer Datenbank (218) unter Verwendung eines Endgeräts (170), das eine Verarbeitungseinheit (156) aufweist, wobei die Datenbank Datensätze aufweist, jeder Datensatz einen jeweiligen Hauptschlüssel aufweist, der den jeweiligen Datensatz in der Datenbank eindeutig kennzeichnet, wenigstens ein Teil der Datensätze jeweils einen oder mehr Teilschlüssel aufweist, jeder Teilschlüssel eine jeweilige Menge der Datensätze eindeutig kennzeichnet und jeder Datensatz der jeweiligen Menge den jeden Teilschlüssel aufweist, wobei das Endgerät zum Durchführen der Aktualisierung der Datenbank in einem elektrischen Energiesparmodus und in einem normalen elektrischen Energieverbrauchsmodus konfiguriert ist, wobei ein elektrischer Energieverbrauch des Endgeräts in dem elektrischen Energiesparmodus niedriger ist als ein elektrischer Energieverbrauch des Endgeräts in dem normalen elektrischen Energieverbrauchsmodus, wobei eine Massenaktualisierung der Datenbank im elektrischen Energiesparmodus durchgeführt wird und eine diskrete Aktualisierung der Datenbank in dem normalen elektrischen Energieverbrauchsmodus durchgeführt wird, wobei das computerimplementierte Verfahren aufweist:
• Umschalten des Endgeräts in den elektrischen Energiesparmodus (220);
• Veranlassen der Verarbeitungseinheit zum Durchführen der Massenaktualisierung der Datenbank (221), wobei das Veranlassen der Verarbeitungseinheit zum Durchführen der Massenaktualisierung der Datenbank Folgendes aufweist:
- Generieren eines Datencaches in einem Speicher der Verarbeitungseinheit, wobei jeder in dem Datencache gespeicherte Datensatz eine jeweilige eindeutige physikalische Adresse in dem Speicher (239) hat;
- Durchführen des Folgenden als Reaktion auf den Erhalt einer Einfügungdurch-Hauptschlüssel-Operation (222) des Einfügens eines zur Datenbank hinzuzufügenden Datensatzes an der Datenbank:
o Speichern des hinzuzufügenden Datensatzes im Datencache (225) und
o Speichern einer physikalischen Adresse des hinzuzufügenden Datensatzes und eines Hauptschlüssels des hinzuzufügenden Datensatzes, die einander zugeordnet sind (230), in Abbildungstabellen, wobei der hinzuzufügende Datensatz in die Datenbank eingefügt wird, wenn eine Aktualisierung der Datenbank als notwendig ermittelt wird (235);
- Durchführen des Folgenden als Reaktion auf den Erhalt einer Aktualisierungdurch-Hauptschlüssel-Operation (223) an einem zu aktualisierenden Datensatzes an der Datenbank:
▪ Durchführen des Folgenden in einem Cache-Miss-Fall (226), wenn die Abbildungstabellen den in der Aktualisierung-durch-HauptschlüsselOperation vorgegebenen Hauptschlüssel nicht aufweisen:
• Ausführen einer Hochladen-durch-Hauptschlüssel-Operation, die den zu aktualisierenden Datensatz von der Datenbank in den Datencache hochlädt (227), und
• Speichern einer physikalischen Adresse des hochgeladenen Datensatzes und des Hauptschlüssels des hochgeladenen Datensatzes, die einander zugeordnet sind, in den Abbildungstabellen (232);
▪ Ausführen der Aktualisierung-durch-Hauptschlüssel-Operation (231) an dem Datensatz im Datencache, der an der physikalischen Adresse gespeichert ist, die in den Abbildungstabellen dem Hauptschlüssel zugeordnet ist, der in der Aktualisierung-durch-Hauptschlüssel-Operation vorgegeben wird, wobei in einem Fall, wenn die Aktualisierung-durch-Hauptschlüssel-Operation das Aktualisieren des Hauptschlüssels des zu aktualisierenden Datensatzes aufweist (226), die Aktualisierung-durch-Hauptschlüssel-Operation an dem Datensatz in dem Datencache, der an der physikalischen Adresse gespeichert ist, die in den Abbildungstabellen dem Hauptschlüssel zugeordnet ist, der in der Aktualisierung-durch-Hauptschlüssel-Operation vorgegeben wird, das Aktualisieren des Hauptschlüssels des zu aktualisierenden Datensatzes in den Abbildungstabellen aufweist, wobei der zu aktualisierende Datensatz in der Datenbank aktualisiert wird, wenn die Aktualisierung der Datenbank als notwendig ermittelt wird (235);
- Durchführen des Folgenden als Reaktion auf den Erhalt einer Aktualisierungdurch-Teilschlüssel-Operation (224) an allen zu aktualisierenden Datensätzen in der Datenbank, die einen Teilschlüssel aufweisen, der in der Aktualisierungdurch-Teilschlüssel-Operation vorgegeben wird:
▪ Durchführen des Folgenden in einem Cache-Miss-Fall (228), wenn die Abbildungstabellen den in der Aktualisierung-durch-Teilschlüssel-Operation vorgegebenen Teilschlüssel nicht aufweisen:
• Ausführen einer Hochladen-durch-Teilschlüssel-Operation (229), die die alle zu aktualisierenden Datensätze, die den in der Aktualisierung-durch-Teilschlüssel-Operation vorgegebenen Teilschlüssel aufweisen, von der Datenbank in den Datencache hochlädt, und
• Speichern aller physikalischen Adressen, aller Hauptschlüssel und des Teilschlüssels der allen hochgeladenen Datensätze, die den in der Aktualisierung-durch-Teilschlüssel-Operation (229) vorgegebenen Teilschlüssel aufweisen, in den Abbildungstabellen, wobei die physikalische Adresse jedes hochgeladenen Datensatzes, die den in der Hochladen-durch-Teilschlüssel-Operation vorgegebenen Teilschlüssel aufweist, der jeweilige Hauptschlüssel des jeden hochgeladenen Datensatzes, der den in der Hochladen-durch-Teilschlüssel-Operation vorgegebenen Teilschlüssel aufweist, und der Teilschlüssel des jeden hochgeladenen Datensatzes, der den in der Hochladen-durch-Teilschlüssel-Operation vorgegebenen Teilschlüssel aufweist, in den Abbildungstabellen einander zugeordnet sind;
▪ Ausführen der Aktualisierung-durch-Teilschlüssel-Operation (233) an allen Datensätzen im Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, wobei in einem Fall, wenn die Aktualisierung-durch-Teilschlüssel-Operation das Aktualisieren von einem oder mehr Hauptschlüsseln von einem oder mehr jeweiligen zu aktualisierenden Datensätzen aufweist, die den in der Aktualisierungdurch-Teilschlüssel-Operation vorgegebenen Teilschlüssel aufweisen, das Ausführen der Aktualisierung-durch-Teilschlüssel-Operation an allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des einen oder der mehr jeweiligen Hauptschlüssel in den Abbildungstabellen aufweist, wobei in einem Fall, wenn die Aktualisierung-durch-Teilschlüssel-Operation das Aktualisieren des Teilschlüssels der allen zu aktualisierenden Datensätze aufweist, die den in der Aktualisierung-durch-Teilschlüssel-Operation vorgegebenen Teilschlüssel aufweisen, das Ausführen der Aktualisierung-durch-Teilschlüssel-Operation an allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des in der Aktualisierung-durch-Teilschlüssel-Operation vorgegebenen Teilschlüssels in den Abbildungstabellen aufweist, wobei die alle zu aktualisierenden Datensätze in der Datenbank aktualisiert werden, wenn die Aktualisierung der Datenbank als notwendig ermittelt wird (235); und
- in dem Fall, wenn die Aktualisierung der Datenbank als notwendig ermittelt wird (235), Ausführen einer Massenschreiboperation (237), die alle Datensätze im Datencache in die Datenbank schreibt;
und
wobei die Aktualisierung der Datenbank als notwendig ermittelt wird, wenn eine Gesamtzahl der Datenzeilen in dem Datencache einen ersten Schwellenwert übersteigt;
• Umschalten des Endgeräts in den normalen elektrischen Energieverbrauchsmodus (236) und
• Veranlassen der Verarbeitungseinheit zum Durchführen des diskreten Aktualisierens der Datenbank (240), wobei das Veranlassen der Verarbeitungseinheit zum Durchführen des diskreten Aktualisierens der Datenbank Folgendes aufweist:
- Ausführen der Einfügung-durch-Hauptschlüssel-Operation des Einfügens des zur Datenbank hinzuzufügenden Datensatzes an der Datenbank (222);
- Ausführen der Aktualisierung-durch-Teilschlüssel-Operation aller zu aktualisierenden Datensätze, die den in der Aktualisierung-durch-Teilschlüssel-Operation vorgegebenen Teilschlüssel aufweisen, an der Datenbank (224) und
- Ausführen der Aktualisierung-durch-Hauptschlüssel-Operation des zu aktualisierenden Datensatzes, der den in der Aktualisierung-durch-Teilschlüssel-Operation vorgegebenen Hauptschlüssel aufweist, an der Datenbank (223).

2. Computerimplementiertes Verfahren nach Anspruch 1, wobei die Verarbeitungseinheit einen Mikroprozessor aufweist und der Speicher der Verarbeitungseinheit einen Level-2-(L2) -Cache (154) des Mikroprozessors und einen Level-3- (L3) -Cache des Mikroprozessors aufweist, wobei die Abbildungstabellen (158) im L2-Cache alloziert werden und der Datencache im L3-Cache (172) generiert wird.

3. Computerimplementiertes Verfahren nach Anspruch 2, wobei der Mikroprozessor in einem Mikroprozessor-Energiesparmodus betrieben wird, wenn das Endgerät in den elektrischen Energiesparmodus geschaltet wird, wobei der Mikroprozessor in einem normalen Mikroprozessor-Energieverbrauchsmodus betrieben wird, wenn das Endgerät in den normalen Energieverbrauchsmodus geschaltet wird, wobei der Mikroprozessor mit der ersten Taktfrequenz betrieben wird, wenn der Mikroprozessor im Prozessor-Energiesparmodus betrieben wird, wobei der Mikroprozessor mit der zweiten Taktfrequenz betrieben wird, wenn der Mikroprozessor im normalen Mikroprozessor-Energieverbrauchsmodus betrieben wird, wobei die zweite Taktfrequenz höher als die erste Taktfrequenz ist.

4. Computerimplementiertes Verfahren nach einem der vorhergehenden Ansprüche, wobei die Datenbank eine In-Memory-Datenbank umfasst.

5. Computerimplementiertes Verfahren nach einem der vorhergehenden Ansprüche, wobei ein fernes Endgerät die Datenbank aufweist, wobei das ferne Endgerät über ein digitales Telekommunikations-Mobilfunknetz (169) kommunikativ mit dem Endgerät gekoppelt ist, wobei die Hochladen-durch-Hauptschlüssel-Operationen, die Einfügung-durch-Hauptschlüssel-Operationen, die Massenschreiboperationen, die Hochladen-durch-Teilschlüssel-Operationen, die Aktualisierung-durch-Hauptschlüssel-Operationen und die Aktualisierung-durch-Teilschlüssel-Operationen über das digitale Telekommunikations-Mobilfunknetz durchgeführt werden, wobei das Endgerät ferner ein drahtloses Endgerät (158) umfasst, das zum kommunikativen Koppeln des Endgeräts über das digitale Telekommunikations-Mobilfunknetz mit dem fernen Endgerät konfiguriert ist, wobei das drahtlose Endgerät standardmäßig in einem Ruhemodus und in einem Datenübertragungsmodus ist, wenn irgendeine der folgenden Operationen über das digitale Telekommunikations-Mobilfunknetz ausgeführt wird: die Aktualisierung-durch-Hauptschlüssel-Operation, die Einfügung-durch-Hauptschlüssel-Operation, die Massenschreiboperation, die Aktualisierung-durch-Teilschlüssel-Operation, die Aktualisierung-durch-Hauptschlüssel-Operation und die Aktualisierung-durch-Teilschlüssel-Operation, wobei ein elektrischer Energieverbrauch des drahtlosen Endgeräts im Ruhemodus niedriger ist als ein elektrischer Energieverbrauch des drahtlosen Endgeräts im Datenübertragungsmodus, wobei der elektrische Energieverbrauch des Endgeräts im elektrischen Energiesparmodus und im normalen elektrischen Energieverbrauchsmodus den elektrischen Energieverbrauch des drahtlosen Endgeräts im Ruhemodus umfasst, wenn das drahtlose Endgerät im Ruhemodus ist, und der elektrische Energieverbrauch des Endgeräts im elektrischen Energiesparmodus und im normalen elektrischen Energieverbrauchsmodus den elektrischen Energieverbrauch des drahtlosen Endgeräts im Datenübertragungsmodus aufweist, wenn das drahtlose Endgerät im Datenübertragungsmodus ist.

6. Computerimplementiertes Verfahren nach Anspruch 5, das ferner Folgendes aufweist:
nach dem Umschalten des Endgeräts in den elektrischen Energiesparmodus und vor dem Umschalten des Endgeräts in den normalen elektrischen Energieverbrauchsmodus Ausführen einer Massenhochladeoperation, die die Datenbank über das digitale Telekommunikations-Mobilfunknetz in einen Hauptspeicher des Endgeräts hochlädt, wobei im Schritt des computerimplementierten Verfahrens des Veranlassens der Verarbeitungseinheit zum Durchführen der Massenaktualisierung der Datenbank die Verarbeitungseinheit veranlasst wird, die Massenaktualisierung der in den Hauptspeicher hochgeladenen Datenbank durchzuführen.

7. Computerimplementiertes Verfahren nach einem der vorhergehenden Ansprüche 1 bis 4, wobei das Veranlassen der Verarbeitungseinheit zum Durchführen des diskreten Aktualisierens der Datenbank ferner Folgendes aufweist:
Ausführen einer Löschen-durch-Hauptschlüssel-Operation eines zu löschenden Datensatzes, der einen in der Löschen-durch-Hauptschlüssel-Operation vorgegebenen Hauptschlüssel aufweist, an der Datenbank und
Ausführen einer Löschen-durch-Teilschlüssel-Operation aller zu löschenden Datensätze, die einen in der Löschen-durch-Teilschlüssel-Operation vorgegebenen Teilschlüssel aufweisen, an der Datenbank;
wobei das Veranlassen der Verarbeitungseinheit zum Durchführen des Massenaktualisierens der Datenbank ferner Folgendes aufweist:
Durchführen des Folgenden als Reaktion auf den Erhalt der Löschen-durch-Hauptschlüssel-Operation des zu löschenden Datensatzes an der Datenbank:
in einem Fall, wenn der Datencache den zu löschenden Datensatz aufweist, Ausführen der Löschen-durch-Hauptschlüssel-Operation des zu löschenden Datensatzes am Datencache und Löschen einer physikalischen Adresse des zu löschenden Datensatzes und aller ihm zugeordneten Schlüssel in den Abbildungstabellen aus den Abbildungstabellen und
in einem Fall, wenn die Datenbank den zu löschenden Datensatz aufweist, Ausführen der Löschen-durch-Hauptschlüssel-Operation des zu löschenden Datensatzes, der den in der Löschen-durch-Hauptschlüssel-Operation vorgegebenen Hauptschlüssel aufweist, an der Datenbank und
Durchführen des Folgenden als Reaktion auf den Erhalt der Löschen-durch-Teilschlüssel-Operation der allen zu löschenden Datensätze, die den in der Löschendurch-Teilschlüssel-Operation vorgegebenen Teilschlüssel aufweisen, an der Datenbank:
in einem Fall, wenn der Datencache die alle zu löschenden Datensätze aufweist, die den in der Löschen-durch-Teilschlüssel-Operation vorgegebenen Teilschlüssel aufweisen, Ausführen der Löschen-durch-Teilschlüssel-Operation der allen zu löschenden Datensätze, die den in der Löschen-durch-Teilschlüssel-Operation vorgegebenen Teilschlüssel aufweisen, am Datencache und Löschen aller physikalischen Adressen der allen zu löschenden Datensätze, die den in der Löschen-durch-Teilschlüssel-Operation vorgegebenen Teilschlüssel und alle ihnen zugeordneten Teil- und Hauptschlüssel in den Abbildungstabellen aus den Abbildungstabellen aufweisen, und
in einem Fall, wenn die Datenbank die alle zu löschenden Datensätze aufweist, die den in der Löschen-durch-Teilschlüssel-Operation vorgegebenen Teilschlüssel aufweisen, Ausführen der Löschen-durch-Teilschlüssel-Operation der allen zu löschenden Datensätze, die den in der Löschen-durch-Teilschlüssel-Operation vorgegebenen Teilschlüssel aufweisen, an der Datenbank.

8. Computerimplementiertes Verfahren nach einem der vorhergehenden Ansprüche, wobei das Veranlassen der Verarbeitungseinheit zum Durchführen der Massenaktualisierung der Datenbank durch Ausführen einer transaktionalen Structured Query Language- (SQL)-Verarbeitung durchgeführt wird, wobei eine oder mehr Transaktionen der transaktionalen Verarbeitung wenigstens eine der folgenden ersten Operationen aufweisen: die Einfiigung-durch-Hauptschlüssel-Operation, die Aktualisierung-durch-Hauptschlüssel-Operation, die Aktualisierung-durch-Teilschlüssel-Operation, die Löschen-durch-Hauptschlüssel-Operation und die Löschen-durch-Teilschlüssel-Operation, wobei die Aktualisierung der Datenbank ferner in den folgenden Fällen als notwendig ermittelt wird: das Ausführen der einzelnen Transaktion, die die wenigstens eine der ersten Operationen aufweist, wird durchgeführt, bevor eine stapelweise Aktualisierungsoperation ausgeführt wird, die mehrere der Aktualisierungdurch-Hauptschlüssel-Operationen und/oder mehrere der Aktualisierung-durch-Teilschlüssel-Operationen aufweist, bevor eine stapelweise Löschoperation ausgeführt wird, die mehrere der Löschen-durch-Hauptschlüssel-Operationen und/oder mehrere der Löschen-durch-Teilschlüssel-Operationen aufweist, bevor eine allgemeine SQL-Abfrage an die Datenbank ausgeführt wird, bevor eine gespeicherte SQL-Prozedur an der Datenbank ausgeführt wird oder wenn ein Datenvolumen von Daten in den Abbildungstabellen einen zweiten Schwellenwert übersteigt.

9. Computerimplementiertes Verfahren zum Aktualisieren einer Datenbank (128) unter Verwendung eines Datenbankservers (167), der von einem Endgerät (170) betrieben wird, wobei ein Datenbankserver die Datenbank und eine Verarbeitungseinheit (159) aufweist, wobei die Datenbank Datensätze aufweist, jeder Datensatz einen jeweiligen Hauptschlüssel aufweist, der den jeden Datensatz in der Datenbank eindeutig kennzeichnet, wenigstens ein Teil der Datensätze jeweils einen oder mehr Teilschlüssel aufweist, jeder Teilschlüssel eine jeweilige Menge der Datensätze eindeutig kennzeichnet und jeder Datensatz der jeweiligen Menge den jeden Teilschlüssel aufweist, wobei der Datenbankserver zum Durchführen der Aktualisierung der Datenbank in einem elektrischen Energiesparmodus und in einem normalen elektrischen Energieverbrauchsmodus konfiguriert ist, wobei ein elektrischer Energieverbrauch des Datenbankservers in dem elektrischen Energiesparmodus niedriger ist als ein elektrischer Energieverbrauch des Datenbankservers in dem normalen elektrischen Energieverbrauchsmodus, wobei eine Massenaktualisierung der Datenbank im elektrischen Energiesparmodus durchgeführt wird und eine diskrete Aktualisierung der Datenbank in dem normalen elektrischen Energieverbrauchsmodus durchgeführt wird, wobei das computerimplementierte Verfahren aufweist:
• Umschalten des Datenbankservers in den elektrischen Energiesparmodus (220);
• Veranlassen der Verarbeitungseinheit zum Durchführen der Massenaktualisierung der Datenbank (221), wobei das Veranlassen der Verarbeitungseinheit zum Durchführen der Massenaktualisierung der Datenbank Folgendes aufweist:
- Generieren eines Datencaches in einem Speicher der Verarbeitungseinheit, wobei jeder in dem Datencache gespeicherte Datensatz eine jeweilige eindeutige physikalische Adresse in dem Speicher (239) hat;
- Durchführen des Folgenden als Reaktion auf den Erhalt einer Einfügung-durch-Hauptschlüssel-Operation (222) des Einfügens eines zur Datenbank hinzuzufügenden Datensatzes an der Datenbank von dem Endgerät:
o Speichern des hinzuzufügenden Datensatzes im Datencache (225) und
o Speichern einer physikalischen Adresse des hinzuzufügenden Datensatzes und eines Hauptschlüssels des hinzuzufügenden Datensatzes, die einander zugeordnet sind (230), in Abbildungstabellen, wobei der hinzuzufiigende Datensatz in die Datenbank eingefügt wird, wenn eine Aktualisierung der Datenbank als notwendig ermittelt wird (235);
- Durchführen des Folgenden als Reaktion auf den Erhalt einer Aktualisierung-durch-Hauptschlüssel-Operation (223) an einem zu aktualisierenden Datensatz in der Datenbank von dem Endgerät:
▪ Durchführen des Folgenden in einem Cache-Miss-Fall (226), wenn die Abbildungstabellen den in der Aktualisierung-durch-Hauptschlüssel-Operation vorgegebenen Hauptschlüssel nicht aufweisen:
• Ausführen einer Hochladen-durch-Hauptschlüssel-Operation, die den zu aktualisierenden Datensatz von der Datenbank in den Datencache hochlädt (227), und
• Speichern einer physikalischen Adresse des hochgeladenen Datensatzes und des Hauptschlüssels des hochgeladenen Datensatzes, die einander zugeordnet sind, in den Abbildungstabellen (232);
▪ Ausführen der Aktualisierung-durch-Hauptschlüssel-Operation (231) an dem Datensatz im Datencache, der an der physikalischen Adresse gespeichert ist, die in den Abbildungstabellen dem in der Aktualisierung-durch-Hauptschlüssel-Operation vorgegebenen Hauptschlüssel zugeordnet ist, wobei in einem Fall, wenn die Aktualisierung-durch-Hauptschlüssel-Operation das Aktualisieren des Hauptschlüssels des zu aktualisierenden Datensatzes aufweist (226), die Aktualisierung-durch-Hauptschlüssel-Operation an dem Datensatz in dem Datencache, der an der physikalischen Adresse gespeichert ist, die in den Abbildungstabellen dem in der Aktualisierung-durchHauptschlüssel-Operation vorgegebenen Hauptschlüssel zugeordnet ist, das Aktualisieren des Hauptschlüssels des zu aktualisierenden Datensatzes in den Abbildungstabellen aufweist, wobei der zu aktualisierende Datensatz in der Datenbank aktualisiert wird, wenn die Aktualisierung der Datenbank als notwendig ermittelt wird (235);
- Durchführen des Folgenden als Reaktion auf den Erhalt einer Aktualisierungdurch-Teilschlüssel-Operation (224) an allen zu aktualisierenden Datensätzen in der Datenbank, die einen Teilschlüssel aufweisen, der in der Aktualisierung-durch-Hauptschlüssel-Operation vorgegeben wird:
▪ Durchführen des Folgenden in einem Cache-Miss-Fall (228), wenn die Abbildungstabellen den in der Aktualisierung-durch-Teilschlüssel-Operation vorgegebenen Teilschlüssel nicht aufweisen:
• Ausführen einer Hochladen-durch-Teilschlüssel-Operation (229), die die alle zu aktualisierenden Datensätze, die den in der Aktualisierung-durch-Teilschlüssel-Operation vorgegebenen Teilschlüssel aufweisen, von der Datenbank in den Datencache hochlädt (227), und
• Speichern aller physikalischen Adressen, aller Hauptschlüssel und des Teilschlüssels der allen hochgeladenen Datensätze, die den in der Aktualisierung-durch-Teilschlüssel-Operation vorgegebenen Teilschlüssel aufweisen, (229), in den Abbildungstabellen, wobei die physikalische Adresse jedes hochgeladenen Datensatzes, der den in der Hochladen-durch-Teilschlüssel-Operation vorgegebenen Teilschlüssel aufweist, der jeweilige Hauptschlüssel des jeden hochgeladenen Datensatzes, der den in der Hochladen-durch-Teilschlüssel-Operation vorgegebenen Teilschlüssel aufweist, und der Teilschlüssel des jeden hochgeladenen Datensatzes, der den in der Hochladen-durch-Teilschlüssel-Operation vorgegebenen Teilschlüssel aufweist, einander in den Abbildungstabellen zugeordnet sind;
▪ Ausführen der Aktualisierung-durch-Teilschlüssel-Operation (233) an allen Datensätzen im Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, wobei in einem Fall, wenn die Aktualisierung-durch-Teilschlüssel-Operation das Aktualisieren von einem oder mehr Hauptschlüsseln von einem oder mehr jeweiligen zu aktualisierenden Datensätzen aufweist, die den in der Aktualisierungdurch-Teilschlüssel-Operation vorgegebenen Teilschlüssel aufweisen, das Ausführen der Aktualisierung-durch-Teilschlüssel-Operation an allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des einen oder der mehr jeweiligen Hauptschlüssel in den Abbildungstabellen aufweist, wobei in einem Fall, wenn die Aktualisierung-durch-Teilschlüssel-Operation das Aktualisieren des Teilschlüssels der allen zu aktualisierenden Datensätze aufweist, die den in der Aktualisierung-durch-Teilschlüssel-Operation vorgegebenen Teilschlüssel aufweisen, das Ausführen der Aktualisierung-durch-Teilschlüssel-Operation an allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des in der Aktualisierung-durch-Teilschlüssel-Operation vorgegebenen Teilschlüssels in den Abbildungstabellen aufweist, wobei die alle zu aktualisierenden Datensätze in der Datenbank aktualisiert werden, wenn die Aktualisierung der Datenbank als notwendig ermittelt wird (235); und
- in dem Fall, wenn die Aktualisierung der Datenbank als notwendig ermittelt wird (235), Ausführen einer Massenschreiboperation (237), die alle Datensätze im Datencache in die Datenbank schreibt;
und
wobei die Aktualisierung der Datenbank als notwendig ermittelt wird, wenn eine Gesamtzahl der Datenzeilen in dem Datencache einen ersten Schwellenwert übersteigt;
• Umschalten des Endgeräts in den normalen elektrischen Energieverbrauchsmodus (236) und
• Veranlassen der Verarbeitungseinheit zum Durchführen des diskreten Aktualisierens der Datenbank (240), wobei das Veranlassen der Verarbeitungseinheit zum Durchführen des diskreten Aktualisierens der Datenbank Folgendes aufweist:
- Ausführen, als Reaktion auf den Erhalt der Einfügung-durch-Hauptschlüssel-Operation des Einfügens des zur Datenbank hinzuzufügenden Datensatzes vom Endgerät an der Datenbank, der Einfügung-durch-Hauptschlüssel-Operation des Einfügens des zur Datenbank hinzuzufügenden Datensatzes an der Datenbank (222);
- Ausführen, als Reaktion auf den Erhalt der Aktualisierung-durch-Teilschlüssel-Operation aller zu aktualisierenden Datensätze, die den in der Aktualisierung-durch-Teilschlüssel-Operation vorgegebenen Teilschlüssel aufweisen, vom Endgerät an der Datenbank, der Aktualisierung-durch-Teilschlüssel-Operation aller zu aktualisierenden Datensätze, die den in der Aktualisierung-durch-Teilschlüssel-Operation vorgegebenen Teilschlüssel aufweisen, an der Datenbank (224) und
- Ausführen, als Reaktion auf den Erhalt der Aktualisierung-durch-Hauptschlüssel-Operation des zu aktualisierenden Datensatzes, der den in der Aktualisierung-durch-Teilschlüssel-Operation vorgegebenen Hauptschlüssel aufweist, vom Endgerät an der Datenbank, der Aktualisierung-durch-Hauptschlüssel-Operation des zu aktualisierenden Datensatzes, der den in der Aktualisierung-durch-Teilschlüssel-Operation vorgegebenen Hauptschlüssel aufweist, an der Datenbank (223).

10. Computerimplementiertes Verfahren nach Anspruch 9, wobei die Verarbeitungseinheit einen Mikroprozessor aufweist und der Speicher der Verarbeitungseinheit einen Level-2-(L2) -Cache (154) des Mikroprozessors und einen Level-3- (L3) -Cache des Mikroprozessors aufweist, wobei die Abbildungstabellen (158) im L2-Cache alloziert werden und der Datencache im L3-Cache (172) generiert wird.

11. Computerlesbares Medium, in dem ein durch computerausführbarer Code zur Ausführung durch eine Verarbeitungseinheit (159) gespeichert ist, die einen Datenbankserver (167) steuert, wobei die Ausführung der Anweisungen des ausführbaren Codes die Verarbeitungseinheit zum Ausführen eines computerimplementierten Verfahrens zum Aktualisieren einer Datenbank veranlasst, wobei das Aktualisieren der Datenbank von einem Endgerät betrieben wird, wobei der Datenbankserver die Datenbank und die Verarbeitungseinheit aufweist, wobei die Datenbank Datensätze aufweist, jeder Datensatz einen jeweiligen Hauptschlüssel aufweist, der den jeden Datensatz in der Datenbank eindeutig kennzeichnet, wenigstens ein Teil der Datensätze jeweils einen oder mehr Teilschlüssel aufweist, jeder Teilschlüssel eine jeweilige Menge der Datensätze eindeutig kennzeichnet und jeder Datensatz der jeweiligen Menge den jeden Teilschlüssel aufweist, wobei der Datenbankserver zum Durchführen der Aktualisierung der Datenbank in einem elektrischen Energiesparmodus und in einem normalen elektrischen Energieverbrauchsmodus konfiguriert ist, wobei ein elektrischer Energieverbrauch des Datenbankservers in dem elektrischen Energiesparmodus niedriger ist als ein elektrischer Energieverbrauch des Datenbankservers in dem normalen elektrischen Energieverbrauchsmodus, wobei eine Massenaktualisierung der Datenbank im elektrischen Energiesparmodus durchgeführt wird und eine diskrete Aktualisierung der Datenbank in dem normalen elektrischen Energieverbrauchsmodus durchgeführt wird, wobei das computerimplementierte Verfahren aufweist:
• Umschalten des Datenbankservers in den elektrischen Energiesparmodus (220);
• Veranlassen der Verarbeitungseinheit zum Durchführen der Massenaktualisierung der Datenbank (221), wobei das Veranlassen der Verarbeitungseinheit zum Durchführen der Massenaktualisierung der Datenbank Folgendes aufweist:
- Generieren eines Datencaches in einem Speicher der Verarbeitungseinheit, wobei jeder in dem Datencache gespeicherte Datensatz eine jeweilige eindeutige physikalische Adresse in dem Speicher (239) hat;
- Durchführen des Folgenden als Reaktion auf den Erhalt von dem Endgerät einer Einfügung-durch-Hauptschlüssel-Operation (222) des Einfügens eines zur Datenbank hinzuzufügenden Datensatzes an der Datenbank:
o Speichern des hinzuzufügenden Datensatzes im Datencache (225) und
o Speichern einer physikalischen Adresse des hinzuzufügenden Datensatzes und eines Hauptschlüssels des hinzuzufügenden Datensatzes, die einander zugeordnet sind (230), in Abbildungstabellen, wobei der hinzuzufügende Datensatz in die Datenbank eingefügt wird, wenn eine Aktualisierung der Datenbank als notwendig ermittelt wird;
- Durchführen des Folgenden als Reaktion auf den Erhalt einer Aktualisierung-durch-Hauptschlüssel-Operation (223) an einem zu aktualisierenden Datensatz in der Datenbank:
▪ Durchführen des Folgenden in einem Cache-Miss-Fall (226), wenn die Abbildungstabellen den in der Aktualisierung-durch-Hauptschlüssel-Operation vorgegebenen Hauptschlüssel nicht aufweisen:
• Ausführen einer Hochladen-durch-Hauptschlüssel-Operation, die den zu aktualisierenden Datensatz von der Datenbank in den Datencache hochlädt (227), und
• Speichern einer physikalischen Adresse des hochgeladenen Datensatzes und des Hauptschlüssels des hochgeladenen Datensatzes, die einander zugeordnet sind, in den Abbildungstabellen (232);
▪ Ausführen der Aktualisierung-durch-Hauptschlüssel-Operation (231) an dem Datensatz im Datencache, der an der physikalischen Adresse gespeichert ist, die in den Abbildungstabellen dem Hauptschlüssel zugeordnet ist, der in der Aktualisierung-durch-Hauptschlüssel-Operation vorgegeben wird, wobei in einem Fall, wenn die Aktualisierung-durch-Hauptschlüssel-Operation das Aktualisieren des Hauptschlüssels des zu aktualisierenden Datensatzes aufweist (226), die Aktualisierung-durch-Hauptschlüssel-Operation an dem Datensatz in dem Datencache, der an der physikalischen Adresse gespeichert ist, die in den Abbildungstabellen dem Hauptschlüssel zugeordnet ist, der in der Aktualisierung-durch-Hauptschlüssel-Operation vorgegeben wird, das Aktualisieren des Hauptschlüssels des zu aktualisierenden Datensatzes in den Abbildungstabellen aufweist, wobei der zu aktualisierende Datensatz in der Datenbank aktualisiert wird, wenn die Aktualisierung der Datenbank als notwendig ermittelt wird (235);
- Durchführen des Folgenden als Reaktion auf den Erhalt von dem Endgerät einer Aktualisierung-durch-Teilschlüssel-Operation (224) an allen zu aktualisierenden Datensätzen in der Datenbank, die einen Teilschlüssel aufweisen, der in der Aktualisierung-durch-Teilschlüssel-Operation vorgegeben wird:
▪ Durchführen des Folgenden in einem Cache-Miss-Fall (228), wenn die Abbildungstabellen den in der Aktualisierung-durch-Teilschlüssel-Operation vorgegebenen Teilschlüssel nicht aufweisen:
• Ausführen einer Hochladen-durch-Teilschlüssel-Operation (229), die alle zu aktualisierenden Datensätze, die den in der Aktualisierung-durch-Teilschlüssel-Operation vorgegebenen Teilschlüssel aufweisen, von der Datenbank in den Datencache hochlädt, und
• Speichern aller physikalischen Adressen, aller Hauptschlüssel und des Teilschlüssels der allen hochgeladenen Datensätze, die den in der Aktualisierung-durch-Teilschlüssel-Operation (229) vorgegebenen Teilschlüssel aufweisen, in den Abbildungstabellen, wobei die physikalische Adresse jedes hochgeladenen Datensatzes, die den in der Hochladen-durch-Teilschlüssel-Operation vorgegebenen Teilschlüssel aufweist, der jeweilige Hauptschlüssel des jeden hochgeladenen Datensatzes, der den in der Hochladen-durch-Teilschlüssel-Operation vorgegebenen Teilschlüssel aufweist, und der Teilschlüssel des jeden hochgeladenen Datensatzes, der den in der Hochladen-durch-Teilschlüssel-Operation vorgegebenen Teilschlüssel aufweist, in den Abbildungstabellen einander zugeordnet sind;
▪ Ausführen der Aktualisierung-durch-Teilschlüssel-Operation (233) an allen Datensätzen im Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, wobei in einem Fall, wenn die Aktualisierung-durch-Teilschlüssel-Operation das Aktualisieren von einem oder mehr Hauptschlüsseln von einem oder mehr jeweiligen zu aktualisierenden Datensätzen aufweist, die den in der Aktualisierungdurch-Teilschlüssel-Operation vorgegebenen Teilschlüssel aufweisen, das Ausführen der Aktualisierung-durch-Teilschlüssel-Operation an allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des einen oder der mehr jeweiligen Hauptschlüssel in den Abbildungstabellen aufweist, wobei in einem Fall, wenn die Aktualisierung-durch-Teilschlüssel-Operation das Aktualisieren des Teilschlüssels der allen zu aktualisierenden Datensätze aufweist, die den in der Aktualisierung-durch-Teilschlüssel-Operation vorgegebenen Teilschlüssel aufweisen, das Ausführen der Aktualisierung-durch-Teilschlüssel-Operation an allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des in der Aktualisierung-durch-Teilschlüssel-Operation vorgegebenen Teilschlüssels in den Abbildungstabellen aufweist, wobei die alle zu aktualisierenden Datensätze in der Datenbank aktualisiert werden, wenn die Aktualisierung der Datenbank als notwendig ermittelt wird (235); und
- in dem Fall, wenn die Aktualisierung der Datenbank als notwendig ermittelt wird (235), Ausführen einer Massenschreiboperation (237), die alle Datensätze im Datencache in die Datenbank schreibt;
und
wobei die Aktualisierung der Datenbank als notwendig ermittelt wird, wenn eine Gesamtzahl der Datenzeilen in dem Datencache einen ersten Schwellenwert übersteigt;
• Umschalten des Datenbankservers in den normalen elektrischen Energieverbrauchsmodus (236) und
• Veranlassen der Verarbeitungseinheit zum Durchführen des diskreten Aktualisierens der Datenbank (240), wobei das Veranlassen der Verarbeitungseinheit zum Durchführen des diskreten Aktualisierens der Datenbank Folgendes aufweist:
- Ausführen, als Reaktion auf den Erhalt der Einfiigung-durch-Hauptschlüssel-Operation des Einfügens des zur Datenbank hinzuzufügenden Datensatzes vom Endgerät an der Datenbank, der Einfiigung-durch-Hauptschlüssel-Operation des Einfügens des zur Datenbank hinzuzufügenden Datensatzes an der Datenbank (222);
- Ausführen, als Reaktion auf den Erhalt der Aktualisierung-durch-Teilschlüssel-Operation aller zu aktualisierenden Datensätze, die den in der Aktualisierung-durch-Teilschlüssel-Operation vorgegebenen Teilschlüssel aufweisen, vom Endgerät an der Datenbank, der Aktualisierung-durch-Teilschlüssel-Operation aller zu aktualisierenden Datensätze, die den in der Aktualisierung-durch-Teilschlüssel-Operation vorgegebenen Teilschlüssel aufweisen, an der Datenbank (224) und
- Ausführen, als Reaktion auf den Erhalt der Aktualisierung-durch-Hauptschlüssel-Operation des zu aktualisierenden Datensatzes, der den in der Aktualisierung-durch-Teilschlüssel-an-der-Datenbank-Operation vorgegebenen Hauptschlüssel aufweist, vom Endgerät, der Aktualisierung-durch-Hauptschlüssel-Operation des zu aktualisierenden Datensatzes, der den in der Aktualisierung-durch-Teilschlüssel-Operation vorgegebenen Hauptschlüssel aufweist, an der Datenbank (223).

12. Computerlesbares Medium, in dem ein durch Computer ausführbarer Code zur Ausführung durch eine Verarbeitungseinheit (159) gespeichert ist, die ein Endgerät (170) steuert, wobei die Ausführung der Anweisungen des ausführbaren Codes die Verarbeitungseinheit zum Ausführen eines computerimplementierten Verfahrens zum Aktualisieren einer Datenbank (128) unter Verwendung des Endgeräts veranlasst, das die Verarbeitungseinheit aufweist, wobei die Datenbank Datensätze aufweist, jeder Datensatz einen jeweiligen Hauptschlüssel aufweist, der den jeden Datensatz in der Datenbank eindeutig kennzeichnet, wenigstens ein Teil der Datensätze jeweils einen oder mehr Teilschlüssel aufweist, jeder Teilschlüssel eine jeweilige Menge der Datensätze eindeutig kennzeichnet und jeder Datensatz der jeweiligen Menge den jeden Teilschlüssel aufweist, wobei das Endgerät zum Durchführen der Aktualisierung der Datenbank in einem elektrischen Energiesparmodus und in einem normalen elektrischen Energieverbrauchsmodus konfiguriert ist, wobei ein elektrischer Energieverbrauch des Endgeräts in dem elektrischen Energiesparmodus niedriger ist als ein elektrischer Energieverbrauch des Endgeräts in dem normalen elektrischen Energieverbrauchsmodus, wobei eine Massenaktualisierung der Datenbank im elektrischen Energiesparmodus durchgeführt wird und eine diskrete Aktualisierung der Datenbank in dem normalen elektrischen Energieverbrauchsmodus durchgeführt wird, wobei das computerimplementierte Verfahren aufweist:
• Umschalten des Endgeräts in den elektrischen Energiesparmodus (220);
• Veranlassen der Verarbeitungseinheit zum Durchführen der Massenaktualisierung der Datenbank (221), wobei das Veranlassen der Verarbeitungseinheit zum Durchführen der Massenaktualisierung der Datenbank Folgendes aufweist:
- Generieren eines Datencaches in einem Speicher der Verarbeitungseinheit, wobei jeder in dem Datencache gespeicherte Datensatz eine jeweilige eindeutige physikalische Adresse in dem Speicher (239) hat;
- Durchführen des Folgenden als Reaktion auf den Erhalt einer Einfügung-durch-Hauptschlüssel-Operation (222) des Einfügens eines zur Datenbank hinzuzufügenden Datensatzes an der Datenbank von dem Endgerät:
o Speichern des hinzuzufügenden Datensatzes im Datencache (225) und
o Speichern einer physikalischen Adresse des hinzuzufügenden Datensatzes und eines Hauptschlüssels des hinzuzufügenden Datensatzes, die einander zugeordnet sind (230), in Abbildungstabellen, wobei der hinzuzufügende Datensatz in die Datenbank eingefügt wird, wenn eine Aktualisierung der Datenbank als notwendig ermittelt wird (235);
- Durchführen des Folgenden als Reaktion auf den Erhalt einer Aktualisierung-durch-Hauptschlüssel-Operation (223) an einem zu aktualisierenden Datensatz in der Datenbank:
▪ Durchführen des Folgenden in einem Cache-Miss-Fall (226), wenn die Abbildungstabellen den in der Aktualisierung-durch-Hauptschlüssel-Operation vorgegebenen Hauptschlüssel nicht aufweisen:
• Ausführen einer Hochladen-durch-Hauptschlüssel-Operation, die den zu aktualisierenden Datensatz von der Datenbank in den Datencache hochlädt (227), und
• Speichern einer physikalischen Adresse des hochgeladenen Datensatzes und des Hauptschlüssels des hochgeladenen Datensatzes, die einander zugeordnet sind, in den Abbildungstabellen (232);
▪ Ausführen der Aktualisierung-durch-Hauptschlüssel-Operation (231) an dem Datensatz im Datencache, der an der physikalischen Adresse gespeichert ist, die in den Abbildungstabellen dem Hauptschlüssel zugeordnet ist, der in der Aktualisierung-durch-Hauptschlüssel-Operation vorgegeben wird, wobei in einem Fall, wenn die Aktualisierung-durch-Hauptschlüssel-Operation das Aktualisieren des Hauptschlüssels des zu aktualisierenden Datensatzes aufweist (226), die Aktualisierung-durch-Hauptschlüssel-Operation an dem Datensatz in dem Datencache, der an der physikalischen Adresse gespeichert ist, die in den Abbildungstabellen dem Hauptschlüssel zugeordnet ist, der in der Aktualisierung-durch-Hauptschlüssel-Operation vorgegeben wird, das Aktualisieren des Hauptschlüssels des zu aktualisierenden Datensatzes in den Abbildungstabellen aufweist, wobei der zu aktualisierende Datensatz in der Datenbank aktualisiert wird, wenn die Aktualisierung der Datenbank als notwendig ermittelt wird (235);
- Durchführen des Folgenden als Reaktion auf den Erhalt einer Aktualisierungdurch-Teilschlüssel-Operation (224) an allen zu aktualisierenden Datensätzen in der Datenbank, die einen Teilschlüssel aufweisen, der in der Aktualisierungdurch-Teilschlüssel-Operation vorgegeben wird:
▪ Durchführen des Folgenden in einem Cache-Miss-Fall (228), wenn die Abbildungstabellen den in der Aktualisierung-durch-Teilschlüssel-Operation vorgegebenen Teilschlüssel nicht aufweisen:
• Ausführen einer Hochladen-durch-Teilschlüssel-Operation (229), die die alle zu aktualisierenden Datensätze, die den in der Aktualisiernng-durch-Teilschlüssel-Operation vorgegebenen Teilschlüssel aufweisen, von der Datenbank in den Datencache hochlädt, und
• Speichern aller physikalischen Adressen, aller Hauptschlüssel und des Teilschlüssels der allen hochgeladenen Datensätze, die den in der Aktualisiernng-durch-Teilschlüssel-Operation (229) vorgegebenen Teilschlüssel aufweisen, in den Abbildungstabellen, wobei die physikalische Adresse jedes hochgeladenen Datensatzes, die den in der Hochladen-durch-Teilschlüssel-Operation vorgegebenen Teilschlüssel aufweist, der jeweilige Hauptschlüssel des jeden hochgeladenen Datensatzes, der den in der Hochladen-durch-Teilschlüssel-Operation vorgegebenen Teilschlüssel aufweist, und der Teilschlüssel des jeden hochgeladenen Datensatzes, der den in der Hochladen-durch-Teilschlüssel-Operation vorgegebenen Teilschlüssel aufweist, in den Abbildungstabellen einander zugeordnet sind;
▪ Ausführen der Aktualisierung-durch-Teilschlüssel-Operation (233) an allen Datensätzen im Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, wobei in einem Fall, wenn die Aktualisierung-durch-Teilschlüssel-Operation das Aktualisieren von einem oder mehr Hauptschlüsseln von einem oder mehr jeweiligen zu aktualisierenden Datensätzen aufweist, die den in der Aktualisierungdurch-Teilschlüssel-Operation vorgegebenen Teilschlüssel aufweisen, das Ausführen der Aktualisierung-durch-Teilschlüssel-Operation an allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des einen oder der mehr jeweiligen Hauptschlüssel in den Abbildungstabellen aufweist, wobei in einem Fall, wenn die Aktualisierung-durch-Teilschlüssel-Operation das Aktualisieren des Teilschlüssels der allen zu aktualisierenden Datensätze aufweist, die den in der Aktualisierung-durch-Teilschlüssel-Operation vorgegebenen Teilschlüssel aufweisen, das Ausführen der Aktualisierung-durch-Teilschlüssel-Operation an allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des in der Aktualisierung-durch-Teilschlüssel-Operation vorgegebenen Teilschlüssels in den Abbildungstabellen aufweist, wobei die alle zu aktualisierenden Datensätze in der Datenbank aktualisiert werden, wenn die Aktualisierung der Datenbank als notwendig ermittelt wird (235); und
- in dem Fall, wenn die Aktualisierung der Datenbank als notwendig ermittelt wird (235), Ausführen einer Massenschreiboperation, die alle Datensätze im Datencache in die Datenbank schreibt;
und
wobei die Aktualisierung der Datenbank als notwendig ermittelt wird, wenn eine Gesamtzahl der Datenzeilen in dem Datencache einen ersten Schwellenwert übersteigt;
• Umschalten des Endgeräts in den normalen elektrischen Energieverbrauchsmodus (236) und
• Veranlassen der Verarbeitungseinheit zum Durchführen des diskreten Aktualisierens der Datenbank (240), wobei das Veranlassen der Verarbeitungseinheit zum Durchführen des diskreten Aktualisierens der Datenbank Folgendes aufweist:
- Ausführen der Einfügung-durch-Hauptschlüssel-Operation des Einfügens des zur Datenbank hinzuzufügenden Datensatzes an der Datenbank (222);
- Ausführen der Aktualisierung-durch-Teilschlüssel-Operation aller zu aktualisierenden Datensätze, die den in der Aktualisierung-durch-Teilschlüssel-Operation vorgegebenen Teilschlüssel aufweisen, an der Datenbank (224) und
- Ausführen der Aktualisierung-durch-Hauptschlüssel-Operation des zu aktualisierenden Datensatzes, der den in der Aktualisierung-durch-Teilschlüssel-Operation vorgegebenen Hauptschlüssel aufweist, an der Datenbank (223).

13. Datenbankserver (167), der zum Durchführen einer Aktualisierung einer Datenbank (128) in einem elektrischen Energiesparmodus und in einem normalen elektrischen Energieverbrauchsmodus konfiguriert ist, wobei das Aktualisieren der Datenbank von einem Endgerät (170) betrieben wird, wobei der Datenbankserver die Datenbank und die Verarbeitungseinheit (159) aufweist, wobei die Datenbank Datensätze aufweist, jeder Datensatz einen jeweiligen Hauptschlüssel aufweist, der den jeden Datensatz in der Datenbank eindeutig kennzeichnet, wenigstens ein Teil der Datensätze jeweils einen oder mehr Teilschlüssel aufweist, jeder Teilschlüssel eine jeweilige Menge der Datensätze eindeutig kennzeichnet und jeder Datensatz der jeweiligen Menge den jeden Teilschlüssel aufweist, wobei ein elektrischer Energieverbrauch des Endgeräts in dem elektrischen Energiesparmodus niedriger ist als ein elektrischer Energieverbrauch des Endgeräts in dem normalen elektrischen Energieverbrauchsmodus, wobei eine Massenaktualisierung der Datenbank im elektrischen Energiesparmodus durchgeführt wird und eine diskrete Aktualisierung der Datenbank in dem normalen elektrischen Energieverbrauchsmodus durchgeführt wird, wobei die Verarbeitungseinheit zum Veranlassen des Endgeräts zum Durchführen des Folgenden konfiguriert ist:
• Umschalten des Endgeräts in den elektrischen Energiesparmodus (220);
• Veranlassen des Endgeräts zum Durchführen der Massenaktualisierung der Datenbank (221), wobei das Veranlassen des Endgeräts zum Durchführen der Massenaktualisierung der Datenbank Folgendes aufweist:
- Generieren eines Datencaches in einem Speicher der Verarbeitungseinheit, wobei jeder in dem Datencache gespeicherte Datensatz eine jeweilige eindeutige physikalische Adresse in dem Speicher (239) hat;
- Durchführen des Folgenden als Reaktion auf den Erhalt einer Einfügung-durch-Hauptschlüssel-Operation (222) des Einfügens eines zur Datenbank hinzuzufügenden Datensatzes an der Datenbank von dem Endgerät:
o Speichern des hinzuzufügenden Datensatzes im Datencache (225) und
o Speichern einer physikalischen Adresse des hinzuzufügenden Datensatzes und eines Hauptschlüssels des hinzuzufügenden Datensatzes, die einander zugeordnet sind (230), in Abbildungstabellen, wobei der hinzuzufügende Datensatz in die Datenbank eingefügt wird, wenn eine Aktualisierung der Datenbank als notwendig ermittelt wird;
- Durchführen des Folgenden als Reaktion auf den Erhalt einer Aktualisierung-durch-Hauptschlüssel-Operation (223) an einem zu aktualisierenden Datensatz in der Datenbank:
▪ Durchführen des Folgenden in einem Cache-Miss-Fall (226), wenn die Abbildungstabellen den in der Aktualisierung-durch-Hauptschlüssel-Operation vorgegebenen Hauptschlüssel nicht aufweisen:
• Ausführen einer Hochladen-durch-Hauptschlüssel-Operation, die den zu aktualisierenden Datensatz von der Datenbank in den Datencache hochlädt (227), und
• Speichern einer physikalischen Adresse des hochgeladenen Datensatzes und des Hauptschlüssels des hochgeladenen Datensatzes, die einander zugeordnet sind, in den Abbildungstabellen (232);
▪ Ausführen der Aktualisierung-durch-Hauptschlüssel-Operation (231) an dem Datensatz im Datencache, der an der physikalischen Adresse gespeichert ist, die in den Abbildungstabellen dem Hauptschlüssel zugeordnet ist, der in der Aktualisierung-durch-Hauptschlüssel-Operation vorgegeben wird, wobei in einem Fall, wenn die Aktualisierung-durch-Hauptschlüssel-Operation das Aktualisieren des Hauptschlüssels des zu aktualisierenden Datensatzes aufweist (226), die Aktualisierung-durch-Hauptschlüssel-Operation an dem Datensatz in dem Datencache, der an der physikalischen Adresse gespeichert ist, die in den Abbildungstabellen dem Hauptschlüssel zugeordnet ist, der in der Aktualisierung-durch-Hauptschlüssel-Operation vorgegeben wird, das Aktualisieren des Hauptschlüssels des zu aktualisierenden Datensatzes in den Abbildungstabellen aufweist, wobei der zu aktualisierende Datensatz in der Datenbank aktualisiert wird, wenn die Aktualisierung der Datenbank als notwendig ermittelt wird (235);
- Durchführen des Folgenden als Reaktion auf den Erhalt einer Aktualisierungdurch-Teilschlüssel-Operation (224) an allen zu aktualisierenden Datensätzen in der Datenbank, die einen Teilschlüssel aufweisen, der in der Aktualisierungdurch-Teilschlüssel-Operation vorgegeben wird:
▪ Durchführen des Folgenden in einem Cache-Miss-Fall (228), wenn die Abbildungstabellen den in der Aktualisierung-durch-Teilschlüssel-Operation vorgegebenen Teilschlüssel nicht aufweisen:
• Ausführen einer Hochladen-durch-Teilschlüssel-Operation (229), die die alle zu aktualisierenden Datensätze, die den in der Aktualisierung-durch-Teilschlüssel-Operation vorgegebenen Teilschlüssel aufweisen, von der Datenbank in den Datencache hochlädt, und
• Speichern aller physikalischen Adressen, aller Hauptschlüssel und des Teilschlüssels der allen hochgeladenen Datensätze, die den in der Aktualisierung-durch-Teilschlüssel-Operation (229) vorgegebenen Teilschlüssel aufweisen, in den Abbildungstabellen, wobei die physikalische Adresse jedes hochgeladenen Datensatzes, die den in der Hochladen-durch-Teilschlüssel-Operation vorgegebenen Teilschlüssel aufweist, der jeweilige Hauptschlüssel des jeden hochgeladenen Datensatzes, der den in der Hochladen-durch-Teilschlüssel-Operation vorgegebenen Teilschlüssel aufweist, und der Teilschlüssel des jeden hochgeladenen Datensatzes, der den in der Hochladen-durch-Teilschlüssel-Operation vorgegebenen Teilschlüssel aufweist, in den Abbildungstabellen einander zugeordnet sind;
▪ Ausführen der Aktualisierung-durch-Teilschlüssel-Operation (233) an den allen Datensätzen im Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, wobei in einem Fall, wenn die Aktualisiernng-durch-Teilschlüssel-Operation das Aktualisieren von einem oder mehr Hauptschlüsseln von einem oder mehr jeweiligen zu aktualisierenden Datensätzen aufweist, die den in der Aktualisiernng-durch-Teilschlüssel-Operation vorgegebenen Teilschlüssel aufweisen, das Ausführen der Aktualisierung-durch-Teilschlüssel-Operation an den allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des einen oder der mehr jeweiligen Hauptschlüssel in den Abbildungstabellen aufweist, wobei in einem Fall, wenn die Aktualisiernng-durch-Teilschlüssel-Operation das Aktualisieren des Teilschlüssels der allen zu aktualisierenden Datensätze aufweist, die den in der Aktualisiernng-durch-Teilschlüssel-Operation vorgegebenen Teilschlüssel aufweisen, das Ausführen der Aktualisierung-durch-Teilschlüssel-Operation an den allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des in der Aktualisierung-durch-Teilschlüssel-Operation vorgegebenen Teilschlüssels in den Abbildungstabellen aufweist, wobei die alle zu aktualisierenden Datensätze in der Datenbank aktualisiert werden, wenn die Aktualisierung der Datenbank als notwendig ermittelt wird (235); und
- in dem Fall, wenn die Aktualisierung der Datenbank als notwendig ermittelt wird (235), Ausführen einer Massenschreiboperation, die alle Datensätze im Datencache in die Datenbank schreibt;
und
wobei die Aktualisierung der Datenbank als notwendig ermittelt wird, wenn eine Gesamtzahl der Datenzeilen in dem Datencache einen ersten Schwellenwert übersteigt;
• Umschalten des Datenbankservers in den normalen elektrischen Energieverbrauchsmodus (236) und
• Veranlassen des Datenbankservers zum Durchführen des diskreten Aktualisierens der Datenbank (240), wobei das Veranlassen des Datenbankservers zum Durchführen des diskreten Aktualisierens der Datenbank Folgendes aufweist:
- Ausführen, als Reaktion auf den Erhalt der Einfügung-durch-Hauptschlüssel-Operation des Einfügens des zur Datenbank hinzuzufügenden Datensatzes an der Datenbank vom Endgerät, der Einfügung-durch-Hauptschlüssel-Operation des Einfügens des zur Datenbank hinzuzufügenden Datensatzes an der Datenbank (222);
- Ausführen, als Reaktion auf den Erhalt der Aktualisierung-durch-Teilschlüssel-Operation aller zu aktualisierenden Datensätze, die den in der Aktualisierung-durch-Teilschlüssel-Operation an der Datenbank vorgegebenen Teilschlüssel aufweisen, vom Endgerät, der Aktualisierung-durch-Teilschlüssel-Operation aller zu aktualisierenden Datensätze, die den in der Aktualisierung-durch-Teilschlüssel-Operation vorgegebenen Teilschlüssel aufweisen, an der Datenbank (224) und
- Ausführen, als Reaktion auf den Erhalt der Aktualisierung-durch-Hauptschlüssel-Operation des zu aktualisierenden Datensatzes, der den in der Aktualisierung-durch-Teilschlüssel-an-der-Datenbank-Operation vorgegebenen Hauptschlüssel aufweist, vom Endgerät, der Aktualisierung-durch-Hauptschlüssel-Operation des zu aktualisierenden Datensatzes, der den in der Aktualisierung-durch-Teilschlüssel-Operation vorgegebenen Hauptschlüssel aufweist, an der Datenbank (223).

14. Endgerät (170), das zum Durchführen einer Aktualisierung einer Datenbank (128) in einem elektrischen Energiesparmodus und in einem normalen elektrischen Energieverbrauchsmodus konfiguriert ist, wobei das Endgerät die Verarbeitungseinheit (156) aufweist, wobei die Datenbank Datensätze aufweist, jeder Datensatz einen jeweiligen Hauptschlüssel aufweist, der den jeden Datensatz in der Datenbank eindeutig kennzeichnet, wenigstens ein Teil der Datensätze jeweils einen oder mehr Teilschlüssel aufweist, jeder Teilschlüssel eine jeweilige Menge der Datensätze eindeutig kennzeichnet und jeder Datensatz der jeweiligen Menge den jeden Teilschlüssel aufweist, wobei ein elektrischer Energieverbrauch des Datenbankservers in dem elektrischen Energiesparmodus niedriger ist als ein elektrischer Energieverbrauch des Datenbankservers in dem normalen elektrischen Energieverbrauchsmodus, wobei eine Massenaktualisierung der Datenbank im elektrischen Energiesparmodus durchgeführt wird und eine diskrete Aktualisierung der Datenbank in dem normalen elektrischen Energieverbrauchsmodus durchgeführt wird, wobei die Verarbeitungseinheit zum Durchführen des Folgenden konfiguriert ist:
• Umschalten des Datenbankservers in den elektrischen Energiesparmodus (220);
• Veranlassen des Datenbankservers zum Durchführen der Massenaktualisierung der Datenbank (221), wobei das Veranlassen des Datenbankservers zum Durchführen der Massenaktualisierung der Datenbank Folgendes aufweist:
- Generieren eines Datencaches in einem Speicher der Verarbeitungseinheit, wobei jeder in dem Datencache gespeicherte Datensatz eine jeweilige eindeutige physikalische Adresse in dem Speicher (239) hat;
- Durchführen des Folgenden als Reaktion auf den Erhalt einer Einfügung-durch-Hauptschlüssel-Operation (222) des Einfügens eines zur Datenbank hinzuzufügenden Datensatzes an der Datenbank von dem Endgerät:
o Speichern des hinzuzufügenden Datensatzes im Datencache (225) und
o Speichern einer physikalischen Adresse des hinzuzufügenden Datensatzes und eines Hauptschlüssels des hinzuzufiigenden Datensatzes, die einander zugeordnet sind (230), in Abbildungstabellen, wobei der hinzuzufügende Datensatz in die Datenbank eingefügt wird, wenn eine Aktualisierung der Datenbank als notwendig ermittelt wird (235);
- Durchführen des Folgenden als Reaktion auf den Erhalt von dem Endgerät einer Aktualisierung-durch-Hauptschlüssel-Operation (223) an einem zu aktualisierenden Datensatz in der Datenbank:
▪ Durchführen des Folgenden in einem Cache-Miss-Fall (226), wenn die Abbildungstabellen den in der Aktualisierung-durch-Hauptschlüssel-Operation vorgegebenen Hauptschlüssel nicht aufweisen:
• Ausführen einer Hochladen-durch-Hauptschlüssel-Operation, die den zu aktualisierenden Datensatz von der Datenbank in den Datencache hochlädt (227), und
• Speichern einer physikalischen Adresse des hochgeladenen Datensatzes und des Hauptschlüssels des hochgeladenen Datensatzes, die einander zugeordnet sind, in den Abbildungstabellen (232);
▪ Ausführen der Aktualisierung-durch-Hauptschlüssel-Operation (231) an dem Datensatz im Datencache, der an der physikalischen Adresse gespeichert ist, die in den Abbildungstabellen dem Hauptschlüssel zugeordnet ist, der in der Aktualisierung-durch-Hauptschlüssel-Operation vorgegeben wird, wobei in einem Fall, wenn die Aktualisierung-durch-Hauptschlüssel-Operation das Aktualisieren des Hauptschlüssels des zu aktualisierenden Datensatzes aufweist (226), die Aktualisierung-durch-Hauptschlüssel-Operation an dem Datensatz in dem Datencache, der an der physikalischen Adresse gespeichert ist, die in den Abbildungstabellen dem Hauptschlüssel zugeordnet ist, der in der Aktualisierung-durch-Hauptschlüssel-Operation vorgegeben wird, das Aktualisieren des Hauptschlüssels des zu aktualisierenden Datensatzes in den Abbildungstabellen aufweist, wobei der zu aktualisierende Datensatz in der Datenbank aktualisiert wird, wenn die Aktualisierung der Datenbank als notwendig ermittelt wird (235);
- Durchführen des Folgenden als Reaktion auf den Erhalt von dem Endgerät einer Aktualisierung-durch-Teilschlüssel-Operation (224) an allen zu aktualisierenden Datensätzen in der Datenbank, die einen Teilschlüssel aufweisen, der in der Aktualisierung-durch-Teilschlüssel-Operation vorgegeben wird:
▪ Durchführen des Folgenden in einem Cache-Miss-Fall (228), wenn die Abbildungstabellen den in der Aktualisierung-durch-Teilschlüssel-Operation vorgegebenen Teilschlüssel nicht aufweisen:
• Ausführen einer Hochladen-durch-Teilschlüssel-Operation (229), die die alle zu aktualisierenden Datensätze, die den in der Aktualisierung-durch-Teilschlüssel-Operation vorgegebenen Teilschlüssel aufweisen, von der Datenbank in den Datencache hochlädt, und
• Speichern aller physikalischen Adressen, aller Hauptschlüssel und des Teilschlüssels der allen hochgeladenen Datensätze, die den in der Aktualisierung-durch-Teilschlüssel-Operation (229) vorgegebenen Teilschlüssel aufweisen, in den Abbildungstabellen, wobei die physikalische Adresse jedes hochgeladenen Datensatzes, die den in der Hochladen-durch-Teilschlüssel-Operation vorgegebenen Teilschlüssel aufweist, der jeweilige Hauptschlüssel des jeden hochgeladenen Datensatzes, der den in der Hochladen-durch-Teilschlüssel-Operation vorgegebenen Teilschlüssel aufweist, und der Teilschlüssel des jeden hochgeladenen Datensatzes, der den in der Hochladen-durch-Teilschlüssel-Operation vorgegebenen Teilschlüssel aufweist, in den Abbildungstabellen einander zugeordnet sind;
▪ Ausführen der Aktualisierung-durch-Teilschlüssel-Operation (233) an den allen Datensätzen im Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, wobei in einem Fall, wenn die Aktualisierung-durch-Teilschlüssel-Operation das Aktualisieren von einem oder mehr Hauptschlüsseln von einem oder mehr jeweiligen zu aktualisierenden Datensätzen aufweist, die den in der Aktualisierung-durch-Teilschlüssel-Operation vorgegebenen Teilschlüssel aufweisen, das Ausführen der Aktualisierung-durch-Teilschlüssel-Operation an den allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des einen oder der mehr jeweiligen Hauptschlüssel in den Abbildungstabellen aufweist, wobei in einem Fall, wenn die Aktualisierung-durch-Teilschlüssel-Operation das Aktualisieren des Teilschlüssels der allen zu aktualisierenden Datensätze aufweist, die den in der Aktualisierung-durch-Teilschlüssel-Operation vorgegebenen Teilschlüssel aufweisen, das Ausführen der Aktualisierung-durch-Teilschlüssel-Operation an den allen Datensätzen in dem Datencache, die an den jeweiligen physikalischen Adressen gespeichert sind, die in den Abbildungstabellen dem in der Aktualisierung-durch-Teilschlüssel-Operation vorgegebenen Teilschlüssel zugeordnet sind, das Aktualisieren des in der Aktualisierung-durch-Teilschlüssel-Operation vorgegebenen Teilschlüssels in den Abbildungstabellen aufweist, wobei die alle zu aktualisierenden Datensätze in der Datenbank aktualisiert werden, wenn die Aktualisierung der Datenbank als notwendig ermittelt wird (235); und
- in dem Fall, wenn die Aktualisierung der Datenbank als notwendig ermittelt wird (235), Ausführen einer Massenschreiboperation, die alle Datensätze im Datencache in die Datenbank schreibt;
und
wobei die Aktualisierung der Datenbank als notwendig ermittelt wird, wenn eine Gesamtzahl der Datenzeilen in dem Datencache einen ersten Schwellenwert übersteigt;
• Umschalten des Endgeräts in den normalen elektrischen Energieverbrauchsmodus (236) und
• Veranlassen des Endgeräts zum Durchführen des diskreten Aktualisierens der Datenbank (240), wobei das Veranlassen des Endgeräts zum Durchführen des diskreten Aktualisierens der Datenbank Folgendes aufweist:
- Ausführen der Einfügung-durch-Hauptschlüssel-Operation des Einfügens des zur Datenbank hinzuzufügenden Datensatzes an der Datenbank (222);
- Ausführen der Aktualisierung-durch-Teilschlüssel-Operation aller zu aktualisierenden Datensätze, die den in der Aktualisierung-durch-Teilschlüssel-Operation vorgegebenen Teilschlüssel aufweisen, an der Datenbank (224) und
- Ausführen der Aktualisierung-durch-Hauptschlüssel-Operation des zu aktualisierenden Datensatzes, der den in der Aktualisierung-durch-Teilschlüssel-Operation vorgegebenen Hauptschlüssel aufweist, an der Datenbank (223).

## Revendications

1. Procédé mis en oeuvre par ordinateur pour la mise à jour d'une base de données (128) utilisant un terminal final (170) comprenant une unité de traitement (158), où la base de données comprend des enregistrements, chacun des enregistrements comprend une clé principale respective qui identifie uniquement chacun des enregistrements dans la base de donnée, chacun de l'au moins une partie des enregistrements comprend une ou plusieurs clés partielles, chacune des clés partielles identifie uniquement un ensemble respectif d'enregistrements et chacun des enregistrements de l'ensemble respectif comprend chaque clé partielle, où le terminal final est configuré pour réaliser la mise à jour de la base de données dans un mode d'économie de l'énergie électrique et dans un mode standard de consommation de l'énergie électrique, où la consommation électrique du terminal final dans un mode d'économie de l'énergie électrique est plus faible que la consommation électrique du terminal final dans un mode standard de consommation électrique, où une mise à jour de masse de la base de données est réalisée dans le mode d'économie de l'énergie électrique et une mise à jour distincte de la base de données est réalisée dans le mode normal de consommation de l'énergie électrique, le procédé mis en oeuvre par ordinateur, comprenant :
• le basculement du terminal final dans le mode d'économie de l'énergie électrique (220) ;
• le déclenchement par l'unité de traitement de la réalisation de la mise à jour de masse de la base de données (221), où le déclenchement par l'unité de traitement de la réalisation de la mise à jour de masse de la base de données comprend :
- la création d'un cache de données dans la mémoire de l'unité de traitement, où chacun des enregistrements stockés dans le cache des données a une adresse physique unique respective dans la mémoire (239) ;
- en réponse à la réception d'une insertion (222) au moyen de la clé principale d'insertion dans la base de données d'un enregistrement à ajouter à la base de données, la réalisation des actions suivantes de :
o stockage de l'enregistrement à ajouter dans le cache des données (225); et
o stockage dans les tables de correspondance de l'adresse physique de l'enregistrement à ajouter et de la clé principale de l'enregistrement à ajouter associées l'une à l'autre (230), où l'enregistrement à ajouter est introduit dans la base de données quand il s'avère qu'une mise à jour de la base de données est nécessaire (235) ;
- en réponse à la réception d'une mise à jour au moyen de la clé principale (223) d'un enregistrement à mettre à jour dans la base de données, la réalisation des actions suivantes :
▪ dans le cas d'un défaut de cache (226) lorsque les tables de correspondance ne comprennent pas la clé principale spécifiée dans la mise à jour au moyen de la clé principale, la réalisation des actions suivantes :
• l'exécution d'un chargement au moyen de la clé principale qui charge l'enregistrement à mettre à jour dans le cache des données et à partir de la base de données (227) ; et
• le stockage dans les tables de correspondance de l'adresse physique de l'enregistrement chargé et de la clé principale de l'enregistrement chargé associées l'une à l'autre (232) ;
• l'exécution de la mise à jour au moyen de la clé principale (231) de l'enregistrement dans le cache des données stocké à l'adresse physique associée dans les tables de correspondance à la clé principale spécifiée dans la mise à jour au moyen de la clé principale, où, dans le cas où la mise à jour au moyen de la clé principale comprend la mise à jour de la clé principale de l'enregistrement à mettre à jour (226) la mise à jour au moyen de la clé principale de l'enregistrement dans le cache des données stocké à l'adresse physique associée dans les tables de correspondance à la clé principale spécifiée dans la mise à jour au moyen de la clé principale comprend la mise à jour de la clé principale de l'enregistrement à mettre à jour dans les tables de correspondance, où l'enregistrement à mettre à jour est mis à jour dans la base de données quand il s'avère que la mise à jour de la base de données est nécessaire (235) ;
- en réponse à la réception d'une mise à jour au moyen de la clé partielle (224) de tous les enregistrements à mettre à jour dans la base de données comprenant une clé partielle spécifiée dans la mise à jour au moyen de la clé partielle, la réalisation des actions suivantes :
▪ dans le cas d'un défaut de cache (228) lorsque les tables de correspondance ne comprennent pas la clé partielle spécifiée dans la mise à jour au moyen de la clé partielle, la réalisation des actions suivantes :
• l'exécution d'un chargement au moyen de la clé partielle (229) qui charge dans le cache des données et à partir de la base de données tous les enregistrements à mettre à jour comprenant la clé partielle spécifiée dans la mise à jour au moyen de la clé partielle ; et
• le stockage dans les tables de correspondance de toutes les adresses physiques, de toutes les clés principales et de la clé partielle de tous les enregistrements chargés comprenant la clé partielle spécifiée dans le chargement au moyen de la clé partielle (229), où l'adresse physique de chacun des enregistrements chargés comprenant la clé partielle spécifiée dans le chargement au moyen de la clé partielle, la clé principale respective de chacun des enregistrements chargés comprenant la clé partielle spécifiée dans le chargement au moyen de la clé partielle et la clé partielle de chacun des enregistrements chargés comprenant la clé partielle spécifiée dans le chargement au moyen de la clé partielle sont associés l'une à l'autre dans les tables de correspondance ;
▪ l'exécution de la mise à jour au moyen de la clé partielle (233) de tous les enregistrements dans le cache des données stocké aux adresses physiques respectives associées dans les tables de correspondance à la clé partielle spécifiée dans la mise à jour au moyen de la clé partielle, où, dans le cas où la mise à jour au moyen de la clé partielle comprend la mise à jour de l'une ou de plusieurs clés principales de l'un ou de plusieurs enregistrements respectifs à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de l'une ou de plusieurs clés principales respectives dans les tables de correspondance, où, dans le cas où la mise à jour au moyen de la clé partielle comprend la mise à jour de la clé partielle de tous les enregistrements à mettre à jour comprenant la clé partielle spécifiée dans la mise à jour au moyen de la clé partielle l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de la clé partielle spécifiée dans la mise à jour au moyen de la clé partielle dans les tables de correspondance, où tous les enregistrements à mettre à jour sont mis à jour dans la base de données quand il s'avère que la mise à jour de la base de données est nécessaire (235) ; et
- dans le cas où il s'avère que la mise à jour de la base de données est nécessaire (235), l'exécution d'une opération d'écriture en masse (237) qui écrit dans la base de données tous les enregistrements dans le cache des données; et
où il s'avère que la mise à jour de la base de données est nécessaire lorsque le nombre total de lignes de données dans le cache des données dépasse une première valeur de seuil :
• le basculement du terminal final dans le mode de consommation standard de l'énergie électrique (236) ; et
• le déclenchement par l'unité de traitement de la réalisation de la mise à jour distincte de la base de données (240), où le déclenchement par l'unité de traitement de la réalisation de la mise à jour distincte de la base de données comprend :
- l'exécution de l'insertion dans la base de données au moyen de la clé principale d'insertion de l'enregistrement à ajouter à la base de données (222) ;
- l'exécution de la mise à jour au moyen de la clé partielle de tous les enregistrements à mettre à jour comprenant la clé partielle spécifiée dans la mise à jour de la base de données au moyen de la clé partielle (224) ; et
- l'exécution de la mise à jour au moyen de la clé principale de l'enregistrement à mettre à jour comprenant la clé principale spécifiée dans la mise à jour de la base de données au moyen de la clé partielle (223).

2. Procédé mis en oeuvre par ordinateur selon la revendication 1, dans lequel l'unité de traitement comprend un microprocesseur et la mémoire de l'unité de traitement comprend un cache (154) de niveau 2 (L2) du microprocesseur et un cache de niveau 3 (L3) du microprocesseur, où les tables de correspondance (158) sont allouées dans le cache L2 et le cache des données est créé dans le cache L3 (172).

3. Procédé mis en oeuvre par ordinateur selon la revendication 2, où le microprocesseur fonctionne dans le mode d'économie de l'énergie du microprocesseur lorsque le terminal final est basculé dans le mode d'économie de l'alimentation électrique, où le microprocesseur fonctionne dans le mode de consommation standard de l'énergie du microprocesseur lorsque le terminal final bascule dans le mode standard de consommation de l'énergie électrique, où le microprocesseur fonctionne avec la première fréquence d'horloge lorsque le microprocesseur fonctionne dans le mode d'économie de l'alimentation du processeur, où le microprocesseur fonctionne avec la seconde fréquence d'horloge lorsque le microprocesseur fonctionne dans le mode standard de consommation électrique du microprocesseur, où la seconde fréquence d'horloge est supérieure à la première fréquence d'horloge.

4. Procédé mis en oeuvre par ordinateur selon l'une quelconque des revendications précédentes, où la base de données comprend une base de données résidente en mémoire vive.

5. Procédé mis en oeuvre par ordinateur selon l'une quelconque des revendications précédentes, où un terminal à distance comprend la base de données, où le terminal à distance est couplé de manière communicative avec le terminal final via un réseau de télécommunication digital cellulaire (169), où le chargement au moyen des clés principales, l'insertion au moyen des clés principales, les opérations d'écriture de masse, le chargement au moyen des clés partielles, la mise à jour au moyen des clés principales, et la mise à jour au moyen des clés partielles sont réalisés via le réseau de télécommunication digital cellulaire, où le terminal final comprend en outre un terminal sans fil (158) configuré pour mettre en relation de manière communicative le terminal final avec le terminal à distance via le réseau de télécommunication digital cellulaire, où le terminal sans fil est en mode inactif par défaut et en mode de transmission des données lorsque l'une quelconque des opérations suivantes est exécutée via le réseau de télécommunication digital cellulaire : le chargement au moyen de la clé principale, l'insertion au moyen de la clé principale, l'opération d'écriture de masse, le chargement au moyen de la clé partielle, la mise à jour au moyen de la clé principale, et la mise à jour au moyen de la clé partielle, où une consommation de l'énergie électrique du terminal sans fil en mode inactif est inférieure à une consommation de l'énergie électrique du terminal sans fil en mode de transmission des données, où la consommation de l'énergie électrique du terminal final dans le mode économie de l'alimentation électrique et dans le mode standard de consommation de l'énergie électrique comprend la consommation de l'énergie électrique du terminal sans fil en mode inactif lorsque le terminal sans fil est en mode inactif et la consommation de l'énergie électrique du terminal final dans le mode économie de l'énergie électrique et dans le mode standard de consommation de l'énergie électrique comprend la consommation de l'énergie électrique du terminal sans fil en mode de transmission des données lorsque le terminal sans fil est en mode de transmission des données.

6. Procédé mis en oeuvre par ordinateur selon la revendication 5 comprenant en outre :
après le basculement du terminal final dans le mode d'économie de l'énergie électrique et avant le basculement du terminal final dans le mode normal de consommation de l'énergie électrique, l'exécution d'une opération de chargement de masse qui charge la base de données dans la mémoire principale du terminal final via le réseau de télécommunication digital cellulaire, où, dans l'étape du procédé mis en oeuvre par ordinateur pour le déclenchement de l'unité de traitement afin de réaliser la mise à jour de masse de la base de données, l'unité de traitement est sollicitée pour réaliser la mise à jour de masse de la base de données chargée dans la mémoire principale.

7. Procédé mis en oeuvre par ordinateur selon l'une quelconque des revendications 1 à 4 précédentes, où la sollicitation de l'unité de traitement pour réaliser la mise à jour distincte de la base de données comprend en outre :
l'exécution de la suppression au moyen d'une clé principale d'un enregistrement à supprimer dans la base de données comprenant la clé principale spécifiée dans la suppression au moyen de la clé principale; et
l'exécution de la suppression au moyen d'une clé partielle de tous les enregistrements à supprimer dans la base de données comprenant la clé partielle spécifiée dans la suppression au moyen de la clé partielle ;
où la sollicitation de l'unité de traitement pour réaliser la mise à jour de masse de la base de données comprend en outre :
en réponse à la réception de la suppression au moyen de la clé principale de l'enregistrement à supprimer dans la base de données comprenant la clé principale spécifiée dans la suppression au moyen de la clé principale, la réalisation des actions suivantes :
dans le cas où le cache des données comprend l'enregistrement à supprimer, l'exécution de la suppression au moyen de la clé principale de l'enregistrement à supprimer dans le cache des données et la suppression de l'adresse physique de l'enregistrement à supprimer à partir des tables de correspondance et de toutes les clés qui y sont associées dans les tables de correspondance ; et dans le cas où la base de données comprend l'enregistrement à supprimer, l'exécution de la suppression au moyen de la clé principale de l'enregistrement à supprimer dans la base de données comprenant la clé principale spécifiée dans la suppression au moyen de la clé principale ; et
en réponse à la réception de la suppression au moyen de la clé partielle de tous les enregistrements à supprimer dans la base de données comprenant la clé partielle spécifiée dans la suppression au moyen de la clé partielle, la réalisation des actions suivantes :
dans le cas où le cache des données comprend tous les enregistrements à supprimer comprenant la clé partielle spécifiée dans la suppression au moyen de la clé partielle, l'exécution de la suppression au moyen de la clé partielle de tous les enregistrements à supprimer dans le cache des données comprenant la clé partielle spécifiée dans la suppression au moyen de la clé partielle et la suppression de toutes les adresses physiques de tous les enregistrements à supprimer à partir des tables de correspondance comprenant la clé partielle spécifiée dans la suppression au moyen de la clé partielle et de toutes les clés principales et partielles qui y sont associées dans les tables de correspondance ; et
dans le cas où la base de données comprend tous les enregistrements à supprimer comprenant la clé partielle spécifiée dans la suppression au moyen de la clé partielle, l'exécution de la suppression au moyen de la clé partielle de tous les enregistrements à supprimer dans la base de données comprenant la clé partielle spécifiée dans la suppression au moyen de la clé partielle.

8. Procédé mis en oeuvre par ordinateur selon l'une quelconque des revendications précédentes, où la sollicitation de l'unité de traitement pour réaliser la mise à jour de masse de la base de données est réalisée en exécutant un traitement transactionnel en langage de requête structuré (SQL), où une ou plusieurs transactions du traitement transactionnel comprennent au moins l'une des premières opérations suivantes : l'insertion au moyen de la clé principale, la mise à jour au moyen de la clé principale, la mise à jour au moyen de la clé partielle, la suppression au moyen de la clé principale, et la suppression au moyen de la clé partielle, où la mise à jour de la base de données s'avère en outre nécessaire dans les cas suivants :
l'engagement d'une transaction simple comprenant au moins l'une des premières opérations est réalisé, avant l'exécution d'une opération de mise à jour par lots comprenant une pluralité de mises à jour au moyen de clés principales et/ou une pluralité de mises à jour au moyen de clés partielles, avant l'exécution d'une opération de suppression par lots comprenant une pluralité de suppressions au moyen de clés principales et/ou une pluralité de suppressions au moyen de clés partielles, avant l'exécution d'une requête SQL générale dans la base de données, avant l'exécution d'une procédure SQL stockée dans la base de données, ou lorsque le volume des données dans les tables de correspondance dépasse une seconde valeur de seuil.

9. Procédé mis en oeuvre par ordinateur de mise à jour d'une base de données (128) en utilisant un serveur de base de données (167) fonctionnant avec un terminal final (170), où un serveur de base de données comprend la base de données et une unité de traitement (159), où la base de données comprend des enregistrements, chacun des enregistrements comprend une clé principale respective identifiant uniquement chacun des enregistrements dans la base de données, chacune de l'au moins une partie des enregistrements comprend une ou plusieurs clés partielles, chacune des clés partielles identifie uniquement un ensemble respectif d'enregistrements et chacun des enregistrements de l'ensemble respectif comprend chacune des clés partielles,
où le serveur de base de données est configuré pour réaliser la mise à jour de la base de données dans le mode d'économie de l'énergie électrique et dans le mode standard de consommation de l'énergie électrique, où une consommation de l'énergie électrique du serveur de base de données dans le mode d'économie de l'énergie électrique est inférieure à la consommation de l'énergie électrique du serveur de base de données dans le mode standard de consommation de l'énergie électrique, où la mise à jour de masse de la base de données est réalisée dans le mode d'économie de l'énergie électrique et une mise à jour distincte de la base de données est réalisée dans le mode normal de consommation de l'énergie électrique, le procédé mis en oeuvre par ordinateur comprenant :
• le basculement du serveur de base de données dans le mode d'économie de l'énergie électrique (220) ;
• la sollicitation de l'unité de traitement pour réaliser la mise à jour de masse de la base de données (221), où la sollicitation de l'unité de traitement pour réaliser la mise à jour de masse de la base de données comprend :
- la création d'un cache des données dans la mémoire de l'unité de traitement, où chacun des enregistrements stockés dans le cache des données a une adresse physique unique respective dans la mémoire (239) ;
- en réponse à la réception en provenance du terminal final d'une insertion au moyen de la clé principale (222) pour insérer dans la base de données un enregistrement à ajouter à la base de données, la réalisation des actions suivantes :
o stockage de l'enregistrement à ajouter au cache des données (225) ; et
o stockage dans les tables de correspondance d'une adresse physique de l'enregistrement à ajouter et d'une clé principale de l'enregistrement à ajouter associées l'une à l'autre (230), où l'enregistrement à ajouter est inséré dans la base de données lorsqu'il s'avère qu'une mise à jour de la base de données est nécessaire (235),
- en réponse à la réception en provenance du terminal final d'une mise à jour au moyen de la clé principale (223) d'un enregistrement à mettre à jour dans la base de données, la réalisation des actions suivantes :
▪ dans le cas d'un défaut de cache (226) lorsque les tables de correspondance ne comprennent pas la clé principale spécifiée dans la mise à jour au moyen de la clé principale, la réalisation des actions suivantes :
• exécution d'un chargement au moyen de la clé principale qui charge l'enregistrement à mettre à jour dans le cache des données et à partir de la base de données (227) ; et
• stockage dans les tables de correspondance d'une adresse physique de l'enregistrement chargé et de la clé principale de l'enregistrement chargé associées l'une à l'autre (232) ;
▪ l'exécution de la mise à jour au moyen de la clé principale (231) de l'enregistrement dans le cache des données stocké à l'adresse physique associée dans les tables de correspondance à la clé principale spécifiée dans la mise à jour au moyen de la clé principale, où, dans le cas où la mise à jour au moyen de la clé principale comprend la mise à jour de la clé principale de l'enregistrement à mettre à jour (226) la mise à jour au moyen de la clé principale de l'enregistrement dans le cache des données stocké à l'adresse physique associée dans les tables de correspondance à la clé principale spécifiée dans la mise à jour au moyen de la clé principale comprend la mise à jour de la clé principale de l'enregistrement à mettre à jour dans les tables de correspondance, où l'enregistrement à mettre à jour est mis à jour dans la base de données lorsqu'il s'avère que la mise à jour de la base de données est nécessaire (235) ;
- en réponse à la réception en provenance du terminal final d'une mise à jour au moyen de la clé partielle (224) de tous les enregistrements à mettre à jour dans la base de données comprenant la clé partielle spécifiée dans la mise à jour au moyen de la clé partielle, la réalisation des actions suivantes :
▪ dans le cas d'un défaut de cache (228) lorsque les tables de correspondance ne comprennent pas la clé partielle spécifiée dans la mise à jour au moyen de la clé partielle, la réalisation des actions suivantes :
• exécution d'un chargement au moyen de la clé partielle (229) qui charge dans le cache des données et à partir de la base de données (227) tous les enregistrements à mettre à jour comprenant la clé partielle spécifiée dans la mise à jour au moyen de la clé partielle ; et
• stockage dans les tables de correspondance de toutes les adresses physiques, de toutes les clés principales et de la clé partielle de tous les enregistrements chargés comprenant la clé partielle spécifiée dans le chargement au moyen de la clé partielle (229), où l'adresse physique de chacun des enregistrements charges comprenant la clé partielle spécifiée dans le chargement au moyen de la clé partielle, la clé principale respective de chacun des enregistrements chargés comprenant la clé partielle spécifiée dans le chargement au moyen de la clé partielle et la clé partielle de chacun des enregistrements chargés comprenant la clé partielle spécifiée dans le chargement au moyen de la clé partielle sont associées l'une à l'autre dans les tables de correspondance ;
▪ l'exécution de la mise à jour au moyen de la clé partielle (233) de tous les enregistrements dans le cache des données stocké aux adresses physiques respectives associées dans les tables de correspondance à la clé partielle spécifiée dans la mise à jour au moyen de la clé partielle, où dans le cas où la mise à jour au moyen de la clé partielle comprend la mise à jour de l'une ou de plusieurs clés principales de l'un ou de plusieurs enregistrements respectifs à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de l'une ou de plusieurs clés principales respectives dans les tables de correspondance, où dans le cas où la mise à jour au moyen de la clé partielle comprend la mise à jour de la clé partielle de tous les enregistrements à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de la clé partielle spécifiée dans la mise à jour au moyen de la clé partielle dans les tables de correspondance, où tous les enregistrements à mettre à jour sont mis à jour dans la base de données lorsqu'il s'avère que la mise à jour de la base de données est nécessaire (235) ; et
- dans le cas où il s'avère que la mise à jour de la base de données est nécessaire (235), exécuter une opération d'écriture de masse (237) qui écrit dans la base de données tous les enregistrements dans le cache des données ; et
où il s'avère que la mise à jour de la base de données est nécessaire lorsque le nombre total de lignes de données dans le cache des données dépasse une première valeur de seuil ;
• le basculement du terminal final dans le mode standard de consommation de l'énergie électrique (236) ; et
• la sollicitation de l'unité de traitement pour réaliser la mise à jour distincte de la base de données (240), où la sollicitation de l'unité de traitement pour réaliser la mise à jour distincte de la base de données comprend :
- en réponse à la réception en provenance du terminal final d'une insertion au moyen de la clé principale pour insérer dans la base de données un enregistrement à ajouter à la base de données, la réalisation de l'insertion au moyen de la clé principale pour insérer dans la base de données un enregistrement à ajouter à la base de données (222)
- en réponse à la réception en provenance du terminal final de la mise à jour au moyen de la clé partielle de tous les enregistrements à mettre à jour comprenant la clé partielle spécifiée dans la mise à jour au moyen de la clé partielle de la base de données, l'exécution de la mise à jour au moyen de la clé partielle de tous les enregistrements à mettre à jour comprenant la clé partielle spécifiée dans la mise à jour de la base de données (224) au moyen de la clé partielle ; et
- en réponse à la réception en provenance du terminal final de la mise à jour au moyen de la clé principale de l'enregistrement à mettre à jour comprenant la clé principale spécifiée dans la mise à jour au moyen de la clé partielle dans la base de données, l'exécution de la mise à jour au moyen de la clé principale de l'enregistrement à mettre à jour comprenant la clé principale spécifiée dans la mise à jour de la base de données (223) au moyen de la clé partielle.

10. Procédé mis en oeuvre par ordinateur selon la revendication 9, où l'unité de traitement comprend un microprocesseur et la mémoire de l'unité de traitement comprend un cache de niveau 2 (L2) (154) du microprocesseur et un cache de niveau 3 (L3) du microprocesseur, où les tables de correspondance (158) sont allouées dans le cache L2 et le cache des données est créé dans le cache L3 (172).

11. Support lisible par ordinateur sur lequel est stocké un code exécutable par ordinateur destiné à être exécuté par une unité de traitement (159) contrôlant un serveur de base de données (167), où l'exécution des instructions du code exécutable conduit l'unité de traitement à exécuter le procédé mis en oeuvre par ordinateur de mise à jour de la base de données, où la mise à jour de la base de données est effectuée par un terminal final, où le serveur de base de données comprend la base de données et l'unité de traitement, où la base de données comprend des enregistrements, chacun des enregistrements comprend une clé principale respective identifiant uniquement chacun des enregistrements dans la base de données, chacun de l'au moins une partie des enregistrements comprend une ou plusieurs clés partielles, chacune des clés partielles identifie uniquement un ensemble respectif d'enregistrements et chacun des enregistrements de l'ensemble respectif comprend chacune des clés partielles, où le serveur de base de données est configuré pour réaliser la mise à jour de la base de données dans le mode d'économie de l'énergie électrique et dans le mode standard de consommation de l'énergie électrique, où la consommation de l'énergie électrique du serveur de base de données dans le mode d'économie de l'énergie électrique est inférieure à la consommation de l'énergie électrique du serveur de base données dans le mode standard de consommation de l'énergie électrique, où la mise à jour de masse de la base de données est réalisée dans le mode d'économie de l'énergie électrique et la mise à jour distincte de la base de données est réalisée dans le mode normal de consommation de l'énergie électrique, le procédé mis en oeuvre par ordinateur comprenant :
• le basculement du serveur de base de données dans le mode d'économie de l'énergie électrique (220) ;
• le déclenchement par l'unité de traitement de la réalisation de la mise à jour de masse de la base de données (221), où le déclenchement par l'unité de traitement de la réalisation de la mise à jour de masse de la base de données comprend :
- la création d'un cache de données dans la mémoire de l'unité de traitement, où chacun des enregistrements stockés dans le cache des données a une adresse physique unique respective dans la mémoire (239);
- en réponse à la réception en provenance du terminal final d'une insertion dans la base de données (222) au moyen de la clé principale d'insertion d'un enregistrement à ajouter à la base de données, la réalisation des actions suivantes de :
o stockage de l'enregistrement à ajouter dans le cache des données (225) ; et
o stockage dans les tables de correspondance de l'adresse physique de l'enregistrement à ajouter et de la clé principale de l'enregistrement à ajouter associées l'une à l'autre (230), où l'enregistrement à ajouter est inséré dans la base de données quand il s'avère qu'une mise à jour de la base de données est nécessaire (235),
- en réponse à la réception d'une mise à jour au moyen de la clé principale (223) d'un enregistrement à mettre à jour dans la base de données, la réalisation des actions suivantes :
▪ dans le cas d'un défaut de cache (226), lorsque les tables de correspondance ne comprennent pas la clé principale spécifiée dans la mise à jour au moyen de la clé principale, la réalisation des actions suivantes :
• l'exécution d'un chargement au moyen de la clé principale qui charge l'enregistrement à mettre à jour dans le cache des données et à partir de la base de données (227) ; et
• le stockage dans les tables de correspondance de l'adresse physique de l'enregistrement chargé et de la clé principale de l'enregistrement chargé associées l'une à l'autre (232) ;
▪ l'exécution de la mise à jour au moyen de la clé principale (231) de l'enregistrement dans le cache des données stocké à l'adresse physique associée dans les tables de correspondance à la clé principale spécifiée dans la mise à jour au moyen de la clé principale, où, dans le cas où la mise à jour au moyen de la clé principale comprend la mise à jour de la clé principale de l'enregistrement à mettre à jour (226), la mise à jour au moyen de la clé principale de l'enregistrement dans le cache des données stocké à l'adresse physique associée dans les tables de correspondance à la clé principale spécifiée dans la mise à jour au moyen de la clé principale comprend la mise à jour de la clé principale de l'enregistrement à mettre à jour dans les tables de correspondance, où l'enregistrement à mettre à jour est mis à jour dans la base de données quand il s'avère que la mise à jour de la base de données est nécessaire (235) ;
- en réponse à la réception en provenance du terminal final d'une mise à jour au moyen de la clé partielle (224) de tous les enregistrements à mettre à jour dans la base de données comprenant une clé partielle spécifiée dans la mise à jour au moyen de la clé partielle, la réalisation des actions suivantes :
▪ dans le cas d'un défaut de cache (228) lorsque les tables de correspondance ne comprennent pas la clé partielle spécifiée dans la mise à jour au moyen de la clé partielle, la réalisation des actions suivantes :
• l'exécution d'un chargement au moyen de la clé partielle (229) qui charge dans le cache des données et à partir de la base de données tous les enregistrements à mettre à jour comprenant la clé partielle spécifiée dans la mise à jour au moyen de la clé partielle ; et
• le stockage dans les tables de correspondance de toutes les adresses physiques, de toutes les clés principales et de la clé partielle de tous les enregistrements chargés comprenant la clé partielle spécifiée dans le chargement au moyen de la clé partielle (229), où l'adresse physique de chacun des enregistrements chargés comprenant la clé partielle spécifiée dans le chargement au moyen de la clé partielle, la clé principale respective de chacun des enregistrements chargés comprenant la clé partielle spécifiée dans le chargement au moyen de la clé partielle et la clé partielle de chacun des enregistrements chargés comprenant la clé partielle spécifiée dans le chargement au moyen de la clé partielle sont associés l'une à l'autre dans les tables de correspondance ;
▪ l'exécution de la mise à jour au moyen de la clé partielle (233) de tous les enregistrements dans le cache des données stocké aux adresses physiques respectives associées dans les tables de correspondance à la clé partielle spécifiée dans la mise à jour au moyen de la clé partielle, où, dans le cas où la mise à jour au moyen de la clé partielle comprend la mise à jour de l'une ou de plusieurs clés principales de l'un ou de plusieurs enregistrements respectifs à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de l'une ou de plusieurs clés principales respectives dans les tables de correspondance, où dans le cas où la mise à jour au moyen de la clé partielle comprend la mise à jour de la clé partielle de tous les enregistrements à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de la clé partielle spécifiée dans la mise à jour au moyen de la clé partielle dans les tables de correspondance, où tous les enregistrements à mettre à jour sont mis à jour dans la base de données quand il s'avère que la mise à jour de la base de données est nécessaire (235) ; et
- dans le cas où il s'avère que la mise à jour de la base de données est nécessaire (235), l'exécution d'une opération d'écriture de masse qui écrit dans la base de données tous les enregistrements dans le cache des données ; et
où il s'avère que la mise à jour de la base de données est nécessaire lorsque le nombre total de lignes de données dans le cache des données dépasse une première valeur de seuil :
• le basculement du serveur de base de données dans le mode standard de consommation de l'énergie électrique (236) ; et
• le déclenchement par l'unité de traitement de la réalisation de la mise à jour distincte de la base de données (240), où le déclenchement par l'unité de traitement de la réalisation de la mise à jour distincte de la base de données comprend :
- en réponse à la réception en provenance du terminal final de l'insertion dans la base de données au moyen de la clé principale d'insertion de l'enregistrement à ajouter à la base de données, l'exécution de l'insertion dans la base de données au moyen de la clé d'insertion de l'enregistrement à ajouter dans la base de données (222) ;
- en réponse à la réception en provenance du terminal final de la mise à jour au moyen de la clé partielle de tous les enregistrements à mettre à jour dans la base de données comprenant la clé partielle spécifiée dans la mise à jour au moyen de la clé partielle, l'exécution de la mise à jour au moyen de la clé partielle de tous les enregistrements à mettre à jour dans la base de données (224) comprenant la clé partielle spécifiée dans la mise à jour au moyen de la clé partielle ; et
- en réponse à la réception en provenance du terminal final de la mise à jour au moyen de la clé principale de l'enregistrement à mettre à jour dans la base de données comprenant la clé principale spécifiée dans l'opération de mise à jour au moyen de la clé partielle, l'exécution de la mise à jour au moyen de la clé principale de l'enregistrement à mettre à jour dans la base de données (223) comprenant la clé principale spécifiée dans la mise à jour au moyen de la clé partielle.

12. Support lisible par ordinateur sur lequel est stocké un code exécutable par ordinateur destiné à être exécuté par une unité de traitement (159) contrôlant un terminal final (170), où l'exécution des instructions du code exécutable conduit l'unité de traitement à exécuter le procédé mis en oeuvre par ordinateur de mise à jour d'une base de données (128) en utilisant le terminal final comprenant l'unité de traitement, où la base de données comprend les enregistrements, chacun des enregistrements comprend une clé principale respective identifiant uniquement chacun des enregistrements dans la base de données, chacun de la au moins une partie des enregistrements comprend une ou plusieurs clés partielles, chacune des clés partielles identifie uniquement un ensemble respectif d'enregistrements et chacun des enregistrements de l'ensemble respectif comprend chacune des clés partielles, où le terminal final est configuré pour réaliser la mise à jour de la base de données dans le mode d'économie de l'énergie électrique et dans le mode standard de consommation de l'énergie électrique, où la consommation de l'énergie électrique du terminal final dans le mode d'économie de l'énergie électrique est inférieure à la consommation de l'énergie électrique du terminal final dans le mode standard de consommation de l'énergie électrique, où la mise à jour de masse de la base de données est réalisée dans le mode d'économie de l'énergie électrique et la mise à jour distincte de la base de données est réalisée dans le mode normal de consommation de l'énergie électrique, le procédé mis en oeuvre par ordinateur comprenant :
• le basculement du terminal final dans le mode économie de l'énergie électrique (220) ;
• le déclenchement par l'unité de traitement de la réalisation de la mise à jour de masse de la base de données (221), où le déclenchement par l'unité de traitement de la réalisation de la mise à jour de masse de la base de données comprend :
- la création d'un cache de données dans la mémoire de l'unité de traitement, où chacun des enregistrements stockés dans le cache des données a une adresse physique unique respective dans la mémoire (239);
- en réponse à la réception d'une insertion dans la base de données (222) au moyen de la clé principale d'insertion d'un enregistrement à ajouter à la base de données, la réalisation des actions suivantes de :
o stockage de l'enregistrement à ajouter dans le cache des données (225); et
o stockage dans les tables de correspondance de l'adresse physique de l'enregistrement à ajouter et de la clé principale de l'enregistrement à ajouter associées l'une à l'autre (230), où l'enregistrement à ajouter est inséré dans la base de données quand il s'avère qu'une mise à jour de la base de données est nécessaire (235),
- en réponse à la réception d'une mise à jour au moyen de la clé principale (223) d'un enregistrement à mettre à jour dans la base de données, la réalisation des actions suivantes :
▪ dans le cas d'un défaut de cache (226) lorsque les tables de correspondance ne comprennent pas la clé principale spécifiée dans la mise à jour au moyen de la clé principale, la réalisation des actions suivantes :
• l'exécution d'un chargement au moyen de la clé principale qui charge l'enregistrement à mettre à jour dans le cache des données et à partir de la base de données (227) ; et
• le stockage dans les tables de correspondance de l'adresse physique de l'enregistrement chargé et de la clé principale de l'enregistrement chargé associées l'une à l'autre (232) ;
▪ l'exécution de la mise à jour au moyen de la clé principale (231) de l'enregistrement dans le cache des données stocké à l'adresse physique associée dans les tables de correspondance à la clé principale spécifiée dans la mise à jour au moyen de la clé principale, où dans le cas où la mise à jour au moyen de la clé principale comprend la mise à jour de la clé principale de l'enregistrement à mettre à jour (226) la mise à jour au moyen de la clé principale de l'enregistrement dans le cache des données stocké à l'adresse physique associée dans les tables de correspondance à la clé principale spécifiée dans la mise à jour au moyen de la clé principale comprend la mise à jour de la clé principale de l'enregistrement à mettre à jour dans les tables de correspondance, où l'enregistrement à mettre à jour est mis à jour dans la base de données quand il s'avère que la mise à jour de la base de données est nécessaire (235);
- en réponse à la réception d'une mise à jour au moyen de la clé partielle (224) de tous les enregistrements à mettre à jour dans la base de données comprenant une clé partielle spécifiée dans la mise à jour au moyen de la clé partielle, la réalisation des actions suivantes :
▪ dans le cas d'un défaut de cache (228) lorsque les tables de correspondance ne comprennent pas la clé partielle spécifiée dans la mise à jour au moyen de la clé partielle, la réalisation des actions suivantes :
• l'exécution d'un chargement au moyen de la clé partielle (229) qui charge dans le cache des données et à partir de la base de données tous les enregistrements à mettre à jour comprenant la clé partielle spécifiée dans la mise à jour au moyen de la clé partielle ; et
• le stockage dans les tables de correspondance de toutes les adresses physiques, de toutes les clés principales et de la clé partielle de tous les enregistrements chargés comprenant la clé partielle spécifiée dans le chargement au moyen de la clé partielle (229), où l'adresse physique de chacun des enregistrements chargés comprenant la clé partielle spécifiée dans le chargement au moyen de la clé partielle, la clé principale respective de chacun des enregistrements chargés comprenant la clé partielle spécifiée dans le chargement au moyen de la clé partielle et la clé partielle de chacun des enregistrements chargés comprenant la clé partielle spécifiée dans le chargement au moyen de la clé partielle sont associés l'une à l'autre dans les tables de correspondance ;
▪ l'exécution de la mise à jour au moyen de la clé partielle (233) de tous les enregistrements dans le cache des données stocké aux adresses physiques respectives associées dans les tables de correspondance à la clé partielle spécifiée dans la mise à jour au moyen de la clé partielle, où dans le cas où la mise à jour au moyen de la clé partielle comprend la mise à jour de l'une ou de plusieurs clés principales de l'un ou de plusieurs enregistrements respectifs à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de l'une ou de plusieurs clés principales respectives dans les tables de correspondance, où dans le cas où la mise à jour au moyen de la clé partielle comprend la mise à jour de la clé partielle de tous les enregistrements à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de la clé partielle spécifiée dans la mise à jour au moyen de la clé partielle dans les tables de correspondance, où tous les enregistrements à mettre à jour sont mis à jour dans la base de données quand il s'avère que la mise à jour de la base de données est nécessaire (235) ; et
- dans le cas où il s'avère que la mise à jour de la base de données est nécessaire (235), l'exécution d'une opération d'écriture de masse qui écrit dans la base de données tous les enregistrements dans le cache des données ; et
où il s'avère que la mise à jour de la base de données est nécessaire lorsque le nombre total de lignes de données dans le cache des données dépasse une première valeur de seuil ;
• le basculement du terminal final dans le mode standard de consommation de l'énergie électrique (236) ; et
• le déclenchement par l'unité de traitement de la réalisation de la mise à jour distincte de la base de données (240), où le déclenchement par l'unité de traitement de la réalisation de la mise à jour distincte de la base de données comprend :
- l'exécution de l'insertion dans la base de données au moyen de la clé d'insertion de l'enregistrement à ajouter dans la base de données (222) ;
- l'exécution de la mise à jour au moyen de la clé partielle de tous les enregistrements à mettre à jour dans la base de données (224) comprenant la clé partielle spécifiée dans la mise à jour au moyen de la clé partielle ; et
- l'exécution de la mise à jour au moyen de la clé principale de l'enregistrement à mettre à jour dans la base de données (223) comprenant la clé principale spécifiée dans la mise à jour au moyen de la clé partielle.

13. Serveur de base de données (167) configuré pour réaliser la mise à jour d'une base de données (128) dans un mode d'économie de l'énergie électrique et dans un mode standard de consommation de l'énergie électrique, où la mise à jour de la base de données est exécutée par un terminal final (170), où le serveur de la base de données comprend la base de données et l'unité de traitement (159), où la base de données comprend les enregistrements, chacun des enregistrements comprend une clé principale respective identifiant uniquement chacun des enregistrements dans la base de données, chacun de l'au moins une partie des enregistrements comprend une ou plusieurs clés partielles, chacune des clés partielles identifie uniquement un ensemble respectif d'enregistrements et chacun des enregistrements de l'ensemble respectif comprend chacune des clés partielles, où la consommation de l'énergie électrique du serveur de base de données dans le mode d'économie de l'énergie électrique est inférieure à la consommation de l'énergie électrique du serveur de base de données dans le mode standard de consommation de l'énergie électrique, où la mise à jour de masse de la base de données est réalisée dans le mode économie de l'énergie électrique et la mise à jour distincte de la base de données est réalisée dans le mode normal de consommation de l'énergie électrique, l'unité de traitement est configuré pour réaliser les actions suivantes de :
• basculement du serveur de base de données dans le mode d'économie de l'énergie électrique (220) ;
• déclenchement par le serveur de base de données de la réalisation de la mise à jour de masse de la base de données (221), où le déclenchement par le serveur de base de données de la réalisation de la mise à jour de masse de la base de données comprend :
- la création d'un cache de données dans la mémoire de l'unité de traitement, où chacun des enregistrements stockés dans le cache des données a une adresse physique unique respective dans la mémoire (239) ;
- en réponse à la réception en provenance du terminal final d'une insertion dans la base de données au moyen de la clé principale (222) d'insertion d'un enregistrement à ajouter à la base de données, la réalisation des actions suivantes de :
o stockage de l'enregistrement à ajouter dans le cache des données (225) ; et
o stockage dans les tables de correspondance de l'adresse physique de l'enregistrement à ajouter et de la clé principale de l'enregistrement à ajouter associées l'une à l'autre (230), où l'enregistrement à ajouter est inséré dans la base de données quand il s'avère qu'une mise à jour de la base de données est nécessaire (235),
- en réponse à la réception en provenance du terminal final d'une mise à jour au moyen de la clé principale (223) d'un enregistrement à mettre à jour dans la base de données, la réalisation des actions suivantes :
▪ dans le cas d'un défaut de cache (226) lorsque les tables de correspondance ne comprennent pas la clé principale spécifiée dans la mise à jour au moyen de la clé principale, la réalisation des actions suivantes :
• l'exécution d'un chargement au moyen de la clé principale qui charge l'enregistrement à mettre à jour dans le cache des données et à partir de la base de données (227) ; et
• le stockage dans les tables de correspondance de l'adresse physique de l'enregistrement chargé et de la clé principale de l'enregistrement chargé associée l'une à l'autre (232) ;
▪ l'exécution de la mise à jour au moyen de la clé principale (231) de l'enregistrement dans le cache des données stocké à l'adresse physique associée dans les tables de correspondance à la clé principale spécifiée dans la mise à jour au moyen de la clé principale, où dans le cas où la mise à jour au moyen de la clé principale comprend la mise à jour de la clé principale de l'enregistrement à mettre à jour (226) la mise à jour au moyen de la clé principale de l'enregistrement dans le cache des données stocké à l'adresse physique associée dans les tables de correspondance à la clé principale spécifiée dans la mise à jour au moyen de la clé principale comprend la mise à jour de la clé principale de l'enregistrement à mettre à jour dans les tables de correspondance, où l'enregistrement à mettre à jour est mis à jour dans la base de données quand il s'avère que la mise à jour de la base de données est nécessaire (235) ;
- en réponse à la réception en provenance du terminal final d'une mise à jour au moyen de la clé partielle (224) de tous les enregistrements à mettre à jour dans la base de données comprenant une clé partielle spécifiée dans la mise à jour au moyen de la clé partielle, la réalisation des actions suivantes :
▪ dans le cas d'un défaut de cache (228) lorsque les tables de correspondance ne comprennent pas la clé partielle spécifiée dans la mise à jour au moyen de la clé partielle, la réalisation des actions suivantes :
• l'exécution d'un chargement au moyen de la clé partielle (229) qui charge dans le cache des données et à partir de la base de données tous les enregistrements à mettre à jour comprenant la clé partielle spécifiée dans la mise à jour au moyen de la clé partielle ; et
• le stockage dans les tables de correspondance de toutes les adresses physiques, de toutes les clés principales et de la clé partielle de tous les enregistrements chargés comprenant la clé partielle spécifiée dans le chargement au moyen de la clé partielle (229), où l'adresse physique de chacun des enregistrements chargés comprenant la clé partielle spécifiée dans le chargement au moyen de la clé partielle, la clé principale respective de chacun des enregistrements chargés comprenant la clé partielle spécifiée dans le chargement au moyen de la clé partielle et la clé partielle de chacun des enregistrements chargés comprenant la clé partielle spécifiée dans le chargement au moyen de la clé partielle sont associés l'une à l'autre dans les tables de correspondance ;
▪ l'exécution de la mise à jour au moyen de la clé partielle (233) de tous les enregistrements dans le cache des données stocké aux adresses physiques respectives associées dans les tables de correspondance à la clé partielle spécifiée dans la mise à jour au moyen de la clé partielle, où dans le cas où la mise à jour au moyen de la clé partielle comprend la mise à jour de l'une ou de plusieurs clés principales de l'un ou de plusieurs enregistrements respectifs à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de l'une ou de plusieurs clés principales respectives dans les tables de correspondance, où, dans le cas où la mise à jour au moyen de la clé partielle comprend la mise à jour de la clé partielle de tous les enregistrements à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de la clé partielle spécifiée dans la mise à jour au moyen de la clé partielle dans les tables de correspondance, où tous les enregistrements à mettre à jour sont mis à jour dans la base de données quand il s'avère que la mise à jour de la base de données est nécessaire (235) ;
- dans le cas où la mise à jour de la base de données est nécessaire (235), l'exécution d'une opération d'écriture en masse (237) qui écrit tous les enregistrements dans le cache de données de la base de données ; et
où il s'avère que la mise à jour de la base de données est nécessaire lorsque le nombre total de lignes de données dans le cache des données dépasse une première valeur de seuil ;
• le basculement du serveur de base de données dans le mode standard de consommation de l'énergie électrique (236) ; et
• le déclenchement par le serveur de base de données de la réalisation de la mise à jour distincte de la base de données (240), où le déclenchement par le serveur de base de données de la réalisation de la mise à jour distincte de la base de données comprend :
- en réponse à la réception en provenance du terminal final de l'insertion dans la base de données au moyen de la clé principale d'insertion de l'enregistrement à ajouter à la base de données, l'exécution de l'insertion dans la base de données au moyen de la clé d'insertion de l'enregistrement à ajouter dans la base de données (222) ;
- en réponse à la réception en provenance du terminal final de la mise à jour au moyen de la clé partielle de tous les enregistrements à mettre à jour dans la base de données comprenant la clé partielle spécifiée dans la mise à jour au moyen de la clé partielle, l'exécution de la mise à jour au moyen de la clé partielle de tous les enregistrements à mettre à jour dans la base de données (224) comprenant la clé partielle spécifiée dans la mise à jour au moyen de la clé partielle ; et
- en réponse à la réception en provenance du terminal final de la mise à jour au moyen de la clé principale de l'enregistrement à mettre à jour dans la base de données comprenant la clé principale spécifiée dans l'opération de mise à jour au moyen de la clé partielle, l'exécution de la mise à jour au moyen de la clé principale de l'enregistrement à mettre à jour dans la base de données (223) comprenant la clé principale spécifiée dans la mise à jour au moyen de la clé partielle.

14. Terminal final (170) configuré pour réaliser la mise à jour d'une base de données (128) dans un mode d'économie de l'énergie électrique et dans un mode standard de consommation de l'énergie électrique, où le terminal final comprend l'unité de traitement (156), où la base de données comprend les enregistrements, chacun des enregistrements comprend une clé principale respective identifiant uniquement chacun des enregistrements dans la base de données, chacun de l'au moins une partie des enregistrements comprend une ou plusieurs clés partielles, chacune des clés partielles identifie uniquement un ensemble respectif d'enregistrements et chacun des enregistrements de l'ensemble respectif comprend chacune des clés partielles, où la consommation de l'énergie électrique du terminal final dans le mode d'économie de l'énergie électrique est inférieure à la consommation de l'énergie électrique du terminal final dans le mode standard de consommation de l'énergie électrique, où la mise à jour de masse de la base de données est réalisée dans le mode économie de l'énergie électrique et la mise à jour distincte de la base de données est réalisée dans le mode normal de consommation de l'énergie électrique, l'unité de traitement est configuré pour amener le terminal final à réaliser les actions suivantes de :
• basculement du terminal final dans le mode d'économie de l'énergie électrique (220) ;
• déclenchement par le terminal final de la réalisation de la mise à jour de masse de la base de données (221), où le déclenchement par le terminal final de la réalisation de la mise à jour de masse de la base de données comprend :
- la création d'un cache de données dans la mémoire de l'unité de traitement, où chacun des enregistrements stockés dans le cache des données a une adresse physique unique respective dans la mémoire (239) ;
- en réponse à la réception d'une insertion dans la base de données au moyen de la clé principale (222) d'insertion d'un enregistrement à ajouter à la base de données, la réalisation des actions suivantes de :
o stockage de l'enregistrement à ajouter dans le cache des données (225) ; et
o stockage dans les tables de correspondance de l'adresse physique de l'enregistrement à ajouter et de la clé principale de l'enregistrement à ajouter associée l'une à l'autre (230), où l'enregistrement à ajouter est inséré dans la base de données quand il s'avère qu'une mise à jour de la base de données est nécessaire (235),
- en réponse à la réception d'une mise à jour au moyen de la clé principale (223) d'un enregistrement à mettre à jour dans la base de données, la réalisation des actions suivantes :
▪ dans le cas d'un défaut de cache (226) lorsque les tables de correspondance ne comprennent pas la clé principale spécifiée dans la mise à jour au moyen de la clé principale, la réalisation des actions suivantes :
• l'exécution d'un chargement au moyen de la clé principale qui charge l'enregistrement à mettre à jour dans le cache des données à partir de la base de données (227) ; et
• le stockage dans les tables de correspondance de l'adresse physique de l'enregistrement chargé et de la clé principale de l'enregistrement chargé associée l'une à l'autre (232) ;
▪ l'exécution de la mise à jour au moyen de la clé principale (231) de l'enregistrement dans le cache des données stocké à l'adresse physique associée dans les tables de correspondance à la clé principale spécifiée dans la mise à jour au moyen de la clé principale, où dans le cas où la mise à jour au moyen de la clé principale comprend la mise à jour de la clé principale de l'enregistrement à mettre à jour (226) la mise à jour au moyen de la clé principale de l'enregistrement dans le cache des données stocké à l'adresse physique associée dans les tables de correspondance à la clé principale spécifiée dans la mise à jour au moyen de la clé principale comprend la mise à jour de la clé principale de l'enregistrement à mettre à jour dans les tables de correspondance, où l'enregistrement à mettre à jour est mis à jour dans la base de données quand il s'avère que la mise à jour de la base de données est nécessaire (235) ;
- en réponse à la réception d'une mise à jour au moyen de la clé partielle (224) de tous les enregistrements à mettre à jour dans la base de données comprenant une clé partielle spécifiée dans la mise à jour au moyen de la clé partielle, la réalisation des actions suivantes :
▪ dans le cas d'un défaut de cache (228) lorsque les tables de correspondance ne comprennent pas la clé partielle spécifiée dans la mise à jour au moyen de la clé partielle, la réalisation des actions suivantes :
• l'exécution d'un chargement au moyen de la clé partielle (229) qui charge dans le cache des données et à partir de la base de données tous les enregistrements à mettre à jour comprenant la clé partielle spécifiée dans la mise à jour au moyen de la clé partielle ; et
• le stockage dans les tables de correspondance de toutes les adresses physiques, de toutes les clés principales et de la clé partielle de tous les enregistrements chargés comprenant la clé partielle spécifiée dans le chargement au moyen de la clé partielle (229), où l'adresse physique de chacun des enregistrements chargés comprenant la clé partielle spécifiée dans le chargement au moyen de la clé partielle, la clé principale respective de chacun des enregistrements chargés comprenant la clé partielle spécifiée dans le chargement au moyen de la clé partielle et la clé partielle de chacun des enregistrements chargés comprenant la clé partielle spécifiée dans le chargement au moyen de la clé partielle sont associés l'une à l'autre dans les tables de correspondance ;
▪ l'exécution de la mise à jour au moyen de la clé partielle (233) de tous les enregistrements dans le cache des données stocké aux adresses physiques respectives associées dans les tables de correspondance à la clé partielle spécifiée dans la mise à jour au moyen de la clé partielle, où dans le cas où la mise à jour au moyen de la clé partielle comprend la mise à jour de l'une ou de plusieurs clés principales de l'un ou de plusieurs enregistrements respectifs à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de l'une ou de plusieurs clés principales respectives dans les tables de correspondance, où dans le cas où la mise à jour au moyen de la clé partielle comprend la mise à jour de la clé partielle de tous les enregistrements à mettre à jour comprenant la clé partielle spécifiée dans la mise à jour au moyen de la clé partielle, l'exécution de la mise à jour au moyen de la clé partielle de tous les enregistrements dans le cache des données stocké aux adresses physiques respectives associées dans les tables de correspondance à la clé partielle spécifiée dans la mise à jour au moyen de la clé partielle comprend la mise à jour de la clé partielle spécifiée dans la mise à jour au moyen de la clé partielle dans les tables de correspondance, où tous les enregistrements à mettre à jour sont mis à jour dans la base de données quand il s'avère que la mise à jour de la base de données est nécessaire (235) ; et
- dans le cas où il s'avère que la mise à jour de la base de données est nécessaire (235), l'exécution d'une opération d'écriture de masse qui écrit dans la base de données tous les enregistrements dans le cache des données ; et
où il s'avère que la mise à jour de la base de données est nécessaire lorsque le nombre total de lignes de données dans le cache des données dépasse une première valeur de seuil ;
• le basculement du terminal final dans le mode standard de consommation de l'énergie électrique (236) ; et
• le déclenchement par le terminal final de la réalisation de la mise à jour distincte de la base de données (240), où le déclenchement par le terminal final de la réalisation de la mise à jour distincte de la base de données comprend :
- l'exécution de l'insertion dans la base de données au moyen de la clé d'insertion de l'enregistrement à ajouter dans la base de données (222) ;
- l'exécution de la mise à jour au moyen de la clé partielle de tous les enregistrements à mettre à jour dans la base de données (224) comprenant la clé partielle spécifiée dans la mise à jour au moyen de la clé partielle ; et
- l'exécution de la mise à jour au moyen de la clé principale de l'enregistrement à mettre à jour dans la base de données (223) comprenant la clé principale spécifiée dans la mise à jour au moyen de la clé partielle.
